(19) **Europäisches Patentamt**

**European Patent Office**

**Office européen des brevets**

(11) **EP 1 592 021 A1**

(12) **EUROPEAN PATENT APPLICATION**

(43) Date of publication:
**02.11.2005 Bulletin 2005/44**

(51) Int Cl.[7]: **G11B 27/10**, G11B 27/30, H04N 7/24

(21) Application number: **05102816.5**

(22) Date of filing: **08.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.04.2004 JP 2004136689**

(71) Applicant: **KABUSHIKI KAISHA TOSHIBA**
**Tokyo 105-8001 (JP)**

(72) Inventors:
• **Tsumagari, Yasufumi Toshiba Corp. Intellectual Tokyo 105-8001 (JP)**

• **Takahashi, Hideki Toshiba Corporation Intellectual Tokyo 105-8001 (JP)**
• **Yamagata, Yoichiro Toshiba Corp. Intellectual Tokyo 105-8001 (JP)**
• **Kaneko, Toshimitsu Toshiba Corp. Intellectual Tokyo 105-8001 (JP)**
• **Kamibayashi, Tooru Toshiba Corp. Intellectual Tokyo 105-8001 (JP)**
• **Isozaki, Hiroshi Toshiba Corporation Intellectual Tokyo 105-8001 (JP)**

(74) Representative: **Henkel, Feiler & Hänzel**
**Möhlstrasse 37**
**81675 München (DE)**

(54) **Meta data for moving picture**

(57) An information playback method includes reading out information from a recording medium storing a stream (VCS) which includes meta data of a moving picture capable of being played back upon playback of a video content, and which is formed of access units as data units capable of being processed independently, and storing a table (VCA) which includes playback time information indicating a playback time of meta data, and which includes access position information indicating an access position of meta data, and playing back the video content, and playing back the meta data on the basis of the playback time information and the access position information included in the table.

FIG.54

**Description**

The present invention relates to a method of implementing moving picture hypermedia by combining moving picture data in a client and meta data on a network (or a disc), and displaying a telop, balloon, or the like on a moving picture.

Hypermedia define associations called hyperlinks among media such as a moving picture, still picture, audio, text, and the like so as to allow these media to refer to each other or from one to another. For example, text data and still picture data are allocated on a home page which can be browsed using the internet and is described in HTML, and links are defined all over these text data and still picture data. By designating such link, associated information as a link destination can be immediately displayed. Since the user can access associated information by directly designating a phrase that appeals to him or her, an easy and intuitive operation is allowed.

On the other hand, in hypermedia that mainly include moving picture data in place of text and still picture data, links from objects such as persons, articles, and the like that appear in the moving picture to associated contents such as their text data, still picture data that explain them are defined. When a viewer designates an object, the associated contents are displayed. At this time, in order to define a link between the spatio-temporal region of an object that appears in the moving picture and associated contents, data (object region data) indicating the spatio-temporal region of the object in the moving picture is required.

As the object region data, a mask image sequence having two or more values, arbitrary shape encoding of MPEG-4, a method of describing the loci of feature points of a figure, as described in Jpn. Pat. Appln. KOKAI Publication No. 2000-285253, a method described in Jpn. Pat. Appln. KOKAI Publication No. 2001-111996, and the like may be used. In order to implement hypermedia that mainly include moving picture data, data (action information) that describes an action for displaying other associated contents upon designation of an object is required in addition to the above data. These data other than the moving picture data will be referred to as meta data hereinafter.

As a method of providing moving picture data and meta data to a viewer, a method of preparing a recording medium (video CD, DVD, or the like) that records both moving picture data and meta data is available. In order to provide meta data of moving picture data that has already been owned as a video CD or DVD, only meta data can be downloaded or distributed by streaming from the network. Both moving picture data and meta data may be distributed via the network. At this time, meta data preferably has a format that can efficiently use a buffer, is suited to random access, and is robust against any data loss in the network.

When moving picture data are switched frequently (e.g., when moving picture data captured at a plurality of camera angles are prepared, and a viewer can freely select an arbitrary camera angle; like multi-angle video of DVD-video), meta data must be quickly switched in correspondence with switching of moving picture data.

Upon distributing meta data on a network to a viewer by streaming wherein the meta data relates to moving picture data at the viewer, or playing back meta data at the viewer, it is preferable

    a) to improve the efficiency of use of a buffer;
    b) to facilitate random access;
    c) to reduce influence of a data loss; and
    d) to allow high-speed switching of meta data.

Under the circumstances, it is desired to provide a technique that can improve the efficiency of the processing associated with meta data.

According to one aspect of the present invention, there is provided an information recording medium for use in playback information recorded thereon, the information comprising a stream which includes meta data of a moving picture capable of being played back upon playback of a video content, and which is formed of access units as data units capable of being processed independently; and a table which includes playback time information indicating a playback time of meta data, and which includes access position information indicating an access position of meta data.

According to another aspect of the present invention, there is provided an information playback method, comprising reading out information from a recording medium storing a stream which includes meta data of a moving picture capable of being played back upon playback of a video content, and which is formed of access units as data units capable of being processed independently, and storing a table which includes playback time information indicating a playback time of meta data, and which includes access position information indicating an access position of meta data; and playing back the video content, and playing back the meta data on the basis of the playback time information and the access position information included in the table.

According to still another aspect of the present invention, there is provided an information recording method, comprising recording on a first area of an information recording medium, a stream which includes meta data of a moving picture capable of being played back upon playback of a video content, and which is formed of access units as data units capable of being processed independently; and recording on a second area of the information recording medium, a table which includes playback time information indicating a playback time of meta data, and which includes access position information indicating an access position of meta data.

This summary of the invention does not necessarily describe all necessary features so that the invention may also be a sub-combination of these described features.

The invention can be more fully understood from the following detailed description when taken in conjunction with the accompanying drawings, in which:

FIGS. 1A and 1B are views for explaining a display example of hypermedia according to an embodiment of the present invention;

FIG. 2 is a block diagram showing an example of the arrangement of a system according to an embodiment of the present invention;

FIG. 3 is a view for explaining the relationship between an object region and object region data according to an embodiment of the present invention;

FIG. 4 is a view for explaining an example of the data structure of an access unit of object meta data according to an embodiment of the present invention;

FIG. 5 is a view for explaining a method of forming a Vclick stream according to an embodiment of the present invention;

FIG. 6 is a view for explaining an example of the configuration of a Vclick access table according to an embodiment of the present invention;

FIG. 7 is a view for explaining an example of the configuration of a transmission packet according to an embodiment of the present invention;

FIG. 8 is a view for explaining another example of the configuration of a transmission packet according to an embodiment of the present invention;

FIG. 9 is a chart for explaining an example of communications between a server and client according to an embodiment of the present invention;

FIG. 10 is a chart for explaining another example of communications between a server and client according to an embodiment of the present invention;

FIG. 11 is a table for explaining an example of data elements of a Vclick stream according to an embodiment of the present invention;

FIG. 12 is a table for explaining an example of data elements of a header of the Vclick stream according to an embodiment of the present invention;

FIG. 13 is a table for explaining an example of data elements of a Vclick access unit (AU) according to an embodiment of the present invention;

FIG. 14 is a table for explaining an example of data elements of a header of the Vclick access unit (AU) according to an embodiment of the present invention;

FIG. 15 is a table for explaining an example of data elements of a time stamp of the Vclick access unit (AU) according to an embodiment of the present invention;

FIG. 16 is a table for explaining an example of data elements of a time stamp skip of the Vclick access unit (AU) according to an embodiment of the present invention;

FIG. 17 is a table for explaining an example of data elements of object attribute information according to an embodiment of the present invention;

FIG. 18 is a table for explaining an example of types of object attribute information according to an embodiment of the present invention;

FIG. 19 is a table for explaining an example of data elements of a name attribute of an object according to an embodiment of the present invention;

FIG. 20 is a table for explaining an example of data elements of an action attribute of an object according to an embodiment of the present invention;

FIG. 21 is a table for explaining an example of data elements of a contour attribute of an object according to an embodiment of the present invention;

FIG. 22 is a table for explaining an example of data elements of a blinking region attribute of an object according to an embodiment of the present invention;

FIG. 23 is a table for explaining an example of data elements of a mosaic region attribute of an object according to an embodiment of the present invention;

FIG. 24 is a table for explaining an example of data elements of a paint region attribute of an object according to an embodiment of the present invention;

FIG. 25 is a table for explaining an example of data elements of text information data of an object according to an embodiment of the present invention;

FIG. 26 is a table for explaining an example of data elements of a text attribute of an object according to an embodiment of the present invention;

FIG. 27 is a table for explaining an example of data elements of a text highlight effect attribute of an object according to an embodiment of the present invention;

FIG. 28 is a table for explaining an example of data elements of an entry of a text highlight attribute of an object according to an embodiment of the present invention;

FIG. 29 is a table for explaining an example of data elements of a text blinking effect attribute of an object according to an embodiment of the present invention;

FIG. 30 is a table for explaining an example of data elements of an entry of a text blinking attribute of an object according to an embodiment of the present invention;

FIG. 31 is a table for explaining an example of data elements of a text scroll effect attribute of an object according to an embodiment of the present invention;

FIG. 32 is a table for explaining an example of data elements of a text karaoke effect attribute of an object according to an embodiment of the present invention;

FIG. 33 is a table for explaining an example of data elements of an entry of a text karaoke effect attribute of an object according to an embodiment of the present invention;

FIG. 34 is a table for explaining an example of data elements of a layer extension attribute of an object according to an embodiment of the present invention;

FIG. 35 is a table for explaining an example of data elements of an entry of a layer extension attribute of an object according to an embodiment of the present invention;

FIG. 36 is a table for explaining an example of data elements of object region data of a Vclick access unit (AU) according to an embodiment of the present invention;

FIG. 37 is a flowchart showing a normal playback start processing sequence (when Vclick data is stored in a server) according to an embodiment of the present invention;

FIG. 38 is a flowchart showing another normal playback start processing sequence (when Vclick data is stored in the server) according to an embodiment of the present invention;

FIG. 39 is a flowchart showing a normal playback end processing sequence (when Vclick data is stored in the server) according to an embodiment of the present invention;

FIG. 40 is a flowchart showing a random access playback start processing sequence (when Vclick data is stored in the server) according to an embodiment of the present invention;

FIG. 41 is a flowchart showing another random access playback start processing sequence (when Vclick data is stored in the server) according to an embodiment of the present invention;

FIG. 42 is a flowchart showing a normal playback start processing sequence (when Vclick data is stored in a client) according to an embodiment of the present invention;

FIG. 43 is a flowchart showing a random access playback start processing sequence (when Vclick data is stored in the client) according to an embodiment of the present invention;

FIG. 44 is a flowchart showing a filtering operation of the client according to an embodiment of the present invention;

FIG. 45 is a flowchart (part 1) showing an access point search sequence in a Vclick stream using a Vclick access table according to an embodiment of the present invention;

FIG. 46 is a flowchart (part 2) showing an access point search sequence in a Vclick stream using a Vclick access table according to an embodiment of the present invention;

FIG. 47 is a view for explaining an example wherein a Vclick_AU effective time interval and active period do not match according to an embodiment of the present invention;

FIG. 48 is a view for explaining an example of the data structure of NULL_AU according to an embodiment of the present invention;

FIG. 49 is a view for explaining an example of the relationship between the Vclick_AU effective time interval and active period using NULL_AU according to an embodiment of the present invention;

FIG. 50 is a flowchart for explaining an example (part 1) of the processing sequence of a meta data manager when NULL_AU according to an embodiment of the present invention is used;

FIG. 51 is a flowchart for explaining an example (part 2) of the processing sequence of a meta data manager when NULL_AU according to an embodiment of the present invention is used;

FIG. 52 is a flowchart for explaining an example (part 3) of the processing sequence of a meta data manager when NULL_AU according to an embodiment of the present invention is used;

FIG. 53 is a view for explaining an example of the structure of an enhanced DVD-Video disc according to an embodiment of the present invention;

FIG. 54 is a view for explaining an example of the directory structure in the enhanced DVD-Video disc according to an embodiment of the present invention;

FIG. 55 is a view for explaining an example (part 1) of the structure of Vclick information according to an embodiment of the present invention;

FIG. 56 is a view for explaining an example (part 2) of the structure of Vclick information according to an embodiment of the present invention;

FIG. 57 is a view for explaining an example (part 3) of the structure of Vclick information according to an embodiment of the present invention;

FIG. 58 is a view for explaining a configuration example of Vclick information according to an embodiment of the present invention;

FIG. 59 is a view for explaining description example 1 of Vclick information according to an embodiment of the present invention;

FIG. 60 is a view for explaining description example 2 of Vclick information according to an embodiment of the present invention;

FIG. 61 is a view for explaining description example 3 of Vclick information according to an embodiment of the present invention;

FIG. 62 is a view for explaining description example 4 of Vclick information according to an embodiment of the present invention;

FIG. 63 is a view for explaining description example 5 of Vclick information according to an embodiment of the present invention;

FIG. 64 is a view for explaining description example 6 of Vclick information according to an embodiment of the present invention;

FIG. 65 is a view for explaining description example 7 of Vclick information according to an embodiment of the present invention;

FIG. 66 is a view for explaining another configuration example of Vclick information according to an embodiment of the present invention;

FIG. 67 is a view for explaining an example wherein an English audio Vclick stream is selected by a Vclick information file according to an embodiment of the present invention;

FIG. 68 is a view for explaining an example wherein a Japanese audio Vclick stream is selected by a Vclick information file according to an embodiment of the present invention;

FIG. 69 is a view for explaining an example wherein an English caption Vclick stream is selected by a Vclick information file according to an embodiment of the present invention;

FIG. 70 is a view for explaining an example wherein a Japanese caption Vclick stream is selected by a Vclick information file according to an embodiment of the present invention;

FIG. 71 is a view for explaining an example wherein an angle 1 Vclick stream is selected by a Vclick information file according to an embodiment of the present invention;

FIG. 72 is a view for explaining an example wherein an angle 2 Vclick stream is selected by a Vclick information file according to an embodiment of the present invention;

FIG. 73 is a view for explaining an example wherein a 16 : 9 (aspect ratio) Vclick stream is selected by a Vclick information file according to an embodiment of the present invention;

FIG. 74 is a view for explaining an example wherein a 4 : 3 (aspect ratio) letter box display Vclick stream is selected by a Vclick information file according to an embodiment of the present invention;

FIG. 75 is a view for explaining an example wherein a 4 : 3 (aspect ratio) pan scan display Vclick stream is selected by a Vclick information file according to an embodiment of the present invention;

FIG. 76 is a view for explaining a display example of hypermedia according to an embodiment of the present invention;

FIG. 77 is a view for explaining an example of the data structure of an access unit of object meta data according to an embodiment of the present invention;

FIG. 78 is a view for explaining an example of the data structure of an access unit of object meta data according to an embodiment of the present invention;

FIG. 79 is a table for explaining the data structure of a duration of the Vclick access unit according to an embodiment of the present invention;

FIG. 80 is a view for explaining description example 8 of Vclick information according to an embodiment of the present invention;

FIG. 81 is a view for explaining description example 9 of Vclick information according to an embodiment of the present invention;

FIG. 82 is a flowchart for explaining the playback processing sequence according to another embodiment of the present invention;

FIG. 83 is a view for explaining a method of forming a Vclick stream (multi-stream) according to another embodiment of the present invention;

FIG. 84 is a flowchart for explaining the startup processing sequence according to another embodiment of the present invention;

FIG. 85 is a view for explaining an example of the configuration of a Vclick access table according to another embodiment of the present invention;

FIG. 86 is a flowchart for explaining an example of the processing sequence of a meta data manager according to another embodiment of the present invention;

FIG. 87 is a view for explaining a buffer assign model (an example of an initialization document) according to still another embodiment of the present invention;

FIG. 88 is a flowchart for explaining the processing sequence upon buffer assign according to still another embodiment of the present invention;

FIG. 89 is a graph for explaining a use example of a buffer according to still another embodiment of the present invention;

FIG. 90 is a view for explaining a use example (part 1) of a ring buffer according to still another embodiment of the present invention;

FIG. 91 is a chart for explaining the algorithm of "read by playback" and "write" according to still another embodiment of the present invention;

FIG. 92 is a view for explaining a use example (part 2) of a ring buffer according to still another embodiment of the present invention;

FIG. 93 is a view for explaining a use example (part 3) of a ring buffer according to still another embodiment of the present invention;

FIG. 94 is a view for explaining a use example (part 4) of a ring buffer according to still another embodiment of the present invention;

FIG. 95 is a view for explaining a use example (part 5) of a ring buffer according to still another embodiment of the present invention;

FIG. 96 is a view for explaining a use example (part 6) of a ring buffer according to still another embodiment of the present invention;

FIG. 97 is a flowchart for explaining the processing sequence upon buffer flash (initialization) according to still another embodiment of the present invention;

FIG. 98 is a chart for explaining a "sequence upon buffer clear" according to still another embodiment of the present invention;

FIG. 99 is a chart for explaining "special playback by continuously issuing Get commands" (a model that requires Vclick data every generation of an event) according to still another embodiment of the present invention;

FIG. 100 is a chart for explaining "special playback by continuously issuing Get commands" (a model having a predetermined order of occurrence of events) according to still another embodiment of the present invention;

FIG. 101 is a graph for explaining a "buffer state upon fast forward playback" according to still another embodiment of the present invention;

FIG. 102 is a view for explaining a "method of handling access units upon fast forward or fast reverse playback" according to still another embodiment of the present invention;

FIG. 103 is a view for explaining a "model when a Vclick stream is stored on a moving picture data recording medium" (when seamless playback is guaranteed) according to still another embodiment of the present invention;

FIG. 104 is a chart for explaining the processing of the model in FIG. 103;

FIG. 105 is a view for explaining a "model when a Vclick stream is stored on a moving picture data recording medium" (when seamless playback is not guaranteed) according to still another embodiment of the present invention; and

FIG. 106 is a chart for explaining the processing of the model in FIG. 105.

Prior to a detailed description of an embodiment of the present invention, items as points will be briefly described below.

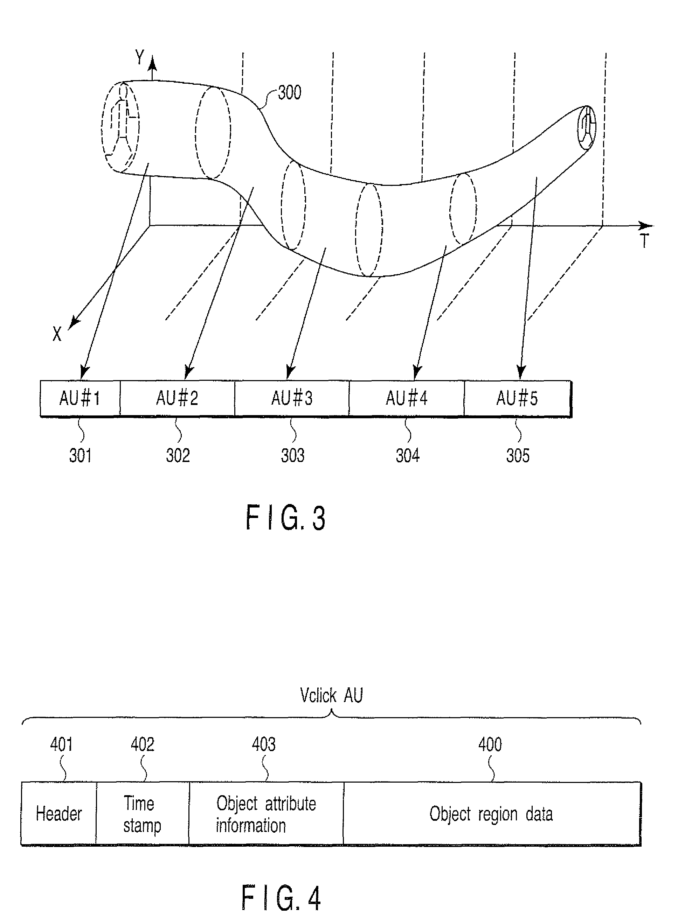

Moving picture meta data (its data structure) according to an embodiment of the present invention includes one or a plurality of access units as data units which can be independently processed by a system. Note that the access unit (Vclick_AU in FIGS. 4, 77, and 78) includes first data (402, B01/B02, C01/C02) that specifies an effective time interval defined with respect to the time axis of a moving picture, object region data (400) that describes a spatio-temporal region in the moving picture, and second data (403) including at least one of data that specifies a display method associated with the spatio-temporal region, and data that specifies an operation executed by the system upon designation of the spatio-temporal region.

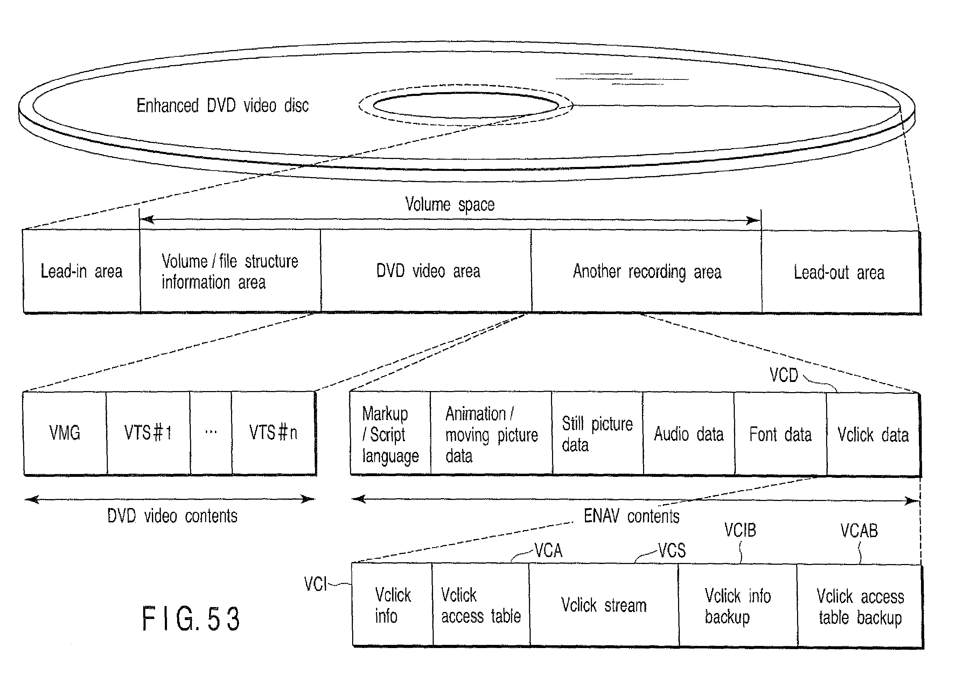

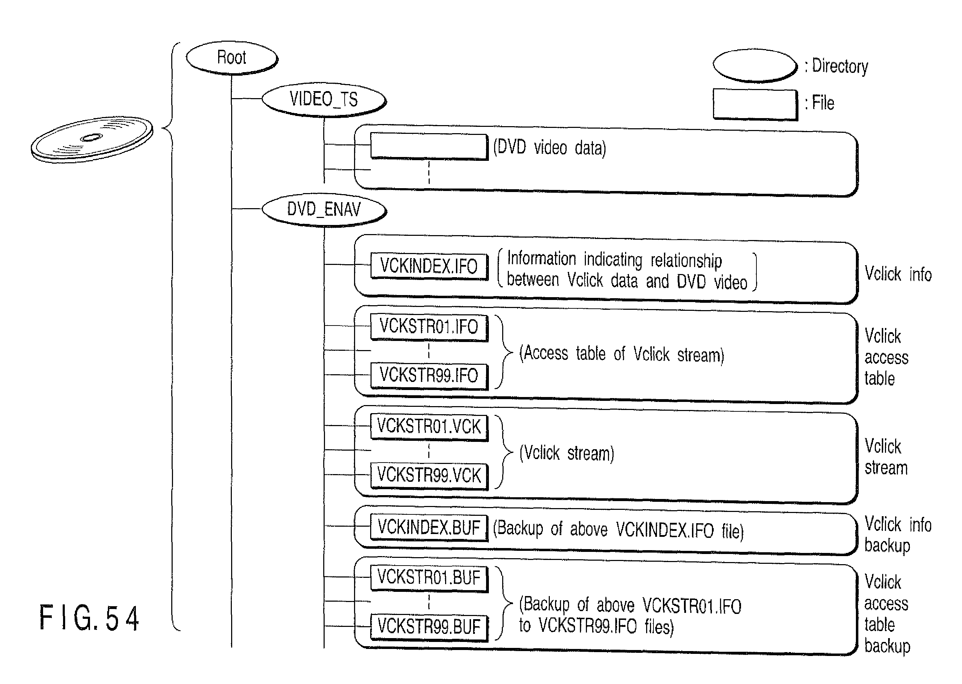

In the embodiment of the present invention, a data structure (VCD in FIG. 53) including a stream (VCS in FIG. 53; VCKSTRxx.VCK in FIG. 54), which has moving picture meta data that can be played back upon playback of video contents and is formed of access units (Vclick_AU) as data units that can be processed independently, is configured to include specific information (VCI in FIG. 53; VCKINDEX.IFO in FIG. 54) used to select a stream of the moving picture meta data in accordance with a moving picture playback period (PGC playback period or the like) of the video contents.

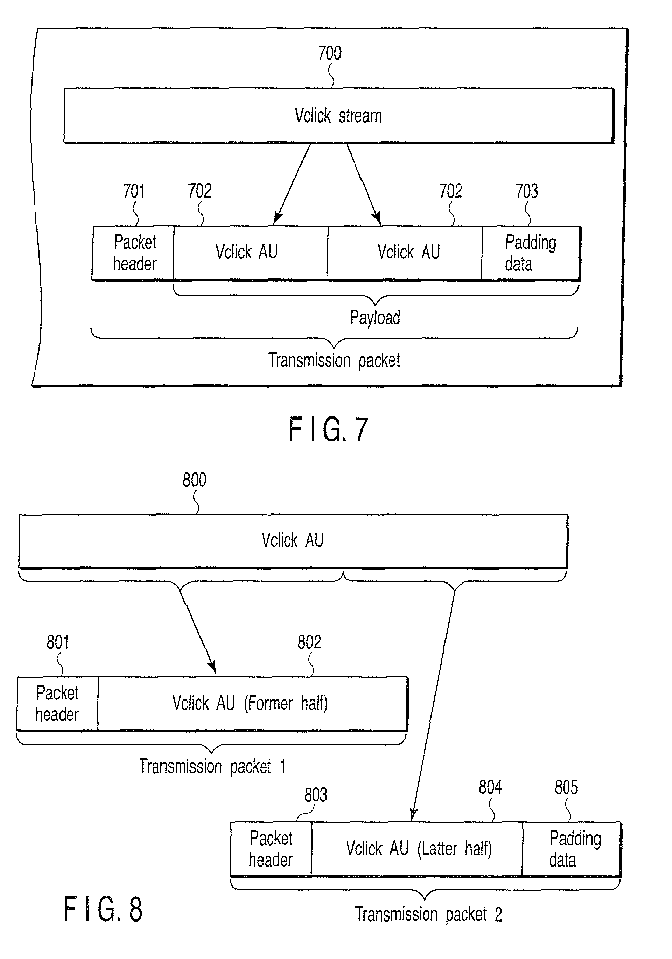

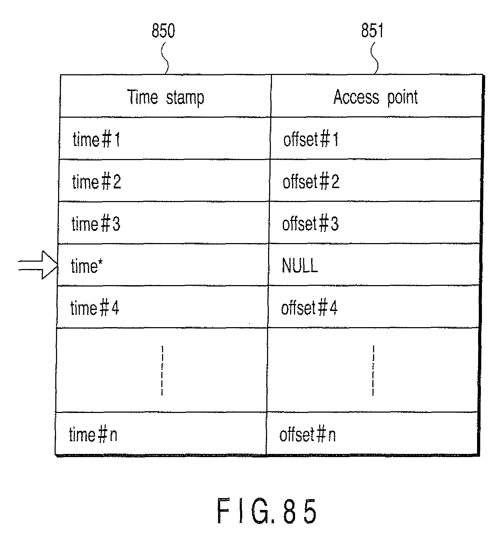

The embodiment of the present invention is configured to comprise an access table (VCA) including playback time information (600 in FIG. 6; or 850 in FIG. 85) indicating the playback time of meta data, and access position information (601 in FIG. 6; or 851 in FIG. 85) indicating the access position of meta data.

Since meta data is formed as a set of access units that can be processed independently, the buffer can be used efficiently, random access is facilitated, the influence of any data loss is small, and meta data can be switched at high speed.

Since the specific information used to select a stream of meta data is available, if meta data includes a plurality of streams, the stream can be selected and loaded without any user's stream selection instruction.

Since the access table (VCA) includes the playback time information of meta data and the corresponding access position information, random access of meta data is easy.

Embodiments of the present invention will be described in detail hereinafter with reference to the accompanying drawings.

(Overview of Application)

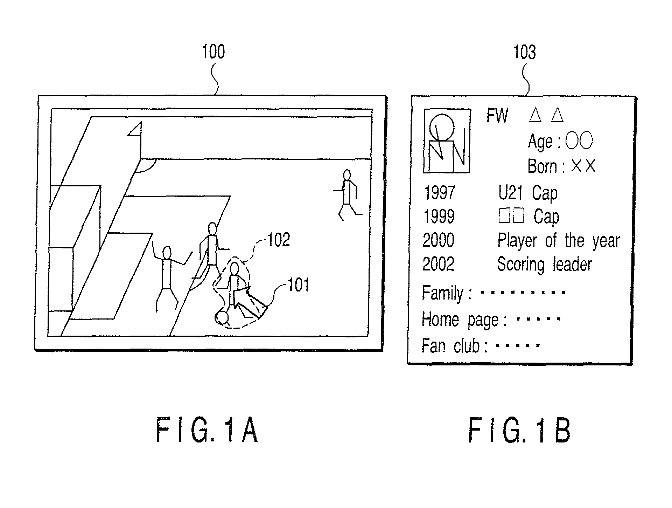

FIGS. 1A and 1B show a display example of an application (moving picture hypermedia) implemented by using object meta data according to the present invention together with a moving picture on the screen. In FIG. 1A, reference numeral 100 denotes a moving picture playback window; and 101, a mouse cursor. Data of the moving picture which is played back on the moving picture playback window 100 is recorded on a local moving picture data recording medium. Reference numeral 102 denotes a region of an object that appears in the moving picture. When the user moves the mouse cursor into the region of the object and selects it by, e. g., clicking a mouse button, a predetermined function is executed. For example, in FIG. 1B, a document (information associated with the clicked object) 103 on a local disc and/or a network is displayed. In addition, a function of jumping to another scene of the moving picture, a function of playing back another moving picture file, a function of changing a playback mode, and the like can be executed.

Data of a region 102 of the object, action data of a client upon designation of this region by, e.g., clicking or the like, and the like will be referred to as object meta data or Vclick data together. The object meta data may be recorded on a local moving picture data recording medium (optical disc, hard disc, semiconductor memory, or the like) together with moving picture data, or may be stored in a server on the network and may be sent to the client via the network. How to implement this application will be described in detail hereinafter.

(System Model)

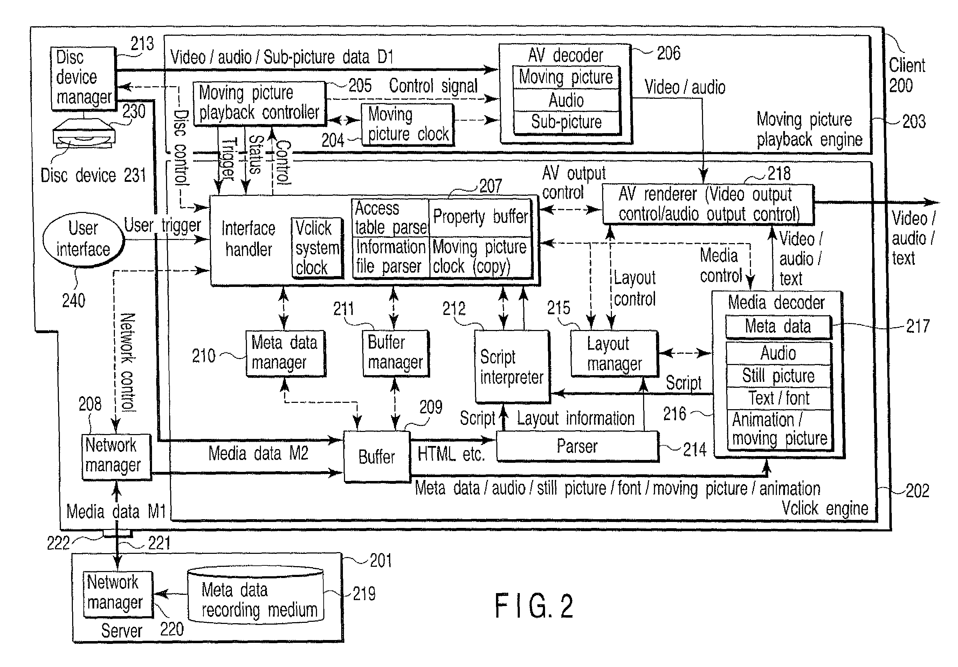

FIG. 2 is a schematic block diagram showing the arrangement of a streaming apparatus (network compatible disc player) according to an embodiment of the present invention. The functions of respective building components will be described below using FIG. 2.

Reference numeral 200 denotes a client; 201, a server; and 221, a network that connects the server 201 and client 200. The client 200 comprises a moving picture playback engine 203, Vclick engine 202, disc device 230, user interface 240, network manager 208, and disc device manager 213. Reference numerals 204 to 206 denote devices included in the moving picture playback engine; 207, 209 to 212, and 214 to 218, devices included in the Vclick engine; and 219 and 220, devices included in the server 201. The client 200 can play back moving picture data, and can display a document described in a markup language (e.g., HTML or the like), which are stored in the disc device 230. Also, the client 200 can display a document (e.g., HTML) on the network.

When meta data associated with moving picture data stored in the client 200 is stored in the server 201, the client 200 can execute a playback process using this meta data and the moving picture data in the disc device 230. The server 201 sends media data M1 to the client 200 via the network 221 in response to a request from the client 200. The client 200 processes the received media data in synchronism with playback of a moving picture to implement additional functions of hypermedia and the like (note that "synchronization" is not limited to a physically perfect match of timings but some timing error is allowed).

The moving picture playback engine 203 is used to play back moving picture data stored in the disc device 230, and has the devices 204, 205, and 206. Reference numeral 231 denotes a moving picture data recording medium (more specifically, a DVD, video CD, video tape, hard disc, semiconductor memory, or the like). The moving picture data recording medium 231 records digital and/or analog moving picture data. Meta data associated with moving picture data may be recorded on the moving picture data recording medium 231 together with the moving picture data. Reference numeral 205 denotes a moving picture playback controller, which can control playback of video/audio/sub-picture data D1 from the moving picture data recording medium 231 in accordance with a "control" signal output from the interface handler 207 of the Vclick engine 202.

More specifically, the moving picture playback controller 205 can output a "trigger" signal indicating the playback status of the video/audio/sub-picture data D1 to the interface handler 207 in accordance with a "control" signal which is transmitted upon generation of an arbitrary event (e.g., a menu call or title jump based on a user instruction) from the interface handler 207 in a moving picture playback mode. In this case (at a timing simultaneously with output of the trigger signal or an appropriate timing before or after that timing), the moving picture playback controller 205 can output a "status" signal indicating property information (e.g., an audio language, sub-picture caption language, playback operation, playback position, various kinds of time information, disc contents, and the like set in the player) to the interface handler 207. By exchanging these signals, a moving picture data read process can be started or stopped, and access to a desired location in moving picture data can be made.

The AV decoder 206 has a function of decoding video data, audio data, and sub-picture data recorded on the moving picture data recording medium 231, and outputting decoded video data (mixed data of the aforementioned video and sub-picture data) and audio data. The moving picture playback engine 203 can have the same functions as those of a playback engine of a normal DVD-Video player which is manufactured on the basis of the existing DVD-Video standard. That is, the client 200 in FIG. 2 can play back video data, audio data, and the like with the MPEG2 program stream structure in the same manner as a normal DVD-Video player, thus allowing playback of existing DVD-Video discs (discs complying with the conventional DVD-Video standard) (to assure playback compatibility with existing DVD software).

The interface handler 207 makes interface control among modules such as the moving picture playback engine 203, the disc device manager 213, the network manager 208, a meta data manager 210, a buffer manager 211, a script interpreter 212, a media decoder 216 (including a meta data decoder 217), a layout manager 215, an AV renderer 218, and the like. Also, the interface handler 207 receives an input event by a user operation (operation to an input device such as a mouse, touch panel, keyboard, or the like) and transmits an event to an appropriate module.

The interface handler 207 has an access table parser that parses a Vclick access table (corresponding to VCA which will be described later with reference to FIG. 53), an information file parser that parses a Vclick information file (corresponding to VCI which will be described later with reference to FIG. 53), a property buffer that records property information managed by the Vclick engine, a system clock of the Vclick engine, a moving picture clock as a copy of a moving picture clock 204 in the moving picture playback engine, and the like.

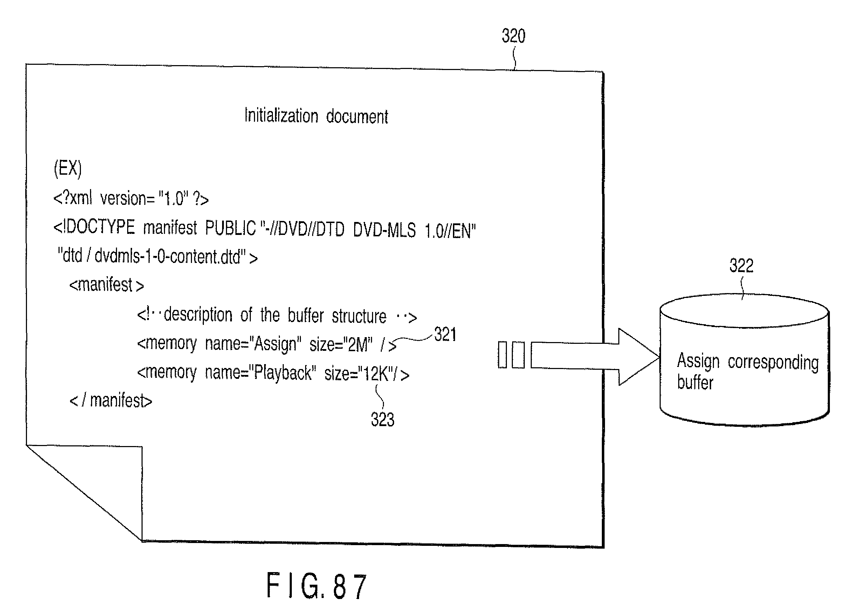

The network manager 208 has a function of acquiring a document (e.g., HTML), still picture data, audio data, and the like onto a buffer 209 via the network, and controls the operation of an Internet connection unit 222. When the network manager 208 receives a connection/disconnection instruction to/from the network from the interface handler 207 that has received a user operation or a request from the meta data manager 210, it switches connection/disconnection of the Internet connection unit 222. Upon establishing connection between the server 201 and Internet connection unit 222 via the network, the network manager 208 exchanges control data and media data (object meta data). Note that the buffer 209 can be formed using a ring buffer to which a predetermined size is assigned, and its details will be explained later with reference to FIG. 87 and subsequent figures.

Data to be transmitted from the client 200 to the server 201 include a session open request, session close request, media data (object meta data) transmission request, status information (OK, error, etc.), and the like. Also, status information of the client may be exchanged. On the other hand, data to be transmitted from the server 201 to the client 200 include media data (object meta data) and status information (OK, error, etc.)

The disc device manager 213 has a function of acquiring a document (e.g., HTML), still picture data, audio data, and the like onto the buffer 209, and a function of transmitting the video/audio/sub-picture data D1 to the moving picture playback engine 203. The disc device manager 213 executes a data transmission process in accordance with an instruction from the meta data manager 210.

The buffer 209 temporarily stores the media data M1 which is sent from the server 201 via the network (via the network manager). The moving picture data recording medium 231 records media data M2 in some cases. In such case, the media data M2 is stored in the buffer 209 via the disc device manager. Note that media data includes Vclick data (object meta data), a document (e.g., HTML), and still picture data, moving picture data, and the like attached to the document.

When the media data M2 is recorded on the moving picture data recording medium 231, it may be read out from the moving picture data recording medium 231 and stored in the buffer 209 in advance prior to the start of playback of the video/audio/sub-picture data D1. This is for the following reason: since the media data M2 and video/audio/sub-picture data D1 have different data recording locations on the moving picture data recording medium 231, if normal playback is made, a disc seek or the like occurs and seamless playback cannot be guaranteed. The above process can avoid such problem.

As described above, when the media data M1 downloaded from the server 201 is stored in the buffer 209 as in the media data M2 recorded on the moving picture data recording medium 231, the video/audio/sub-picture data D1 and media data can be simultaneously read out and played back.

Note that the storage capacity of the buffer 209 is limited. That is, the data size of the media data M1 or M2 that can be stored in the buffer 209 is limited. For this reason, unnecessary data may be erased under the control (buffer control) of the meta data manager 210 and/or the buffer manager 211.

The meta data manager 210 manages meta data stored in the buffer 209, and transfers meta data having a corresponding time stamp to the media decoder 216 from the buffer 209 upon reception of an appropriate timing ("moving picture clock" signal) synchronized with playback of a moving picture from the interface handler 207.

When meta data having a corresponding time stamp is not present in the buffer 209, it need not be transferred to the media decoder 216. The meta data manager 210 controls to load data for a size of the meta data output from the buffer 209 or for an arbitrary size from the server 201 or disc device 230 onto the buffer 209. As a practical process, the meta data manager 210 issues a meta data acquisition request for a designated size to the network manager 208 or disc device manager 213 via the interface handler 207. The network manager 208 or disc device manager 213 loads meta data for the designated size onto the buffer 209, and sends a meta data acquisition completion response to the meta data manager 210 via the interface handler 207.

The buffer manager 211 manages data (a document (e.g., HTML), still picture data and moving picture data appended to the document, and the like) other than meta data stored in the buffer 209, and sends data other than meta data stored in the buffer 209 to a parser 214 and the media decoder 216 upon reception of an appropriate timing ("moving picture clock" signal) synchronized with playback of a moving picture from the interface handler 207. The buffer manager 211 may delete data that becomes unnecessary from the buffer 209.

The parser 214 parses a document written in a markup language (e.g., HTML), and sends a script to the script interpreter 212 and information associated with a layout to the layout manager 215.

The script interpreter 212 interprets and executes a script input from the parser 214. Upon executing the script, information of an event and property input from the interface handler 207 can be used. When an object in a moving picture is designated by the user, a script is input from the meta data decoder 217 to the script interpreter 212.

The AV renderer 218 has a function of controlling video/audio/text outputs. More specifically, the AV renderer 218 controls, e.g., the video/text display positions and display sizes (often also including the display timing and display time together with them) and the level of audio (often also including the output timing and output time together with it) in accordance with a "layout control" signal output from the layout manager 215, and executes pixel conversion of a video in accordance with the type of a designated monitor and/or the type of a video to be displayed. The video/audio/text outputs to be controlled are those from the moving picture playback engine 203 and media decoder 216. Furthermore, the AV renderer 218 has a function of controlling mixing or switching of video/audio data input from the moving picture playback engine 203 and video/audio/text data input from the media decoder in accordance with an "AV output control" signal output from the interface handler 207.

The layout manager 215 outputs a "layout control" signal to the AV renderer 218. The "layout control" signal includes information associated with the sizes and positions of moving picture/still picture/text data to be output (often also including information associated with the display times such as display start/end timings and duration), and is used to designate the AV renderer 218 about a layout used to display data. The layout manager 215 checks input information such as user's clicking or the like input from the interface handler 207 to determine a designated object, and instructs the meta data decoder 217 to extract an action command such as display of associated information which is defined for the designated object. The extracted action command is sent to and executed by the script interpreter 212.

The media decoder 216 (including the meta data decoder) decodes moving picture/still picture/text data. These decoded video data and text image data are transmitted from the media decoder 216 to the AV renderer 218. These data to be decoded are decoded in accordance with an instruction of a "media control" signal from the interface handler 207 and in synchronism with a "timing" signal from the interface handler 207.

Reference numeral 219 denotes a meta data recording medium of the server 201 such as a hard disc, optical disc, semiconductor memory, magnetic tape, or the like, which records meta data to be transmitted to the client 200. This meta data is associated with moving picture data recorded on the moving picture data recording medium 231. This meta data includes object meta data to be described later. Reference numeral 220 denotes a network manager of the server 201, which exchanges data with the client 200 via the network 221.

(EDVD Data Structure and IFO File)

FIG. 53 shows an example of the data structure when an enhanced DVD-Video disc is used as the moving picture data recording medium 231. A DVD-Video area of the enhanced DVD-Video disc stores DVD-Video contents (having the MPEG-2 program stream structure) having the same data structure as the DVD-Video standard. Furthermore, another recording area of the enhanced DVD-Video disc stores enhanced navigation (to be abbreviated as ENAV hereinafter) contents which allow various playback processes of video contents. Note that the recording area is also recognized by the DVD-Video standard.

A basic data structure of the DVD-Video disc will be described below. The recording area of the DVD-Video disc includes a lead-in area, volume space, and lead-out area in turn from its inner periphery. The volume space includes a volume/file structure information area and DVD-Video area (DVD-Video zone), and can also have another recording area (DVD other zone) as an option.

The volume/file structure information area is assigned for the UDF (Universal Disk Format) bridge structure. The volume of the UDF bridge format is recognized according to ISO/IEC13346 Part 2. A space that recognizes this volume includes successive sectors, and starts from the first logical sector of the volume space in FIG. 53. First 16 logical sectors are reserved for system use specified by ISO9660. In order to assure compatibility to the conventional DVD-Video standard, the volume/file structure information area with such contents is required.

The DVD-Video area records management information called a video manager VMG and one or more video contents called video title sets VTS (VTS#1 to VTS#n). The VMG is management information for all VTSs present in the DVD-Video area, and includes control data VMGI, VMG menu data VMCM_VOBS (option), and VMG backup data. Each VTS includes control data VTSI of that VTS, VTS menu data VTSM_VOBS (option), data VTSTT_VOBS of the contents (movie or the like) of that VTS (title), and VTSI backup data. To assure compatibility to the conventional DVD-Video standard, the DVD-Video area with such contents is also required.

A playback select menu or the like of respective titles (VTS#1 to VTS#n) is given in advance by a provider (the producer of a DVD-Video disc) using the VMG, and a playback chapter select menu, the playback order of recorded contents (cells), and the like in a specific title (e.g., VTS#1) are given in advance by the provider using the VTSI. Therefore, the viewer of the disc (the user of the DVD-Video player) can enjoy the recorded contents of that disc in accordance with menus of the VMG/VTSI prepared in advance by the provider and playback control information (program chain information PGCI) in the VTSI. However, with the DVD-Video standard, the viewer (user) cannot play back the contents (movie or music) of each VTS by a method different from the VMG/VTSI prepared by the provider.

The enhanced DVD-Video disc shown in FIG. 53 is prepared for a scheme that allows the user to play back the contents (movie or music) of each VTS by a method different from the VMG/VTSI prepared by the provider, and to play back while adding contents different from the VMG/VTSI prepared by the provider. ENAV contents included in this disc cannot be accessed by a DVD-Video player which is manufactured on the basis of the DVD-Video standard (even if the ENAV contents can be accessed, their contents cannot be used). However, a DVD-Video player according to an embodiment of the present invention (for example, the client 200 which equips the Vclick engine 202 in FIG. 2) can access the ENAV contents, and can use their playback contents.

The ENAV contents include data such as audio data, still picture data, font/text data, moving picture data, animation data, Vclick data, and the like, and also an ENAV document (described in a Markup/Script language) as information for controlling playback of these data. This playback control information describes, using a Markup language or Script language, playback methods (display method, playback order, playback switch sequence, selection of data to be played back, and the like) of the ENAV contents (including audio, still picture, font/text, moving picture, animation, Vclick, and the like) and/or the DVD-Video contents. For example, Markup languages such as HTML (Hyper Text Markup Language)/XHTML (eXtensible Hyper Text Markup Language), SMIL (Synchronized Multimedia Integration Language), and the like, Script languages such as an ECMA (European Computer Manufacturers Association) script, JavaScript(R), and the like, and so forth, may be used in combination.

Since the contents of the enhanced DVD-Video disc in FIG. 53 except for the other recording area comply with the DVD-Video standard, video contents recorded on the DVD-Video area can be played back using an already prevalent DVD-Video player (i.e., this disc is compatible to the conventional DVD-Video disc). The ENAV contents recorded on the other recording area cannot be played back (or used) by the conventional DVD-Video player but can be played back and used by a DVD-Video player according to an embodiment of the present invention. Therefore, when the ENAV contents are played back using the DVD-Video player according to the embodiment of the present invention, the user can enjoy not only the contents of the VMG/VTSI prepared in advance by the provider but also a variety of video playback features.

Especially, as shown in FIG. 53, the ENAV contents include Vclick data VCD, which includes a Vclick information file (Vclick Info) VCI, Vclick access table VCA, Vclick stream VCS, Vclick information file backup (Vclick Info backup) VCIB, and Vclick access table backup VCAB.

The Vclick information file VCI is data indicating a portion of DVD-Video contents where the Vclick stream VCS (to be described below) is appended (e.g., to the entire title, the entire chapter, a program chain, program, or cell as a part thereof, or the like of the DVD-Video contents). The Vclick access table VCA is assured for each Vclick stream VCS (to be described below), and is used to access the Vclick stream VCS. The Vclick stream VCS includes data such as location information of an object in a moving picture, an action description to be made upon clicking the object, and the like. The Vclick information file backup VCIB is a backup of the aforementioned Vclick information file VCI, and always has the same contents as the Vclick information file VCI. The Vclick access table backup VCAB is a backup of the Vclick access table VCA, and always has the same contents as Vclick access table VCA.

In the example of FIG. 53, the Vclick data VCD is recorded on the enhanced DVD-Video disc. However, as described above, the Vclick data VCD is stored in the server 201 on the network in some cases. That is, the Vclick data VCD can be prepared inside/outside the disc. When the Vclick data VCD is prepared outside the disc, playback using the Vclick data VCD can be made even in contents playback of an old type disc (a video disc sold in the past or the like) that does not record any Vclick data VCD or in playback of contents that record TV broadcasting (when the Vclick data VCD are created in correspondence with these contents).

Furthermore, when the user creates an original disc using a video recordable medium (e.g., a DVD-R disc, DVD-RW disc, DVD-RAM disc, hard disc or the like) and a video recorder (e.g., a DVD-VR recorder, DVD-SR recorder, HD-DVD recorder, HDD recorder, or the like), if he or she records ENAV contents including the Vclick data VCD on this disc or prepares the Vclick data VCD on a data storage of a personal computer other than this disc and connects this personal computer and recorder, he or she can enjoy meta data playback in the same manner as in the DVD-ROM video + the ENAV player in FIG. 2.

FIG. 54 shows an example of files which form the aforementioned Vclick information file VCI, Vclick access table VCA, Vclick stream VCS, Vclick information file backup VCIB, and Vclick access table backup VCAB. A file (VCKINDEX.IFO) that forms the Vclick information file VCI is described in XML (extensible Markup Language), and describes Vclick streams VCS and the location information (VTS numbers, title numbers, PGC numbers, and the like) of the DVD-Video contents where the Vclick streams are appended. The Vclick access table VCA is made up of one or more files (VCKSTR01.IFO to VCKSTR99.IFO or arbitrary file names), and one access table VCA file corresponds to one Vclick stream VCS.

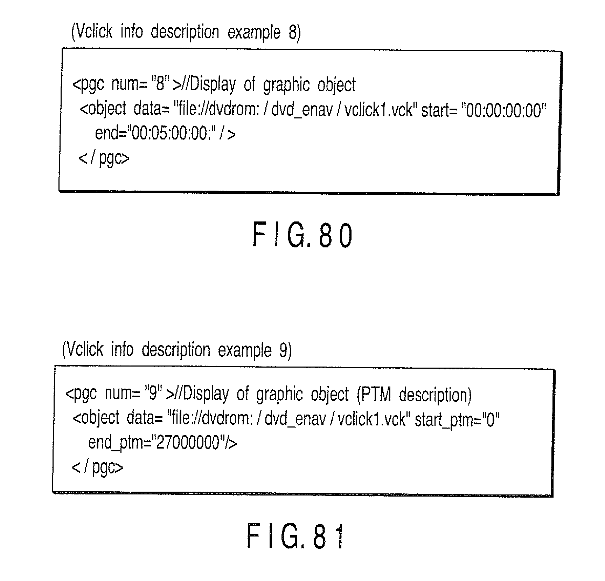

A Vclick stream file describes the relationship between location information (a relative byte size from the head of the file) of each Vclick stream VCS and time information (a time stamp of a corresponding moving picture or relative time information from the head of the file; see FIGS. 80 and 81), and allows to search for a playback start position corresponding to a given time.

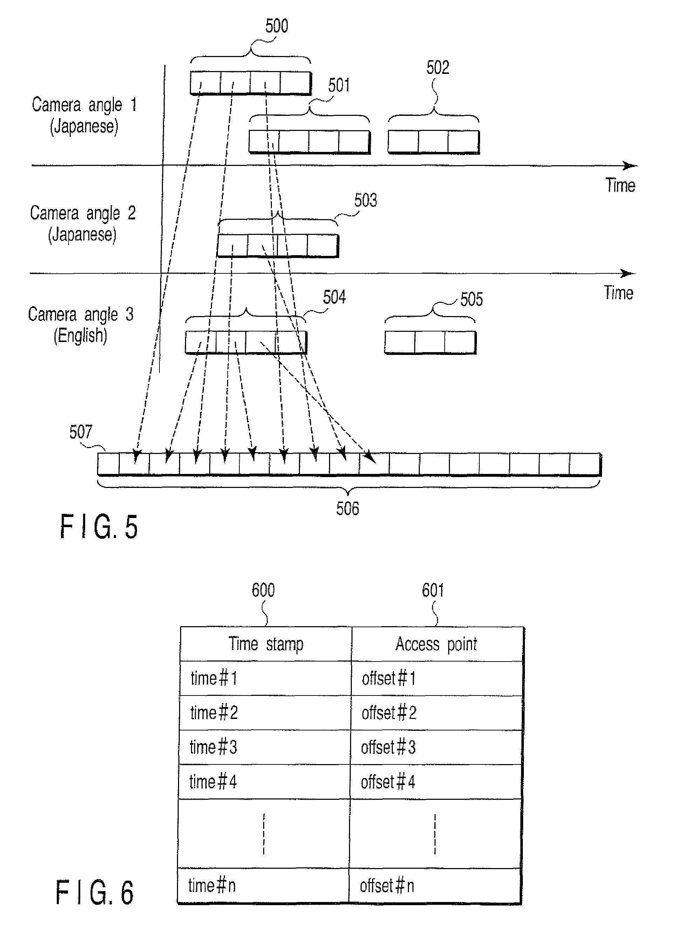

The Vclick stream VCS includes one or more files (VCKSTR01.VCK to VCKSTR99.VCK or arbitrary file names), and can be played back together with the appended DVD-Video contents with reference to the description of the aforementioned Vclick information file VCI. If there are a plurality of attributes (e.g., Japanese Vclick data VCD, English Vclick data VCD, and the like), different Vclick streams VCS (i.e., different files) may be formed in correspondence with different attributes. Alternatively, respective attributes may be multiplexed to form one Vclick stream VCS (i.e., one file) (for example, see FIG. 5).

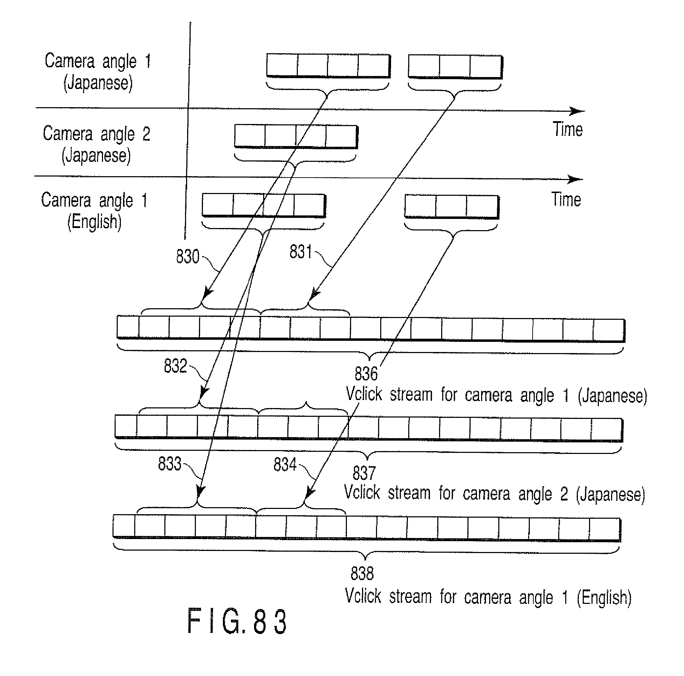

In case of the former configuration (a plurality of Vclick streams VCS are formed in correspondence with different attributes; e.g., an example shown in FIG. 83 or the like), the occupied size of the buffer (e.g., 209 in the example of FIG. 2) upon temporarily storing Vclick data in the playback apparatus (player) can be reduced. In case of the latter configuration (one Vclick stream VCS is formed to include different attributes; the example shown in FIG. 5 or the like), one file can be kept played back without switching files upon switching attributes, thus assuring high switching speed.

Note that each Vclick stream VCS and Vclick access table VCA can be associated using, e.g., their file names. In the aforementioned example, one Vclick access table VCA (VCKSTRXX.IFO; XX = 01 to 99) is assigned to one Vclick stream VCS (VCKSTRXX.VCK; XX = 01 to 99). Hence, by adopting the same file name except for extensions, association between each Vclick stream VCS and Vclick access table VCA can be identified.

In addition, the Vclick information file VCI describes association between each Vclick stream VCS and Vclick access table VCA (more specifically, the VCI parallelly describes descriptions of VCS and those of VCA), thereby identifying association between each Vclick stream VCS and Vclick access table VCA.

The Vclick information file backup VCIB is formed of a VCKINBEX.BUP file, and has the same contents as the aforementioned Vclick information file VCI (VCKINDEX.IFO). If VCKINDEX.IFO cannot be loaded for some reason (due to scratches, stains, and the like on the disc), desired procedures can be made by loading this VCKINDEX.BUP instead. The Vclick access table backup VCAB is formed of VCKSTR01.BUP to VCKSTR99.BUP files, which have the same contents as the aforementioned Vclick access tables VCA (VCKSTR01.IFO to VCKSTR99.IFO). One Vclick access table backup VCAB (VCKSTRXX.BUP; XX = 01 to 99) is assigned to one Vclick access table VCA (VCKSTRXX.IFO; XX = 01 to 99), and the same file name is adopted except for extensions, thus identifying association between each Vclick access table VCA and Vclick access table backup VCAB. If VCKSTRXX.IFO cannot be loaded for some reason (due to scratches, stains, and the like on the disc), desired procedures can be made by loading this VCKSTRXX.BUP instead.

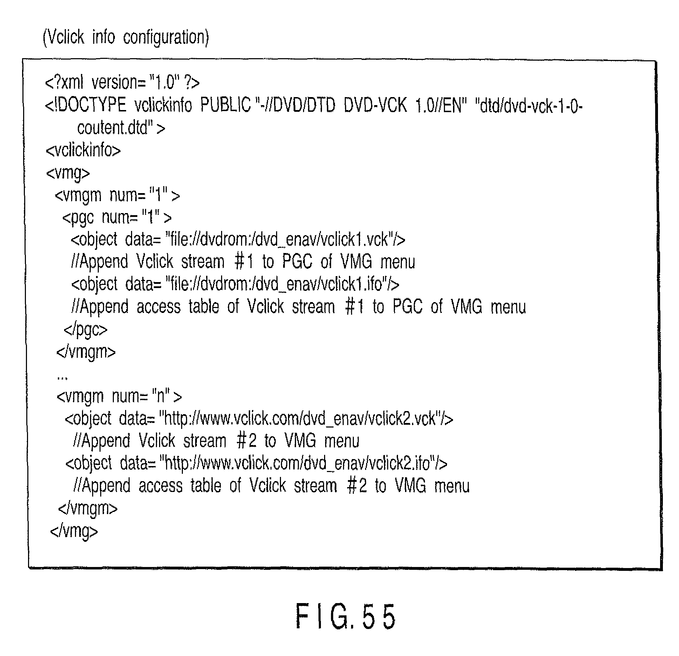

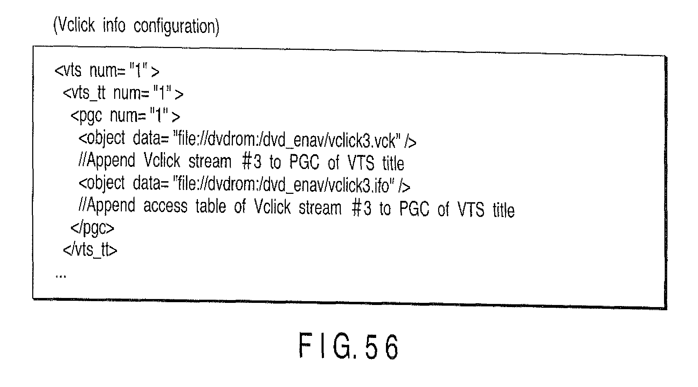

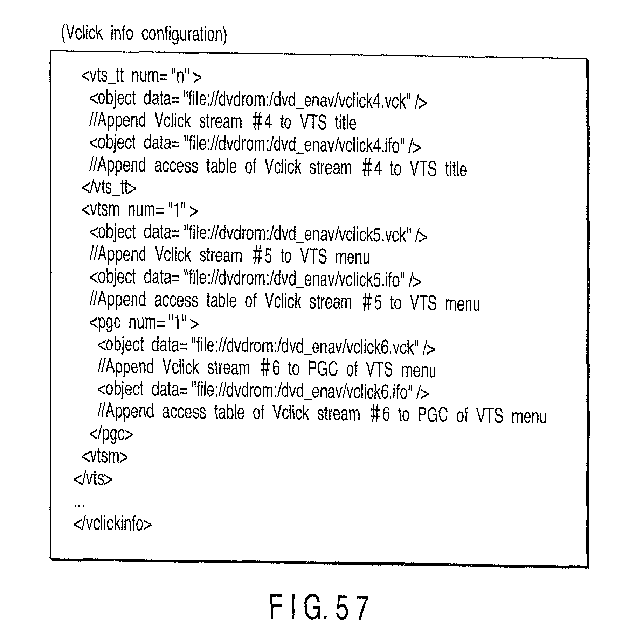

FIGS. 55 to 57 show an example of the configuration of the Vclick information file VCI. The Vclick information file VCI is made up of XML, use of XMI, is declared first, and a Vclick information file VCI made up of XML is declared next. Furthermore, the contents of the Vclick information file VCI are described using a <vclickinfo> tag.

The <vclickinfo> field includes zero or one <vmg> tag and zero or one or more <vts> tags. The <vmg> field represents a VMG space in DVD-Video, and indicates that a Vclick stream described in the <vmg> field is appended to DVD-Video data in the VMG space. Also, the <vts> field represents a VTS space in DVD-Video, and designates the number of a VTS space by appending a num attribute in the <vts> tag. For example, <vts num="n"> represents the n-th VTS space. It indicates that a Vclick stream described in the <vts num="n"> field is appended to DVD-Video data which forms the n-th VTS space.

The <vmg> field includes zero or one or more <vmgm> tags. The <vmgm> field represents a VMG menu domain in the VMG space, and designates the number of a VMG menu domain by appending a num attribute in the <vmgm> tag. For example, <vmgm num="n"> indicates the n-th VMG menu domain. It indicates that a Vclick stream described in the <vmgm num="n"> field is appended to DVD-Video data which forms the n-th VMG menu domain.

Furthermore, the <vmgm> field includes zero or one or more <pgc> tags. The <pgc> field represents a PGC (Program Chain) in the VMG menu domain, and designates the number of a PGC by appending a num attribute in the <pgc> tag. For example, <pgc num="n"> indicates the n-th PGC. It indicates that a Vclick stream described in the <pgc num="n"> field is appended to DVD-Video data which forms the n-th PGC.

Next, the <vts> field includes zero or one or more <vts_tt> tags and zero or one or more <vtsm> tags. The <vts_tt> field represents a title domain in the VTS space, and designates the number of a title domain by appending a num attribute in the <vts_tt> tag. For example, <vts_tt num="n"> indicates the n-th title domain. It indicates that a Vclick stream described in the <vts_tt num="n"> field is appended to DVD-Video data which forms the n-th title domain.

The <vtsm> field represents a VTS menu domain in the VTS space, and designates the number of a VTS menu domain by appending a num attribute in the <vtsm> tag. For example, <vtsm num="n"> indicates the n-th VTS menu domain. It indicates that a Vclick stream described in the <vtsm num="n"> field is appended to DVD-Video data which forms the n-th VTS menu domain.

Moreover, the <vts_tt> or <vtsm> field includes zero or one or more <pgc> tags. The <pgc> field represents a PGC (Program Chain) in the title or VTS menu domain, and designates the number of a PGC by appending a num attribute in the <pgc> tag. For example, <pgc num="n"> indicates the n-th PGC. It indicates that a Vclick stream described in the <pgc num="n"> field is appended to DVD-Video data which forms the n-th PGC.

In the example shown in FIGS. 55 to 57, six Vclick streams are appended to the DVD-Video contents. For example, the initial (first) Vclick stream is designated using an <object> tag in <pgc num="1"> in <vmgm num="1"> in <vmg>. This indicates that the Vclick stream designated by the <object> tag is appended to the first PGC in the first VMG menu domain in the VMG space.

The <object> tag indicates the location of the Vclick stream using a "data" attribute. For example, in the embodiment of the present invention, the location of the Vclick stream is designated by "file://dvdrom:/dvd enav/vclick1.vck". Note that "file://dvdrom:/" indicates that the Vclick stream is present in the enhanced DVD disc, "dvd_enav/" indicates that the stream is present under a "DVD_ENAV" directory in the disc, and "vclick1.vck" indicates the file name of the Vclick stream. By including the <object> tag which describes the Vclick stream and that which describes a Vclick access table VCA, information of the Vclick access table VCA corresponding to the Vclick stream can be described. In the <object> tag, the location of the Vclick access table VCA is indicated using a "data" attribute. For example, in the embodiment of the present invention, the location of the Vclick access table VCA is designated by "file://dvdrom:/dvd enav/vclick1.ifo". Note that "file://dvdrom:/'" indicates that the Vclick access table VCA is present in the enhanced DVD disc, "dvd_enav/" indicates that the table is present under a "DVD_ENAV" directory in the disc, and "vclick1.ifo" indicates the file name of the Vclick access table VCA.

The next (second) Vclick stream is designated using an <object> tag in <vmgm num="n"> in <vmg>. This indicates that a Vclick stream designated by the <object> tag is appended to the whole first VMG menu domain in the VMG space. The <object> tag indicates the location of the Vclick stream using a "data" attribute. For example, in the embodiment of the present invention, the location of the Vclick stream is designated by "http://www.vclick.com/dvd enav/vclick2.vck". Note that "http://www.vclick.com/dvd enav/" indicates that the Vclick stream is present in an external server (201 in FIG. 2 or the like), and "vclick2.vck" indicates the file name of the Vclick stream.

As for a Vclick access table VCA, the location of the Vclick access table VCA is similarly indicated using a "data" attribute in an <object> tag. For example, in the embodiment of the present invention, the location of the Vclick access table VCA is designated by "http://www.vclick.com/dvd_enav/vclick2.ifo". Note that "http://www.vclick.com/dvd_enav/" indicates that the Vclick access table VCA is present in an external server (201), and "vclick2.ifo" indicates the file name of the Vclick access table VCA.

The third Vclick stream is designated using an <object> tag in <pgc num="1"> in <vts_tt num="1"> in <vts num-"1">. This indicates that the Vclick stream designated by the <object> tag is appended to the first PGC in the first title domain in the first VTS space. In the <object> tag, the location of the Vclick stream is indicated using a "data" attribute. For example, in the embodiment of the present invention, the location of the Vclick stream is designated by "file://dvdrom:/dvd_enav/vclick3.vck". Note that "file://dvdrom:/dvd_enav/" indicates that the Vclick stream is present under a "DVD_ENAV" directory in the disc, and "vclick3.vck" indicates the file name of the Vclick stream.

The fourth Vclick stream is designated using an <object> tag in <vts_tt num="n"> in <vts num="1">. This indicates that the Vclick stream designated by the <object> tag is appended to the n-th title domain in the first VTS space. In the <object> tag, the location of the Vclick stream is indicated using a "data" attribute. For example, in the embodiment of the present invention, the location of the Vclick stream is designated by "file://dvdrom:/dvd_enav/vclick4.vck". Note that "file://dvdrom:/dvd enav/" indicates that the Vclick stream is present under a "DVD_ENAV" directory in the disc, and "vclick4.vck" indicates the file name of the Vclick stream.

The fifth Vclick stream is designated using an <object> tag in <vtsm num="1"> in <vts num="1">. This indicates that the Vclick stream designated by the <object> tag is appended to the first VTS menu domain in the first VTS space. In the <object> tag, the location of the Vclick stream is indicated using a "data" attribute. For example, in the embodiment of the present invention, the location of the Vclick stream is designated by "file://dvdrom:/dvd_enav/vclick5.vck". Note that "file://dvdrom:/dvd_enav/" indicates that the Vclick stream is present under a "DVD_ENAV" directory in the disc, and "vclick5.vck" indicates the file name of the Vclick stream.

The sixth Vclick stream is designated using an <object> tag in <pgc num="1"> in <vtsm num="1"> in <vts num="1">. This indicates that the Vclick stream designated by the <object> tag is appended to the first PGC in the first VTS menu domain in the first VTS space. In the <object> tag, the location of the Vclick stream is indicated using a "data" attribute. For example, in the embodiment of the present invention, the location of the Vclick stream is designated by "file://dvdrom:/dvd enav/vclick6.vck". Note that "file://dvdrom:/dvd enav/" indicates that the Vclick stream is present under a "DVD_ENAV" directory in the disc, and "vclick6.vck" indicates the file name of the Vclick stream.

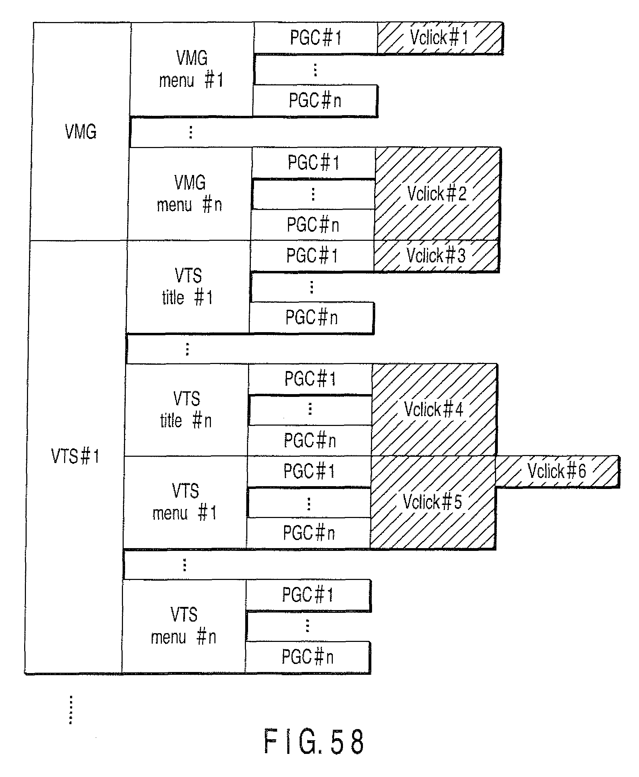

FIG. 58 shows the relationship between the Vclick streams VCS described in the above Vclick Info VCI description example, and the DVD-Video contents. As can be seen from FIG. 58, the aforementioned fifth Vclick stream VCS (Vclick#5) and sixth Vclick stream VCS (Vclick#6) are appended to the first PGC (PGC#1) in the first VTS menu domain (VTS menu #1) in the first VTS space (VTS#1). This represents that two Vclick streams VCS (Vclick#5 and Vclick#6) are appended to the DVD-Video contents. These streams (Vclick#5 and Vclick#6) can be switched by, e.g., the user or contents provider (contents author).

When the user switches these streams, a "Vclick switch button'" used to switch the Vclick streams VCS is provided to a remote controller attached to the apparatus shown in FIG. 2. With this button, the user can freely change two or more Vclick streams. Although not shown, this remote controller has the "Vclick switch button" in addition to buttons of a remote controller of a general DVD-Video player, and upon depression of this button, the player enters a Vclick stream switch mode. In this mode, when the user clicks the "Vclick switch button" or presses the up and down or right and left cursors on the remote controller (not shown), he or she can sequentially switch the designated stream number of a Vclick stream. Alternatively, a method of directly designating the stream number of a Vclick stream VCS using a ten-key pad of the remote controller (not shown) in this mode may be used.

On the other hand, when the contents provider changes Vclick streams VCS, a Vclick switching command (a description format is, e.g., "changeVclick()") is described in a Markup language, and this switch command is issued at a timing designated by the contents provider in the Markup language, thus freely changing two or more Vclick streams VCS.

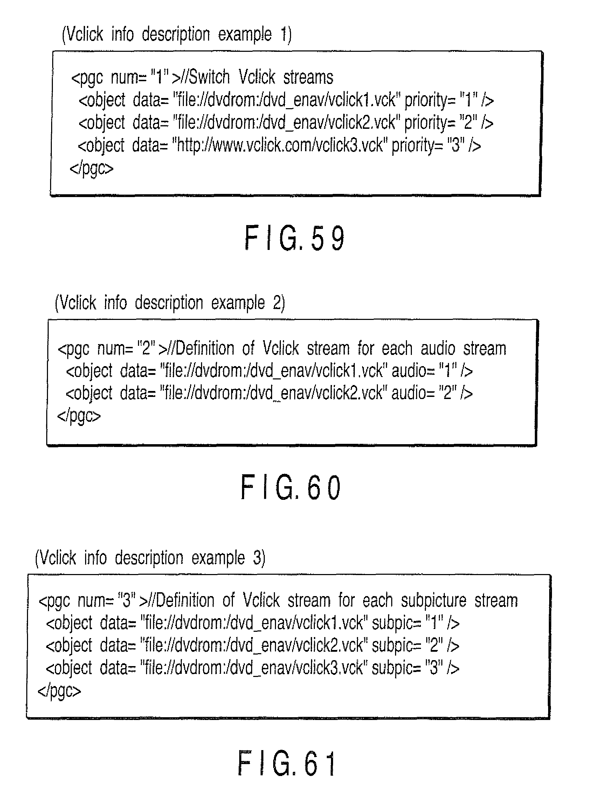

FIGS. 59 to 65 show other description examples (seven examples) of the Vclick information file VCI. In the first example (FIG. 59), two Vclick streams (Vclick streams #1 and #2) recorded on the disc and one Vclick stream (Vclick stream #3) recorded on the server (201 in FIG. 2 or the like) are appended to one PGC (PGC#1). As described above, these Vclick streams #1, #2, and #3 can be freely switched by the user's remote controller operation and also by the contents provider (using, e.g., the aforementioned "changeVclick()" command).

Upon switching Vclick streams by the contents provider in the above example, for example, when the playback apparatus (200 in FIG. 2 or the like) is instructed to play back Vclick stream #3 but is not connected to the external server (201), or when it is connected to the external server but cannot download Vclick stream #3 from the external server, Vclick stream #1 or #2 may be played back in place of Vclick stream #3. A "priority" attribute in the <object> tag indicates an order upon switching streams. For example, when the user (using "Vclick switch button") or the contents provider (using the Vclick switching command "changeVclick()") sequentially switches Vclick streams, as described above, the Vclick streams are switched like Vclick stream #1 → Vclick stream #2 → Vclick stream #3 → Vclick stream #1 → ... with reference to the order in the ""priority" attribute.

The contents provider can also select an arbitrary Vclick stream by issuing a command at a timing designated in the Markup language by the contents provider using a Vclick switching command (a description format is, e.g., "changeVclick(priority)"). For example, when a "changeVclick(2)" command is issued, Vclick stream #2 with a "priority" attribute = "2" is played back.

In the next example (FIG. 60), two Vclick streams (Vclick streams #1 and #2) recorded on the disc are appended to one PGC (PGC#2). Note that an "audio" attribute in the <object> tag corresponds to an audio stream number. This example indicates that when audio stream #1 of the DVD-Video contents is played back, Vclick stream #1 (Vclick1.vck) is played back synchronously, or when audio stream #2 of the DVD-Video contents is played back, Vclick stream #2 (Vclick2.vck) is played back synchronously.

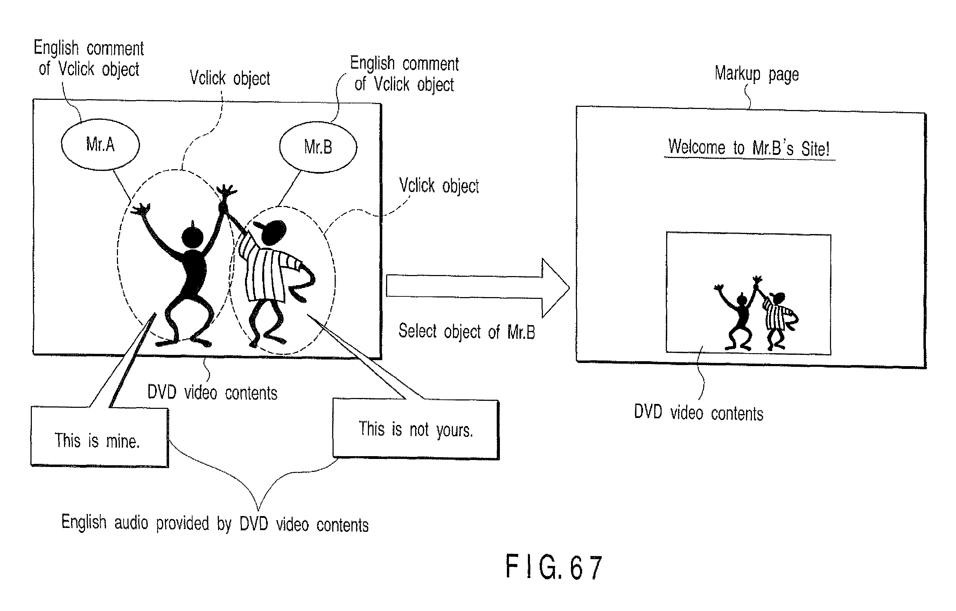

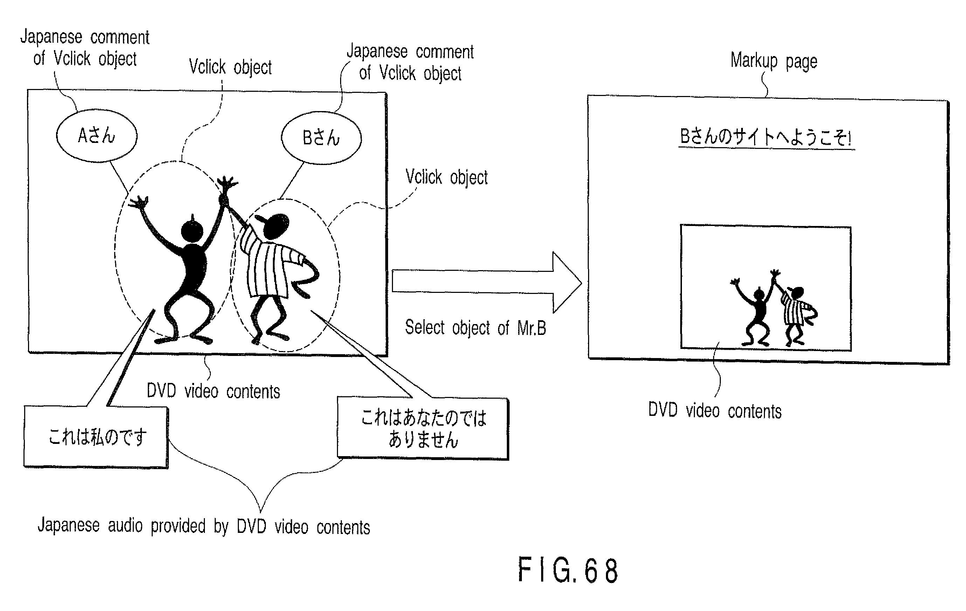

For example, when audio stream #1 of the video contents includes Japanese audio and audio stream #2 includes English audio, Vclick stream #1 is formed in Japanese, as shown in FIG. 68 (that is, a site or page that describes Japanese comments of Vclick objects or a Japanese site or page as an access destination after a Vclick object is clicked), and Vclick stream #2 is formed in English, as shown in FIG. 67 (that is, a site or page that describes English comments of Vclick objects or an English site or page as an access destination after a Vclick object is clicked), thus adjusting the audio language of the DVD-Video contents to the language of the Vclick stream. In practice, the playback apparatus refers to SPRM(1) (audio stream number) as a system parameter in the playback apparatus and searches this Vclick information file VCI for a corresponding Vclick stream and plays it back.

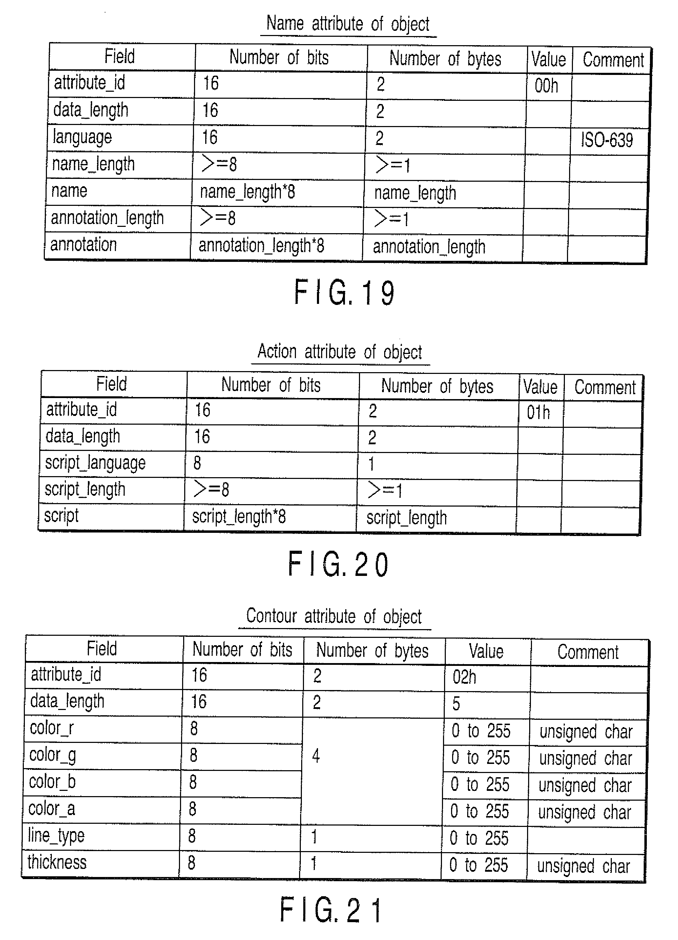

The above description is merely an example. For example, when the DVD-Video contents include English audio, a Japanese Markup page may be synchronously played back (a combination of the left side of FIG. 67 and the right side of FIG. 68 or the like). Contrary to this, when the DVD-Video contents include Japanese audio, an English Markup page may be synchronously played back. Such combination can be freely implemented depending on information to be described in a Script field of an action attribute (FIG. 20) of a Vclick object.

In the third example (FIG. 61), three Vclick streams (Vclick streams #1, #2, and #3) recorded on the disc are appended to one PGC (PGC#3). Note that a "subpic" attribute in the <object> tag corresponds to a sub-picture stream number (sub-picture number). This example indicates that when sub-picture stream #1 of the DVD-Video contents is played back, Vclick stream #1 (Vclick1.vck) is played back synchronously, when sub-picture stream #2 is played back, Vclick stream #2 (Vclick2.vck) is played back synchronously, and when sub-picture stream #3 is played back, Vclick stream #3 (Vclick3.vck) is played back synchronously.

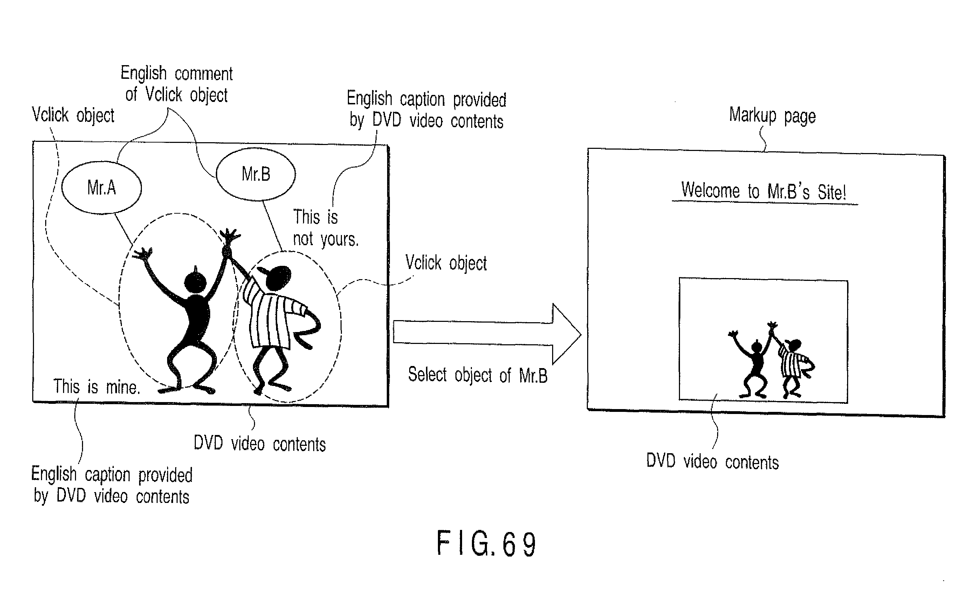

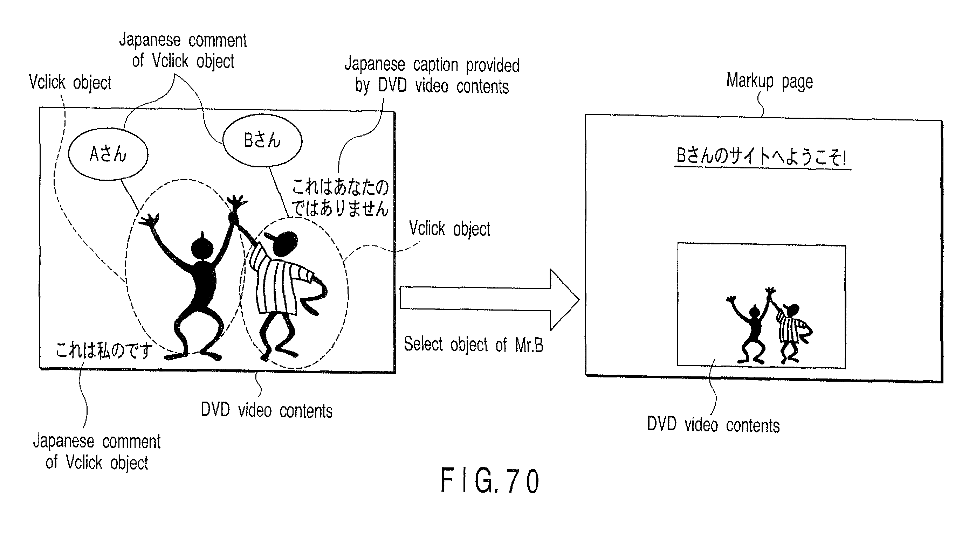

For example, when sub-picture stream #1 of the video contents includes a Japanese caption and sub-picture stream #3 includes an English caption, Vclick stream #1 is formed in Japanese, as shown in FIG. 70 (that is, a site or page that describes Japanese comments of Vclick objects or a Japanese site or page as an access destination after a Vclick object is clicked), and Vclick stream #3 is formed in English, as shown in FIG. 69 (that is, a site or page that describes English comments of Vclick objects or an English site or page as an access destination after a Vclick object is clicked), thus adjusting the caption language of the DVD-Video contents to the language of the Vclick stream. In practice, the playback apparatus refers to SPRM(2) (sub-picture stream number) as a system parameter in the playback apparatus and searches this Vclick information file VCI for a corresponding Vclick stream and plays it back. Note that the above description is merely an example. For example, when the DVD-Video contents include an English caption (or Japanese caption), a Markup page with a Japanese caption (or English caption) may be synchronously played back according to the user's request.

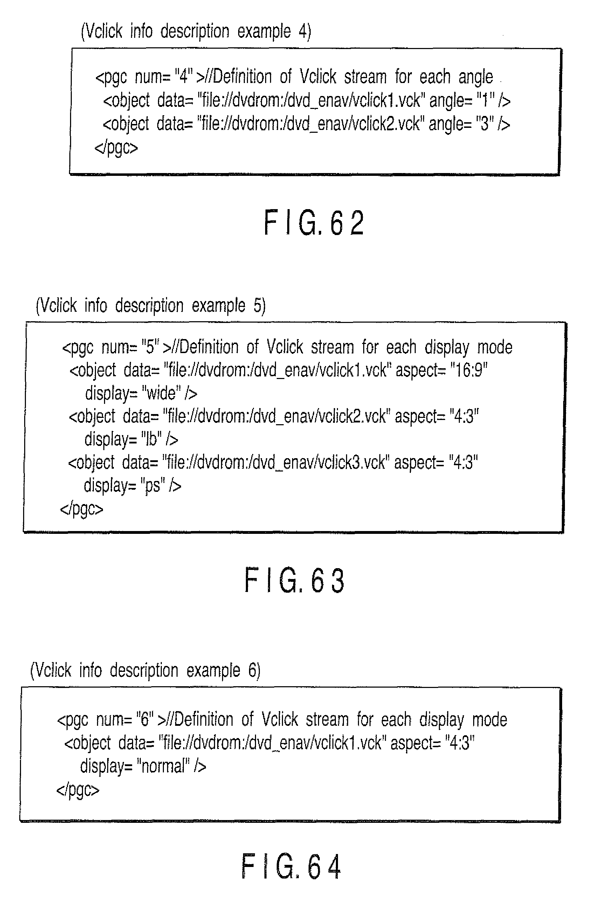

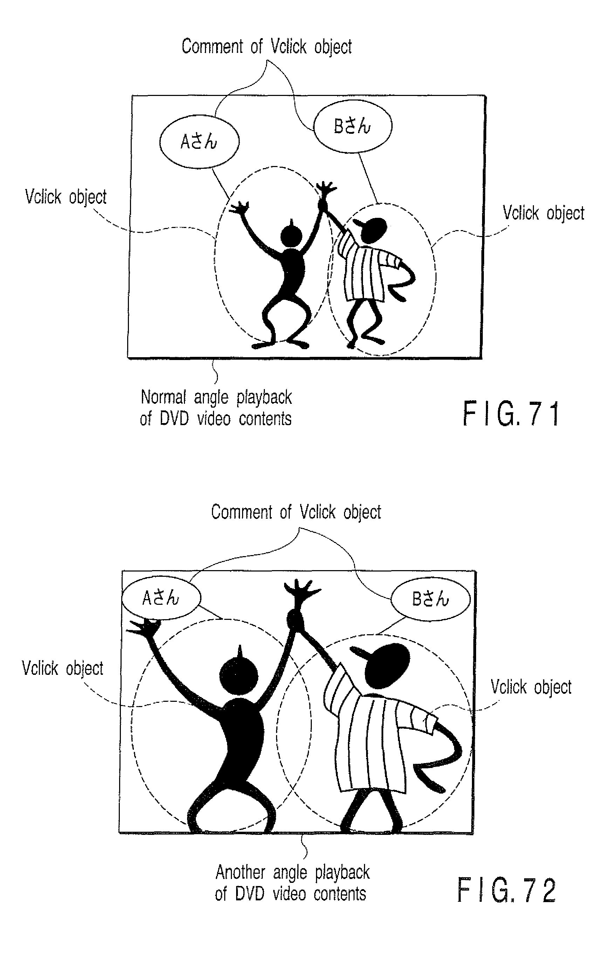

In the fourth example (FIG. 62), two Vclick streams (Vclick streams #1 and #2) recorded on the disc are appended to one PGC (PGC#4). Note that an "angle" attribute in the <object> tag corresponds to an angle number. This example indicates that when angle #1 of the video contents is played back, Vclick stream #1 (Vclick1.vck) is played back synchronously (FIG. 71), when angle #3 is played back, Vclick stream #2 (Vclick2.vck) is played back synchronously (FIG. 72), and when angle #2 is played back, no Vclick stream is played back. Normally, when angles are different, the positions of persons and the like to which Vclick objects are to be appended are different. Therefore, Vclick streams must be formed for respective angles (FIG. 83 to be described later corresponds to an example of this case). Alternatively, respective Vclick object data may be multiplexed on one Vclick stream 506, as shown in FIG. 5 above. In practice, the playback apparatus (corresponding to the client 200 in FIG. 2) refers to SPRM (3) (angle number) as a system parameter in the playback apparatus and searches this Vclick information file VCI for a corresponding Vclick stream VCS and plays it back.

In the fifth example (FIG. 63), three Vclick streams (Vclick streams #1, #2, and #3) recorded on the disc are appended to one PGC (PGC#5). Note that an "aspect" attribute in the <object> tag corresponds to a (default) display aspect ratio, and a "display" attribute in the <object> tag corresponds to a (current) display mode.

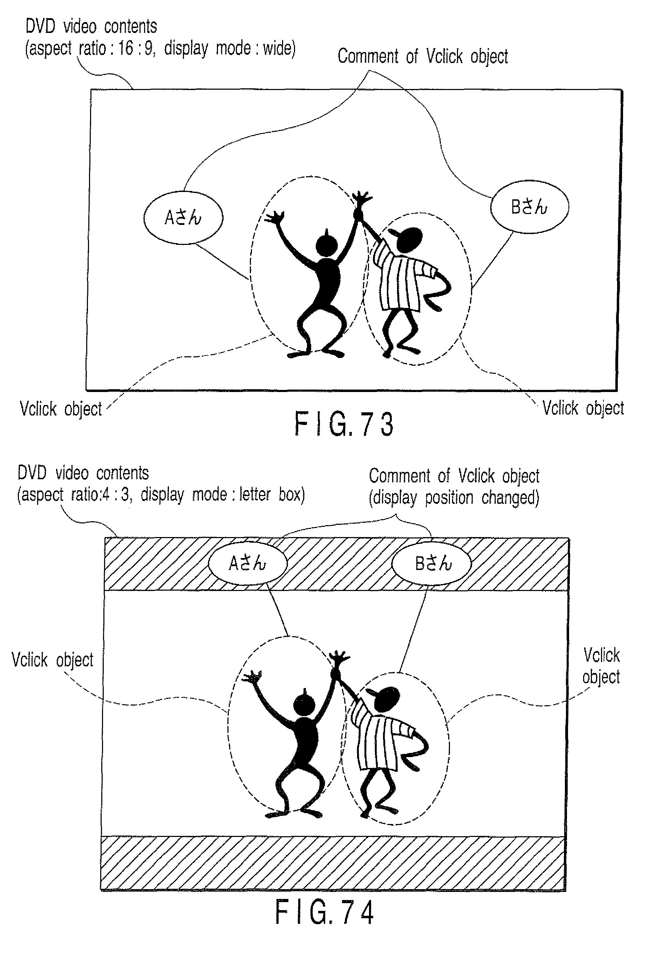

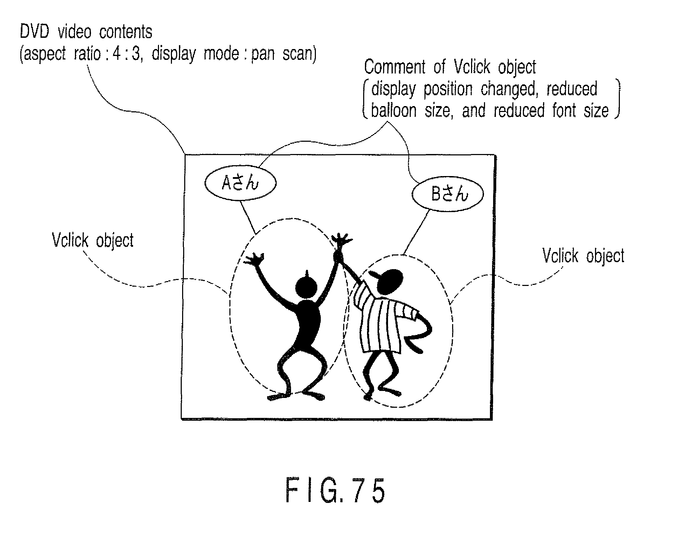

This example indicates that the DVD-Video contents themselves have a "16 : 9" aspect ratio, and are allowed to make a "wide" output to a TV monitor having a "16 : 9" aspect ratio, and a "letter box (1b)" or "pan scan (ps)" output to a TV monitor having a "4 : 3" aspect ratio. By contrast, when the (default) display aspect ratio is "16 : 9" and the (current) display mode is "wide", Vclick stream #1 is played back synchronously (FIG. 73), when the (default) display aspect ratio is "4 : 3" and the (current) display mode is "1b", Vclick stream #2 is played back synchronously (FIG. 74), and when the (default) display aspect ratio is "4 : 3" and the (current) display mode is "ps", Vclick stream #3 is played back synchronously (FIG. 75).

For example, a balloon as a Vclick object, which is displayed just beside a person, when the video contents are displayed at a "16 : 9" aspect ratio, can be displayed on the upper or lower portion (the upper or lower hatching portions in FIG. 74) of the screen in case of "letter box" display at a "4 : 3" aspect ratio. When this balloon is displayed in "pan scan" at a "4 : 3" aspect ratio, the right and left ends of the screen are not displayed. However, the balloon and object positions can be shifted to a displayable position, as shown in, e.g., FIG. 75.

Also, in accordance with the screen configuration, the balloon size may be decreased to prevent a balloon text display area from protruding the screen. Or the balloon text display area may be increased to obtain an appropriate display balance between the balloon text display area size and object size, or a text display balance of the balloon area may be optimized by decreasing or increasing the text size in the balloon text display area. When the text size in the balloon is decreased, text color is devised to set high contrast between text and its surrounding portion, so that text stands out with respect to the text surrounding portion (red text on a white background or yellow text on a black background), and/or a font is changed to bold, thus preventing the visibility drop of text.

In this manner, Vclick objects can be displayed in correspondence with the display state of the DVD-Video contents. In practice, the playback apparatus refers to "default display aspect ratio" and "current display mode" in SPRM(14) (player configuration for video) as a system parameter in the playback apparatus and searches the Vclick information file VCI for a corresponding Vclick stream VCS and plays it back.

In the sixth example (FIG. 64), one Vclick stream (Vclick stream #1) recorded on the disc is appended to one PGC (PGC#6). As in the above example, an "aspect" attribute in the <object> tag corresponds to a (default) display aspect ratio, and a "display" attribute in the <object> tag corresponds to a (current) display mode. In this example, the DVD-Video contents themselves have a "4 : 3" aspect ratio, and the Vclick stream is applied to a TV monitor having a "4 : 3" aspect ratio when the contents are output in a "normal" mode.

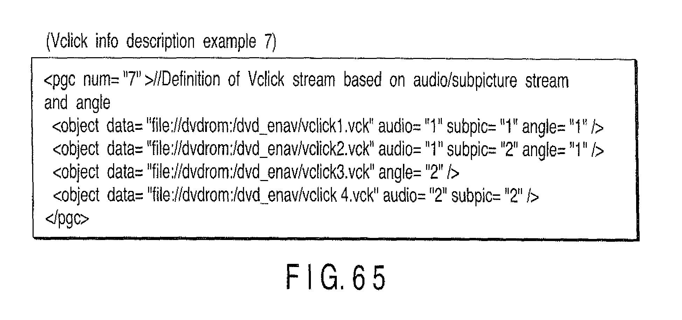

Finally, the aforementioned functions can be used in combination as shown in an example (FIG. 65). Four Vclick streams (Vclick streams #1, #2, #3, and #4) recorded on the disc are appended to one PGC (PGC#7). In this example, when audio stream #1, sub-picture stream #1, and angle #1 of the DVD-Video contents are played back, Vclick stream #1 (Vclick1.vck) is played back synchronously; when audio stream #1, sub-picture stream #2, and angle #1 are played back, Vclick stream #2 (Vclick2.vck) is played back synchronously; when angle #2 is played back, Vclick stream #3 (Vclick3.vck) is played back synchronously; and when audio stream #2 and sub-picture stream #2 are played back, Vclick stream #4 (Vclick4.vck) is played back synchronously.

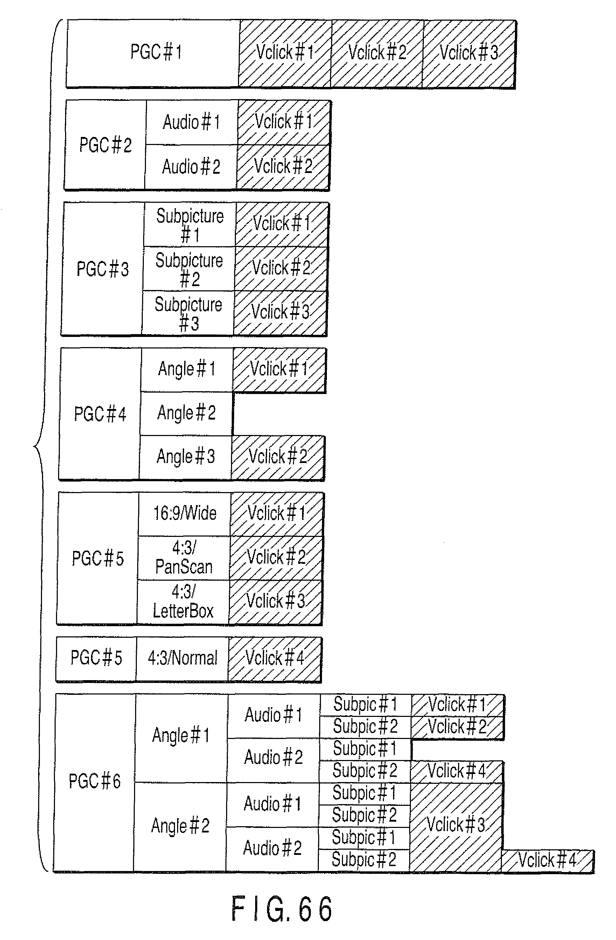

FIG. 66 shows the relationship between the PGC data of the DVD-Video contents and Vclick streams to be appended to their attributes in association with the seven examples (FIGS. 59 to 65). In the example of FIG. 66, Vclick streams VCS are roughly assigned to respective PGC data, and the assignment method is segmented in accordance with the attributes and the like of respective PGC data.

More specifically, streams Vclick#1 to Vclick#3 are assigned to whole PGC#1 (corresponding to FIG. 59). This example can be configured as follows. That is, stream Vclick#1 is, e.g., an English page, stream Vclick#2 is, e.g., a Japanese page, and stream Vclick#3 is, e.g., a Chinese page, so that these streams can be appropriately switched and selected (the configuration that selects a stream of meta data in accordance with the PGC playback period of the video contents).

In PGC#2 of FIG. 66, stream Vclick#1 is assigned to its audio #1, and stream Vclick#2 is assigned to its audio #2 (corresponding to FIG. 60). In PGC#3, stream Vclick#1 is assigned to its sub-picture #1 (sub-picture such as a caption or the like), stream Vclick#2 is assigned to its sub-picture #2, and stream Vclick#3 is assigned to its sub-picture #3 (corresponding to FIG. 61). In PGC#4, stream Vclick#1 is assigned to its angle #1, no Vclick stream is assigned to angle #2 and stream Vclick#2 is assigned to its angle #3 (corresponding to FIG. 62). In PGC#5, stream Vclick#1 is assigned in case of "wide" at the display aspect ratio 16 : 9, stream Vclick#2 is assigned in case of "pan scan" at the display aspect ratio 4 : 3, and stream Vclick#3 is assigned in case of "letter box" at the display aspect ratio 4 : 3 (corresponding to FIG. 63). In PGC#6, stream Vclick#4 is assigned when the display aspect ratio is 4 : 3 as normal one (corresponding to FIG. 64).

In PGC#7 in FIG. 66, stream Vclick#1 (e.g., English page) is assigned to sub-picture #1 (e.g., English caption) which links to audio #1 (e.g., English audio) of angle #1, and stream Vclick#2 (e.g., Japanese page) is assigned to sub-picture #2 (e.g., Japanese caption) which links to audio #1 (e.g., English audio) of angle #1. Also, no Vclick stream is assigned to sub-picture #1 (English caption) that links to audio #2 (e.g., Japanese audio) of angle #1, and stream Vclick#4 (e.g., another Japanese page) is assigned to sub-picture #2 (Japanese caption) which links to audio #2 (Japanese audio) of angle #1. Furthermore, stream Vclick#3 (e.g., Chinese page) is assigned to sub-picture #1 (English caption) and sub-picture #2 (Japanese caption) which link to audio #1 (English audio) of angle #2, and stream Vclick#3 (e.g., Chinese page) is assigned to sub-picture #1 (English caption) and sub-picture #2 (Japanese caption) which link to audio #2 (Japanese audio) of angle #2. Of these streams, stream Vclick#4 (another Japanese page) is further assigned to sub-picture #2 (Japanese caption) which links to audio #2 (Japanese audio) of angle #2, in addition to stream Vclick#3 (Chinese page). For sub-picture #2 (Japanese caption) which links to audio #2 (Japanese audio) of angle #2, stream Vclick#3 (Chinese page) or Vclick#4 (another Japanese page) can be switched and selected.

When an object to be synchronously played back with Vclick streams is DVD-Video contents, Vclick streams can be switched for respective titles (VTS) of DVD-Video as a largest unit, and can be switched for respective parts-of-title (chapters) as a smaller unit. Also, Vclick streams can be switched for respective program chains (PGC) as a still smaller unit, for respective programs (PG) as a yet smaller unit, or for respective cells as a smallest unit.

When Vclick streams according to the embodiment of the present invention are applied to a recording/playback system such as a DVD-VR recorder, DVD-SR recorder, HD-DVD recorder, or the like, Vclick streams may be switched for respective user-defined PGC data (playlists) or respective entry points marked locally in programs that form PGC data.

The playback apparatus (enhanced DVD player) according to the embodiment of the present invention can sequentially change Vclick stream files to be appended in correspondence with the playback state of the DVD-Video contents by loading the Vclick information file VCI in advance or referring to that file as needed, prior to playback of the DVD-Video contents. In this manner, a high degree of freedom can be assured upon forming Vclick streams, and the load on authoring can be reduced.

By increasing the number of files (the number of streams) of unitary Vclick contents, and decreasing each file size, an area (the buffer 209 in the apparatus of FIG. 2) required for the playback apparatus to store Vclick streams VCS can be reduced.

By decreasing the number of files (i.e., forming one stream to include a plurality of Vclick data) although the file size increases, Vclick data can be switched smoothly when the playback state of the DVD-Video contents has changed (since the information size of buffered Vclick data is large).

(Overview of Data Structure and Access Table)

A Vclick stream VCS includes data associated with regions of objects (e.g., persons, articles, and the like) that appear in the moving picture recorded on the moving picture data recording medium 231, display methods of the objects in the client 200, and data of actions to be taken by these objects when the user designates them. An overview of the structure of Vclick data and its elements will be explained below.

Object region data as data associated with a region of an object (e.g., a person, article, or the like) that appears in the moving picture will be explained first.

FIG. 3 is a view for explaining the structure of object region data. Reference numeral 300 denotes a locus, which is formed by a region of one object, and is expressed on a three-dimensional (3D) coordinate system of X (the horizontal coordinate value of a video picture), Y (the vertical coordinate value of the video picture), and Z (the time of the video picture). An object region is converted into object region data for each predetermined time range (e.g., between 0.5 sec to 1.0 sec, between 2 sec to 5 sec or the like). In FIG. 3, one object region 300 is converted into five object region data 301 to 305, which are stored in independent Vclick access units (AU: to be described later). As a conversion method at this time, for example, MPEG-4 shape encoding, an MPEG-7 spatio-temporal locator, or the like can be used. Since the MPEG-4 shape encoding and MPEG-7 spatio-temporal locator are schemes for reducing the data size by exploiting temporal correlation among object regions, they suffer problems: data cannot be decoded halfway, and if data at a given time is omitted, data at neighboring times cannot be decoded. Since the region of the object that continuously appears in the moving picture for a long period of time, as shown in FIG. 3, is converted into data by dividing it in the time direction, easy random access is allowed, and the influence of omission of partial data can be reduced. Each Vclick_AU is effective in only a specific time interval in a moving picture. A time interval in which a Vclick_AU is effective is called a lifetime of the Vclick_AU.

FIG. 4 shows the structure of one unit (Vclick_AU), which can be accessed independently, in a Vclick stream VCS used in the embodiment of the present invention. Reference numeral 400 denotes object region data. As has been explained using FIG. 3, the locus of one object region in a given time interval is converted into data. The time interval in which the object region is described is called an active time of that Vclick_AU. Normally, the active time of a Vclick_AU is equal to the lifetime of that Vclick_AU. However, the active time of a Vclick_AU can be set as a part of the lifetime of that Vclick_AU.

Reference numeral 401 denotes a header of the Vclick_AU. The header 401 includes an ID used to identify the Vclick_AU, and data used to specify the data size of that AU. Reference numeral 402 denotes a time stamp which indicates that of the start of the lifetime of this Vclick_AU. Since the active time and lifetime of Vclick_AU are normally equal to each other, the time stamp also indicates a time of the moving picture corresponding to the object region described in the object region data 400. As shown in FIG. 3, since the object region covers a certain time range, the time stamp 402 normally describes the time of the head of the object region. Of course, the time stamp may describe the time interval or the time of the end of the object region described in the object region data. Reference numeral 403 denotes object attribute information, which includes, e.g., the name of an object, an action description upon designation of the object, a display attribute of the object, and the like. These data in the Vclick_AU will be described in detail later. The server (201 in FIG. 2 or the like) preferably records Vclick_AUs in the order of time stamps so as to facilitate transmission.

FIG. 5 is a view for explaining the method of generating a Vclick stream VCS by arranging a plurality of AUs in the order of time stamps. In FIG. 5, assume that there are two camera angles, i.e., camera angles 1 and 2, and a moving picture to be displayed is switched when the camera angle is switched at the client. Also, assume that there are two selectable language modes: Japanese and English, and different Vclick data are prepared in correspondence with these languages.

Referring to FIG. 5, Vclick_AUs for camera angle 1 and Japanese are 500, 501, and 502, and that for camera angle 2 and Japanese is 503. Also, Vclick_AUs for English are 504 and 505. Each of the AUs 500 to 505 is data corresponding to one object in the moving picture. That is, as has been explained above using FIGS. 3 and 4, meta data associated with one object is made up of a plurality of Vclick_AUs (in FIG. 5, one rectangle represents one AU). The abscissa of FIG. 5 corresponds to a time in the moving picture, and the AUs 500 to 505 are plotted in correspondence with the times of appearance of the objects.

Temporal divisions of respective Vclick_AUs may be arbitrarily determined. However, when the divisions of Vclick_AUs are aligned to all objects, as shown in FIG. 5, data management becomes easy. Reference numeral 506 denotes a Vclick stream VCS formed of these Vclick_AUs (500 to 505). The Vclick stream VCS is formed by arranging Vclick_AUs in the order of time stamps after a header 507.

Since the selected camera angle is more likely to be switched by the user during viewing, the Vclick stream VCS is preferably prepared by multiplexing Vclick_AUs of different camera angles in this way. This is because quick display switching is allowed at the client 200 side. For example, when Vclick data is stored in the server 201, a Vclick stream VCS including Vclick_AUs of a plurality of camera angles is transmitted intact to the client 200. In this way, since a Vclick_AU corresponding to a currently viewed camera angle always arrives the client, a camera angle can be switched instantaneously. Of course, setup information of the client 200 may be sent to the server 201, and only a required Vclick_AU may be selectively transmitted from a Vclick stream VCS. In this case, since the client must communicate with the server (201), the process delays slightly (although this process delay problem can be solved if high-speed means such as an optical fiber or the like is used in a communication).

On the other hand, since attributes such as a moving picture title, PGC of DVD-Video, the aspect ratio of the moving picture, viewing region, and the like are not so frequently changed, they are preferably prepared as independent Vclick streams VCS so as to lighten the process of the client 200 and to reduce the load on the network. A Vclick stream VCS to be selected of a plurality of Vclick streams VCS can be determined with reference to the Vclick information file VCI, as has already been described above.

Another Vclick_AU selection method will be described below. A case will be examined below wherein the client 200 downloads the Vclick stream (VCS) 506 from the server 201, and uses only required access units (AUs) on the client 200 side. In this case, IDs used to identify required Vclick AUs may be assigned to respective AUs. Such ID is called a filter ID.

The conditions of the required access units (AUs) are described in, e.g., the Vclick information file VCI as follows:

```
<pgc num="7">
//definition of Vclick stream VCS by audio/subpicture
stream and angle
    <object    data="file://dvdrom:/dvd_enav/vclick1.
vck" audio="1" subpic="1" angle="1"/>
    <object    data="file://dvdrom:/dvd_enav/vclick1.
vck" audio="3" subpic="2" angle="1"/>
</pgc>
```

In this case, two different filtering conditions are described for one Vclick stream VCS. This indicates that two different Vclick_AUs having different attributes can be selected from a single Vclick stream VCS in accordance with the setups of system parameters at the client.

Note that the Vclick information file VCI may be present on the moving picture data recording medium (e.g., the enhanced DVD-Video disc in FIG. 53) or may be downloaded from the server 201 to the client 200 via the network. The Vclick information file VCI is normally supplied from the same medium as that of the Vclick streams VCS such as the moving picture data recording medium (enhanced DVD-Video disc), server (201), or the like.

If access units (AUs) have no filter IDs, meta the data manager 210 checks the time stamps, attributes, and the like of AUs to select AUs that match the given conditions, thereby identifying the required Vclick_AUs.

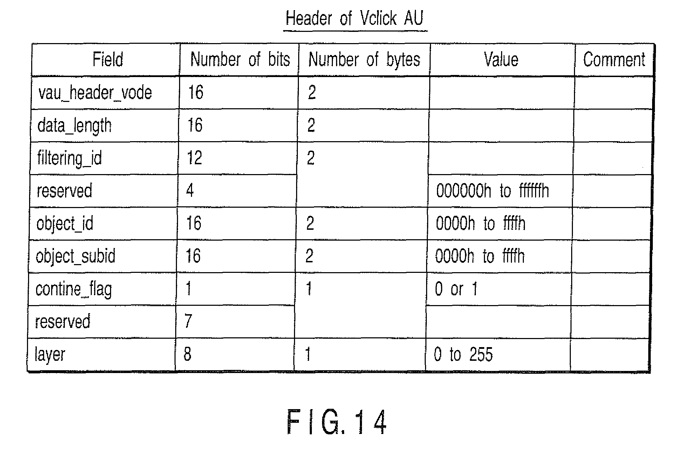

An example using the filter IDs will be explained according to the above description. In the above conditions, "audio" represents an audio stream number, which is expressed by a 4-bit numerical value. Likewise, 4-bit numerical values are assigned to sub-picture number subpic and angle number angle. In this way, the states of three parameters can be expressed by a 12-bit numerical value. That is, three parameters audio="3", subpic="2", and angle="1" can be expressed by 0x321 (hex). This value is used as a filter ID. That is, each Vclick_AU has a 12-bit filter ID in a Vclick_AU header (see filtering_id in FIG. 14). This method defines a filter ID as a combination of numerical values by assigning numerical values to independent parameter values used to identify each AU. Note that the filter ID may be described in a field other than the Vclick_AU header.

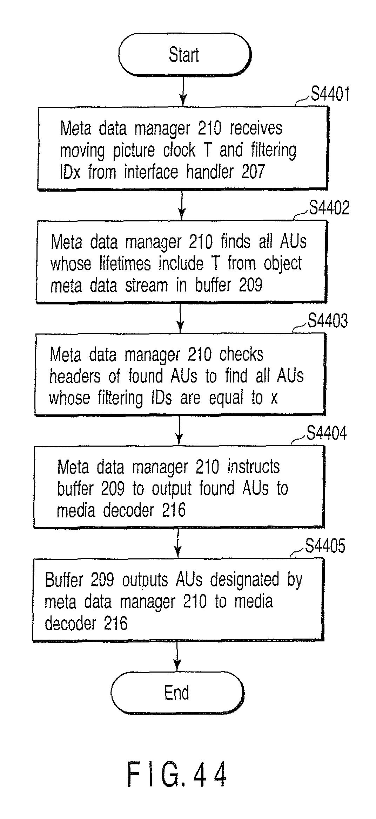

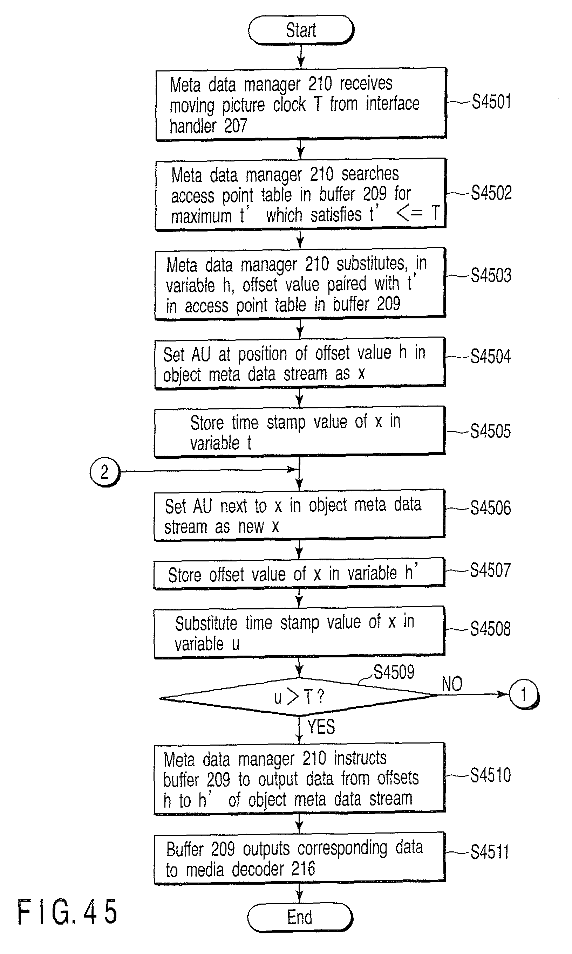

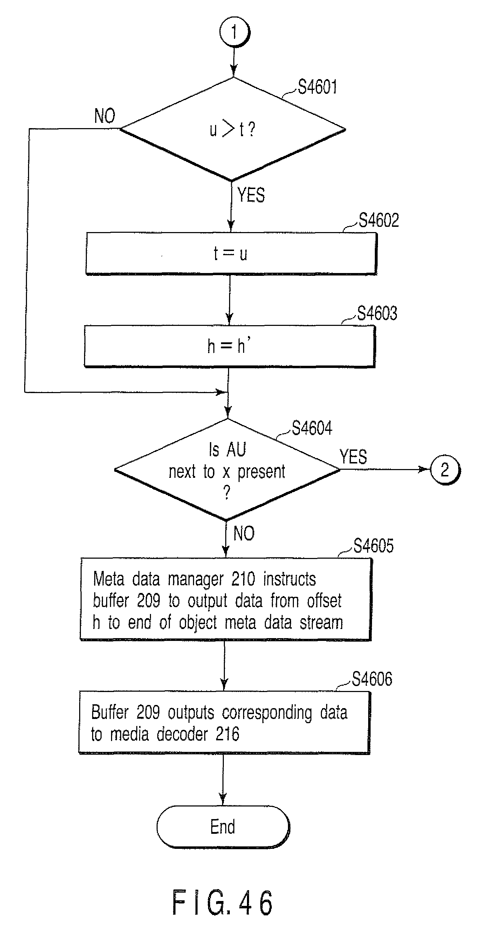

FIG. 44 shows the filtering operation of the client 200. The meta data manager 210 receives a moving picture clock value T and filter ID x from the interface handler 207 (step S4401). The meta data manager 210 finds out all Vclick_AUs whose lifetimes include the moving picture clock value T from a Vclick stream VCS stored in the buffer 209 (step S4402). In order to find out such AUs, procedures shown in FIGS. 45 and 46 can be used using the Vclick access table VCA. The meta data manager 210 checks the Vclick_AU headers, and sends only AUs with the same filter ID as x to the media decoder 216 (steps S4403 to S4405).

Vclick_AUs which are sent from the buffer 209 to the meta data decoder 217 with the aforementioned procedures have the following properties:

i) All these AUs have the same lifetime, which includes the moving picture clock T.
ii) All these AUs have the same filter ID x.

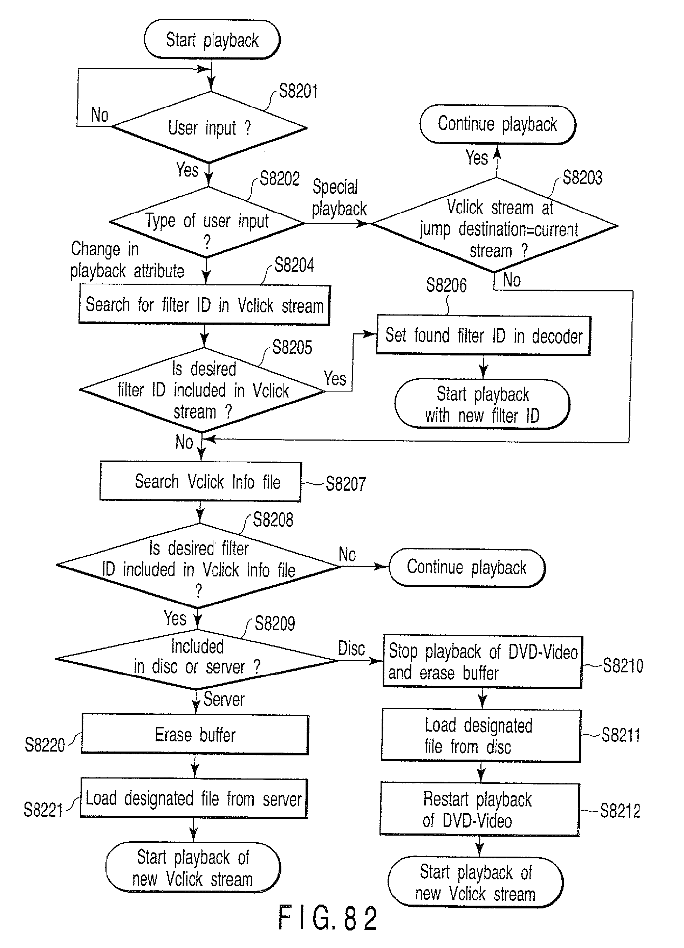

AUs in the object meta data stream which satisfy the above conditions i) and ii) are not present except for these AUs. Note that identifying and selecting a specific AU by a given filter ID is to also select a Vclick stream including the selected AU. On the other hand, the Vclick stream to be played back can also be selected with reference to the Vclick Info VCI file (see the process in step S8207 in FIG. 82 to be described later).

In the above description, the filter ID is defined by a combination of values assigned to parameters. Alternatively, the filter ID may be directly designated in the Vclick information file VCI. For example, the filter ID is defined in an IFO file as follows:

```
<pgc num="5">
<param angle="1">
       <object    data="file://dvdrom:/dvd_enav/vclick1.
vck" filter_id="3"/>
</param>
<param angle="3">
       <object    data="file://dvdrom:/dvd_enav/vclick2.
vck" filter_id="4"/>
</param>
<param aspect="16:9" display="wide">
       <object    data="file://dvdrom:/dvd_enav/vclick1.
vck" filter_id="2"/>
</param>
</pgc>
```

The above description indicates that Vclick streams VCS and filter ID values are determined based on designated parameters. Selection of Vclick_AUs by the filter ID and transfer of AUs from the buffer 209 to the media decoder 217 are done in the same procedures as in FIG. 44. Based on the designation of the Vclick information file VCI, when the angle number of the player is "3", only Vclick_AUs whose filter ID value is equal to "4" are sent from a Vclick stream VCS stored in the file "vclick2.vck" in the buffer 209 to the media decoder 217.

When Vclick data is stored in the server 201, and a moving picture is to be played back from its head, the server 201 need only distribute a Vclick stream VCS in turn from the head to the client. However, if a random access has been made, data must be distributed from the middle of the Vclick stream VCS. At this time, in order to quickly access a desired position in the Vclick stream VCS, a Vclick access table VCA is required.

FIG. 6 shows an example of the Vclick access table VCA. This table is prepared in advance, and is recorded in the server 201. This table can also be stored in the same file as the Vclick information file VCI. Reference numeral 600 denotes a time stamp sequence, which lists time stamps of the moving picture. Reference numeral 601 denotes an access point sequence, which lists offset values from the head of a Vclick stream VCS in correspondence with the time stamps of the moving picture. If a value corresponding to the time stamp of the random access destination of the moving picture is not stored in the Vclick access table VCA, an access point of a time stamp with a value close to that time stamp is referred to, and a transmission start location is sought while referring to time stamps in the Vclick stream VCS near that access point. Alternatively, the Vclick access table VCA is searched for a time stamp of a time before that of the random access destination of the moving picture, and the Vclick stream VCS is transmitted from an access point corresponding to the time stamp.

The server 201 stores the Vclick access table VCA and uses it for convenience to search for Vclick data to be transmitted in response to random access from the client. However, the Vclick access table VCA stored in the server 201 may be downloaded to the client 200, which may search for a Vclick stream VCS. Especially, when Vclick streams VCS are simultaneously downloaded from the server 201 to the client 200, Vclick access tables VCA are also simultaneously downloaded from the server 201 to the client 200.

On the other hand, a moving picture recording medium such as a DVD or the like which records Vclick streams VCS may be provided. In this case as well, it is effective for the client 200 to use the Vclick access table VCA so as to search for data to be used in response to random access of playback contents. In such case, the Vclick access tables VCA are recorded on the moving picture recording medium as in Vclick streams VCS, and the client 200 reads out and uses the Vclick access table VCA of interest from the moving picture recording medium onto its internal main memory or the like.

Random playback of Vclick streams VCS, which is produced upon random playback of a moving picture or the like, is processed by the meta data decoder 217. In the Vclick access table VCA shown in FIG. 6, a time stamp time is time information which has a time stamp format of a moving picture recorded on the moving picture recording medium. For example, when the moving picture is compressed by MPEG-2 upon recording, time has an MPEG-2 PTS (Presentation Time Stamp) format. Furthermore, when the moving picture has a navigation structure of titles, program chains, and the like as in DVD, parameters (title numbers TTN, video title set numbers VTS_TTN, title program chain numbers TT_PGCN, part-of-title numbers PTTN, and the like) that express them are included in the format of time.

Assume that some natural totally ordered relationship is defined for a set of time stamp values. For example, as for PTS, a natural ordered relationship as a time can be introduced. As for time stamps including DVD parameters, the ordered relationship can be introduced according to a natural playback order of the DVD. Each Vclick stream VCS satisfies the following conditions:

i) Vclick_AUs in the Vclick stream VCS are arranged in ascending order of time stamp. At this time, the lifetime of each Vclick_AU is determined as follows: Let t be the time stamp value of a given AU. A time stamp values u of AUs after the given AU satisfy $u \geq t$ under the above condition. Let t' be a minimum one of such "u"s, which satisfies $u \neq t$. A period which has the time t as the start time and t' as the end time is defined as the lifetime of the given AU. If there is no AU which has the time stamp value u that satisfies $u > t$ after the given AU, the end time of the lifetime of the given AU matches the end time of the moving picture.

ii) The active time of each Vclick_AU corresponds to the time range of the object region described in the object region data included in that Vclick_AU.

Note that the following constraint associated with the active time for a Vclick stream VCS:

The active time of a Vclick_AU is included in the lifetime of that AU.

A Vclick stream VCS which satisfies the above constraints i) and ii) has the following good properties:

First, high-speed random access of the Vclick stream VCS can be made, as will be described later. Second, a buffer process upon playing back the Vclick stream VCS can be simplified. The buffer (209 in FIG. 2 or the like) stores the Vclick stream VCS for respective Vclick AUs, and erases AUs from those which have larger time stamps. If there are no two assumptions above, a large buffer and complicated buffer management are required so as to hold effective AUs on the buffer. The following description will be given under the assumption that the Vclick stream VCS satisfies the above two conditions i) and ii).

In the Vclick access table VCA shown in FIG. 6, an access point offset indicates a position on a Vclick stream VCS. For example, the Vclick stream VCS is a file, and offset indicates a file pointer value of that file. The relationship of the access point offset, which forms a pair with the time stamp time, is as follows:

i) A position indicated by offset is the head position of a given Vclick_AU.
ii) A time stamp value of that AU is equal to or smaller than the value of time.
iii) A time stamp value of an AU immediately before that AU is truly smaller than time.

In the Vclick access table VCA, "time"s may be arranged at arbitrary intervals but need not be arranged at equal intervals. However, they may be arranged at equal intervals in consideration of convenience for a search process and the like.

FIGS. 45 and 46 show the practical search procedures using the Vclick access table VCA. When a Vclick stream VCS is downloaded in advance from the server 201 to the buffer 209, a Vclick access table VCA is also downloaded from the server 201 and is stored in the buffer 209. When both the Vclick stream VCS and Vclick access table VCA are stored in the moving picture data recording medium 231, they are loaded from the disc device 230 and are stored in the buffer 209.

Upon reception of the moving picture clock T from the interface handler 207 (step S4501), the meta data manager 210 searches time of the Vclick access table VCA stored in the buffer 209 for maximum time t' which satisfies t' <= T (step S4502). A high-speed search can be conducted using, e.g., binary search as a search algorithm. The offset value which forms a pair with the obtained time t' in the Vclick access table VCA is substituted in a variable h (step S4503). The meta data manager 210 finds AUx which is located at the h-th byte position from the head of the Vclick stream VCS stored in the buffer 209 (step S4504), and substitutes the time stamp value of x in a variable t (step S4505). According to the aforementioned conditions, since t is equal to or smaller than t', t <= T.

The meta data manager 210 checks Vclick_AUs in the Vclick stream VCS in turn from x and sets the next AU as new x (step S4506). The offset value of x is substituted in a variable h' (step S4507), and the time stamp value of x is substituted in the variable u (step S4508). If u > T (YES in step S4509), the meta data manager 210 instructs the buffer 209 to send data from the offsets h to h' of the Vclick stream VCS to the media decoder 216 (steps S4510 and S4511). On the other hand, if u <= T (NO in step S4509) and u > T (YES in step S4601), the value of t is updated by u (i.e., t = u) (step S4602). Then, the value of the variable h is updated by h' (i.e., h = h') (step S4603).

If the next AU is present on the Vclick stream VCS (i.e., if x is not the last AU) (YES in step S4604), the next AU is set as new x to repeat the aforementioned procedures (the flow returns to step S4506 in FIG. 45). If x is the last Vclick_AU of the Vclick stream VCS of interest (NO in step S4604), the meta data manager 210 instructs the buffer 209 to send data from the offset h to the end of the Vclick stream VCS to the media decoder 216 (steps S4605 and S4606).

With the aforementioned procedures, Vclick_AUs sent from the buffer 209 to the media decoder 216 apparently have the following properties:

   i) All Vclick_AUs have the same lifetime. In addition, the moving picture clock T is included in this lifetime.
   ii) Vclick_AUs in the Vclick stream VCS which satisfy the above condition i) are not present except for these AUs.

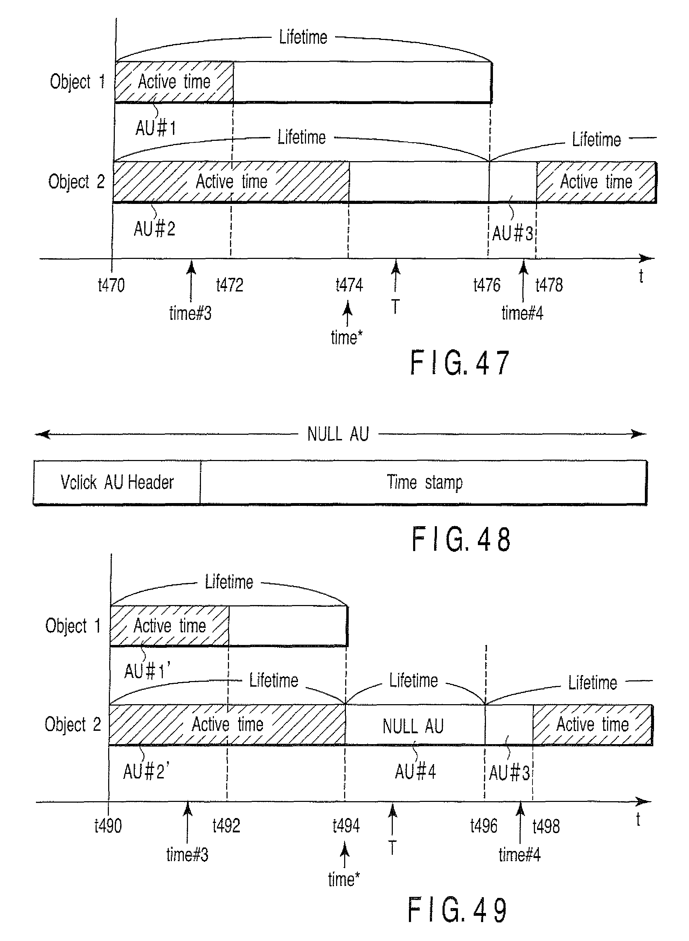

The lifetime of each Vclick_AU in the Vclick stream VCS includes the active time of that AU, but they do not always match. In practice, a case shown in FIG. 47 is possible. The lifetimes of AU#1 and AU#2 which respectively describe objects 1 and 2 are up to the start time (t476) of the lifetime of AU#3. However, the active times of respective AUs do not match their lifetimes (t476 ≠ t474 ≠ t472 in the example of FIG. 47).

A Vclick stream VCS in which AUs are arranged in the order of #1, #2, and #3 will be examined. Assume that the moving picture clock T is designated in the example of FIG. 47. According to the procedures shown in FIGS. 45 and 46, AU#1 and AU#2 are sent from this Vclick stream VCS to the media decoder 216.

Since the media decoder 216 can recognize the active times of the received Vclick_AUs, random access can be implemented by this process. However, in practice, since data transfer from the buffer 209 and a decode process in the media decoder 216 take place during a time T (within the lifetime but during the time from t474 to t476 as a non-active time) which no object is present, the calculation efficiency of hardware at the client 200 drops. This problem can be solved by introducing a special Vclick_AU called a NULL_AU.

FIG. 48 shows the structure of the NULL_AU. The NULL_AU does not have any object region data unlike a normal Vclick_AU. Therefore, the NULL_AU has only a lifetime, but does not have any active time. The header of the NULL_AU includes a flag indicating that the AU of interest is the NULL_AU. The NULL_AU can be inserted within a time range (t494 to t496 in the example of FIG. 49) where no active time of an object (object 2 in the example of FIG. 49) is present in a Vclick stream VCS.

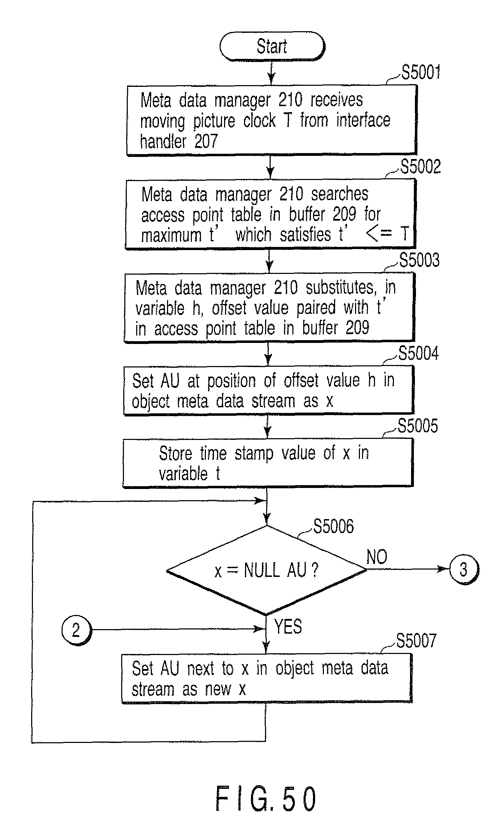

When the meta data manager 210 detects based on the flag (not shown) included in the header ("Vclick AU Header" in FIG. 48) that the AU of interest is "NULL_AU", it does not output that NULL_AU to the media decoder 216. When such NULL_AU is introduced, FIG. 47 changes like, for example, FIG. 49. AU#4 in FIG. 49 is a NULL_AU. In this case, in a Vclick stream VCS, Vclick_AUs are arranged in the order of AU#1', AU#2', AU#4, and AU#3. FIGS. 50, 51, and 52 show the operation of the meta data manager 210 corresponding to FIGS. 45 and 46 in association with a Vclick stream VCS including a NULL_AU.

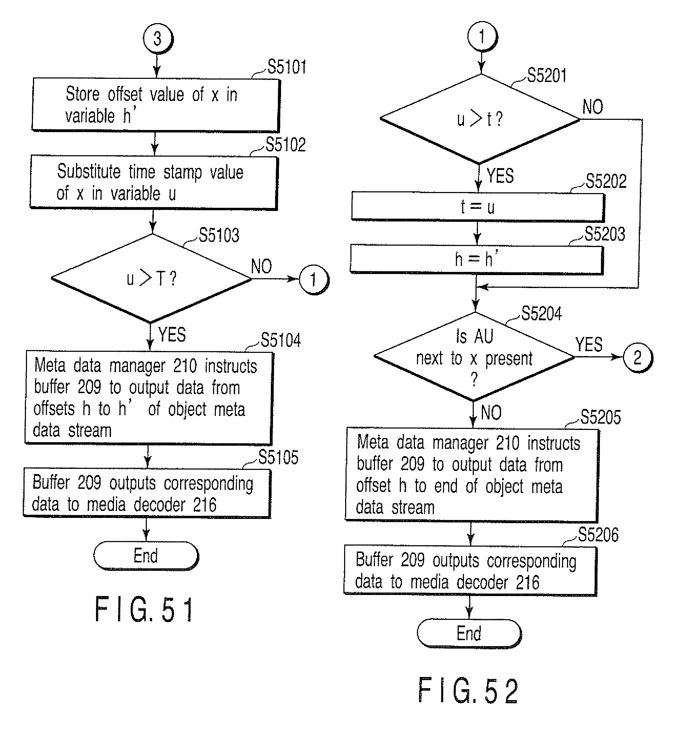

That is, the meta data manager 210 receives the moving picture clock T from the interface manager 207 (step S5001), obtains maximum t' which satisfies t' <= T (step S5002), and substitutes the offset value which forms a pair with t' in a variable h (step S5003). An access unit AU which is located at the position of the offset value h in the object meta data stream is set as x (step S5004), and the time stamp value of x is stored in a variable t (step S5005). If x is a NULL_AU (YES in step S5006), an AU next to x is set as new x (step S5007), and the flow returns to step S5006. If x is not a NULL_AU (NO in step S5006), the offset value of x is stored in a variable h' (step S5101). The subsequent processes (steps S5102 to S5105 in FIG. 51 and steps S5201 to S5206 in FIG. 52) are the same as those in steps S4508 to S4511 in FIG. 45 and steps S4601 to S4606 in FIG. 46.

The protocol between the server and client will be explained below. As the protocol used upon transmitting Vclick data from the server 201 to the client 200, for example, RTP (Real-time Transport Protocol) is known. Since RTP has good chemistry with UDP/IP and attaches importance to realtimeness, packets are likely to be omitted. If RTP is used, a Vclick stream VCS is divided into transmission packets (RTP packets) when it is transmitted. An example of a method of storing a Vclick stream VCS in transmission packets will be explained below.

FIGS. 7 and 8 are views for explaining a method of forming transmission packets in correspondence with the small and large data sizes of Vclick_AUs, respectively. In FIG. 7, reference numeral 700 denotes a Vclick stream VCS. A transmission packet includes a packet header 701 and payload. The packet header 701 includes the serial number of the packet, transmission time, source specifying information, and the like. The payload is a data area for storing transmission data. Vclick_AUS (702) extracted in turn from the Vclick stream 700 are stored in the payload. When the next Vclick_AU cannot be stored in the payload, padding data 703 is inserted in the remaining area. The padding data is dummy data to adjust the data size, and a run of "0" values. When the payload size can be set to be equal to that of one or a plurality of Vclick_AUs, no padding data is required.

On the other hand, FIG. 8 shows a method of forming transmission packets when one Vclick_AU cannot be stored in a payload. Only partial data (802) that can be stored in a payload of the first transmission packet of a Vclick_AU (800) is stored in the payload. The remaining data (804) is stored in a payload of the second transmission packet. If the storage size of the payload still has a free space, that space is padded with padding data 805. The same applies to a case wherein one Vclick_AU is divided into three or more packets.

As a protocol other than RTP, HTTP (Hypertext Transport Protocol) or HTTPS may be used. HTTP has good chemistry with TCP/IP and omitted data is re-sent, thus allowing highly reliable data communications. However, when the network throughput is low, a data delay may occur. Since HTTP is free from any data omission, a method of dividing a Vclick stream VCS into packets upon storage need not be particularly taken into consideration.

(Playback Procedure (Network))

The procedures of a playback process when a Vclick stream VCS is present on the server 201 will be described below.

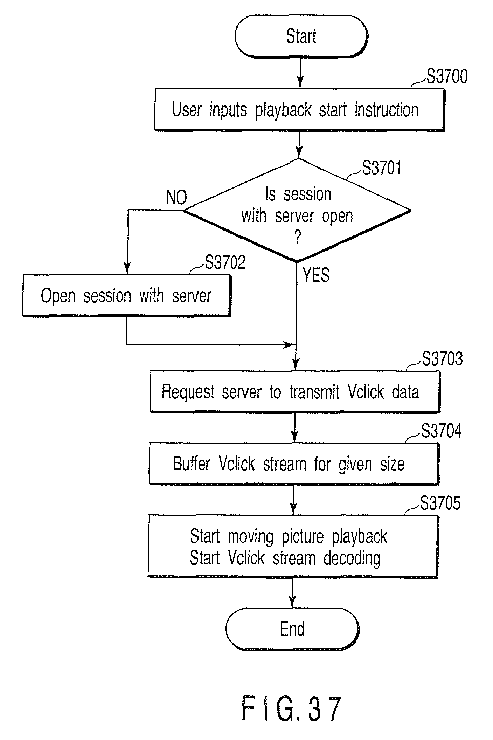

FIG. 37 is a flowchart showing the playback start process procedures after the user inputs a playback start instruction until playback starts. In step S3700, the user inputs a playback start instruction. This input is received by the interface handler 207, which outputs a moving picture playback preparation command to the moving picture playback controller 205. It is checked as branch process step S3701 if a session with the server 201 has already been opened. If the session has not been opened yet, the flow advances to step S3702; otherwise, the flow advances to step S3703. In step S3702, a process for opening the session between the server and client is executed.

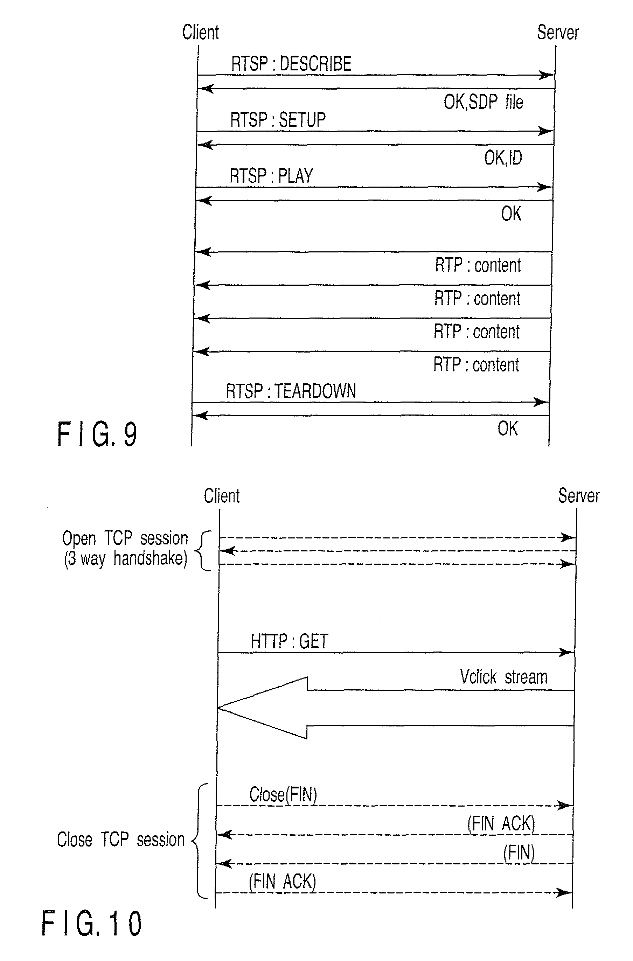

FIG. 9 shows an example of communication procedures from session open until session close when RTP is used as the communication protocol between the server and client. A negotiation must be done between the server and client at the beginning of the session. In case of RTP, RTSP (Real Time Streaming Protocol) is normally used. Since an RTSP communication requires high reliability, RTSP and RTP preferably make communications using TCP/IP and UDP/IP, respectively. In order to open a session, the client (200 in the example of FIG. 2) requests the server (201 in the example of FIG. 2) to provide information associated with Vclick data to be streamed (RTSP DESCRIBE method).

Assume that the client (200) is notified in advance of the address of the server (201) that distributes data corresponding to a moving picture to be played back by a method of, e.g., recording address information on a moving picture data recording medium. The server 201 sends information of Vclick data to the client 200 as a response to this request. More specifically, the client receives information such as the protocol version of the session, session owner, session name, connection information, session time information, meta data name, meta data attributes, and the like. As a method of describing these pieces of information, for example, SDP (Session Description Protocol) is used. The client 200 then requests the server 201 to open a session (RTSP SETUP method). The server 201 prepares for streaming, and returns a session ID to the client 200. The processes described so far correspond to those in step S3702 when RTP is used.

When HTTP is used in place of RTP, the communication procedures are made, as shown in, e.g., FIG. 10. Initially, a TCP session as a lower layer of HTTP is opened (3 way handshake). As in the above procedures, assume that the client (200) is notified in advance of the address of the server (201) which distributes data corresponding to a moving picture to be played back. After that, a process for sending status information (e.g., a manufacturing country, language, selection states of various parameters, and the like) of the client 200 to the server 201 using, e.g., SDP may be executed. The processes described so far correspond to those in step S3702 in case of HTTP.

In step S3703, a process for requesting the server (201) to transmit Vclick data is executed while the session between the server 201 and client 200 is open. This process is implemented by sending an instruction from the interface handler 207 to the network manager 208, and then sending a request from the network manager 208 to the server (201). In case of RTP, the network manager 208 sends an RTSP PLAY method to the server to issue a Vclick data transmission request. The server specifies a Vclick stream VCS to be transmitted with reference to information received from the client so far and Vclick Info VCI in the server. Furthermore, the server specifies a transmission start position in the Vclick stream VCS using time stamp information of the playback start position included in the Vclick data transmission request and the Vclick access table VCA stored in the server. The server then packetizes the Vclick stream VCS and sends packets to the client by RTP.

On the other hand, in case of HTTP, the network manager 208 transmits an HTTP GET method to issue a Vclick data transmission request. This request may include time stamp information of the playback start position of a moving picture. The server specifies a Vclick stream VCS to be transmitted and the transmission start position in this stream by the same method as in RTP, and sends the Vclick stream VCS to the client by HTTP.

In step S3704, a process for buffering the Vclick stream VCS sent from the server on the buffer 209 is executed. This process is done to prevent the buffer 209 from being emptied when Vclick stream transmission from the server is too late during playback of the Vclick stream VCS. If the meta data manager 210 notifies the interface handler that the buffer has stored the sufficient Vclick stream VCS, the flow advances to step S3705. In step S3705, the interface handler issues a moving picture playback start command to the controller 205 and also issues a command to the meta data manager 210 to start output of the Vclick stream VCS to the meta data decoder 217.

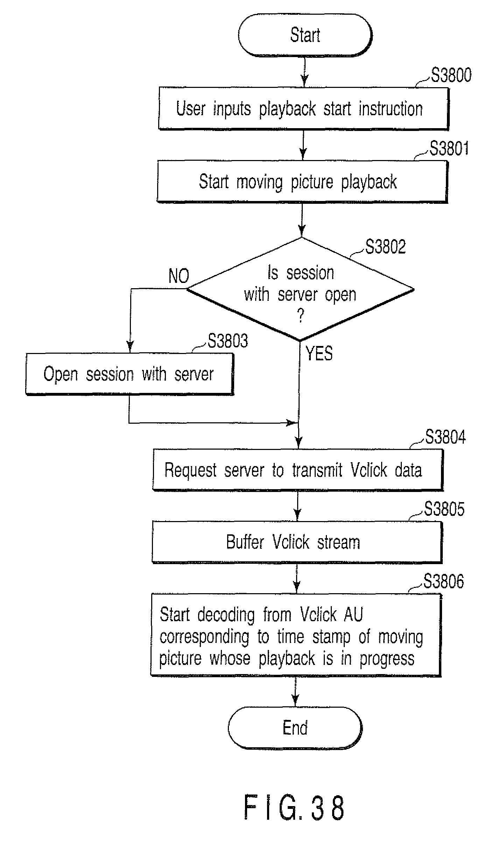

FIG. 38 is a flowchart showing the procedures of the playback start process different from those in FIG. 37. In the processes described in the flowchart of FIG. 37, the process for buffering the Vclick stream VCS for a given size in step S3704 often takes time depending on the network status, and the processing performance of the server and client. More specifically, a long time is often required after the user issues a playback instruction until playback starts actually. In the process procedures shown in FIG. 38, if the user issues a playback start instruction in step S3800, playback of a moving picture immediately starts in step S3801. That is, upon reception of the playback start instruction from the user, the interface handler 207 immediately issues a playback start command to the controller 205. In this way, the user need not wait after he or she issues a playback instruction until he or she can view a moving picture. Process steps S3802 to S3805 are the same as those in steps S3701 to S3704 in FIG. 37.

In step S3806, a process for decoding the Vclick stream VCS in synchronism with the moving picture whose playback is in progress is executed. More specifically, upon reception of a message indicating that a given size of the Vclick stream VCS is stored in the buffer 209 from the meta data manager 210, the interface handler 207 outputs, to the meta data manager 210, an output start command of the Vclick stream VCS to the meta data decoder 217. The meta data manager 210 receives the time stamp of the moving picture whose playback is in progress from the interface handler, specifies a Vclick AU corresponding to this time stamp from data stored in the buffer, and outputs it to the meta data decoder 217.

In the process procedures shown in FIG. 38, the user never waits after he or she issues a playback instruction until he or she can view a moving picture. However, since the Vclick stream VCS is not decoded immediately after the beginning of playback, no display associated with objects cannot be made, or no action is taken if the user clicks an object.

The aforementioned problem is solved after decoding of the Vclick stream VCS starts since the beginning of moving picture playback. If a period until a predetermined size of VCS (Vclick_AU) is decoded after the beginning of playback is shortened inasmuch as the user does not get irritated, the above problem can be solved in practice. Hence, the client 200 and server 201 may be always-on connected via a high-speed line, and the processes in steps S3802 and S3803 may be executed as background processes in advance when a DVD disc that uses Vclick is loaded into the disc device 230 (or after a title to be played back is selected from the loaded disc). In this case, if a user instruction is input in step S3800, DVD playback in step S3801 immediately starts. At the same time, the processes in steps S3802 and S3803 are skipped, and downloading of the Vclick stream VCS onto the buffer via the high-speed line immediately starts (steps S3804 and S3805). If the downloaded size has reached a predetermined size (12 kbytes in an example of FIG. 87), decoding of the Vclick stream VCS (the first Vclick_AU in that stream) starts (step S3806).

During playback of the moving picture, the network manager 208 of the client 200 receives Vclick streams VCS which are sent in turn from the server 201, and stores them in the buffer 209. The stored object meta data are sent to the meta data decoder 217 at appropriate timings. That is, the meta data manager 210 refers to the time stamp of the moving picture whose playback is in progress, which is sent from the interface handler 207 to specify a Vclick_AU corresponding to that time stamp from data stored in the buffer 209, and sends the specified object meta data to the meta data decoder 217 for respective AUs. The meta data decoder 217 decodes the received data. Note that the decoder 217 may skip decoding of data for a camera angle different from that currently selected by the client 200. When it is known that the Vclick_AU corresponding to the time stamp of the moving picture whose playback is in progress has already been loaded to the meta data decoder 217, the transmission process of object meta data to the meta data decoder 217 may be skipped.

The time stamp of the moving picture whose playback is in progress is sequentially sent from the interface handler 207 to the meta data decoder 217. The meta data decoder 217 decodes the Vclick_AU in synchronism with this time stamp, and sends required data to the AV renderer 218. For example, when attribute information described in the Vclick_AU instructs to display an object region, the meta data decoder generates a mask image, contour, and the like of the object region, and sends them to the AV renderer 218 in synchronism with the time stamp of the moving picture whose playback is in progress. The meta data decoder 217 compares the time stamp of the moving picture whose playback is in progress with the lifetime of the Vclick_AU to determine old object meta data which is not required and to delete that data.

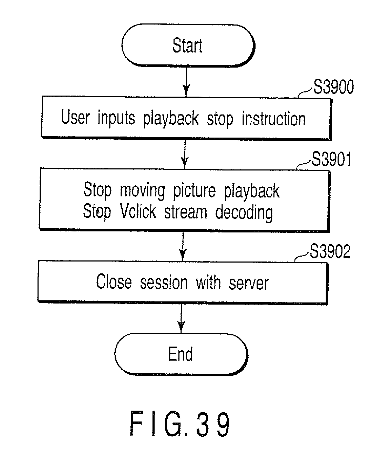

FIG. 39 is a flowchart for explaining the procedures of a playback stop process. In step S3900, the user inputs a playback stop instruction during playback of the moving picture. In step S3901, a process for stopping the moving image playback process is executed. This process is done when the interface handler 207 outputs an stop command to the controller 205. At the same time, the interface handler outputs, to the meta data manager 210, an output stop command of object meta data to the meta data decoder 217.

In step S3902, a process for closing the session with the server (201) is executed. When RTP is used, an RTSP TEARDOWN method is sent to the server, as shown in FIG. 9. Upon reception of the TEARDOWN message, the server 201 stops data transmission to close the session, and returns a confirmation message to the client 200. With this process, the session ID used in the session is invalidated. On the other hand, when HTTP is used, an HTTP Close method is sent to the server (201) to close the session, as shown in FIG. 10.

(Random Access Procedure (Network))

The random access playback procedures when a Vclick stream VCS is present on the server 201 will be described below.

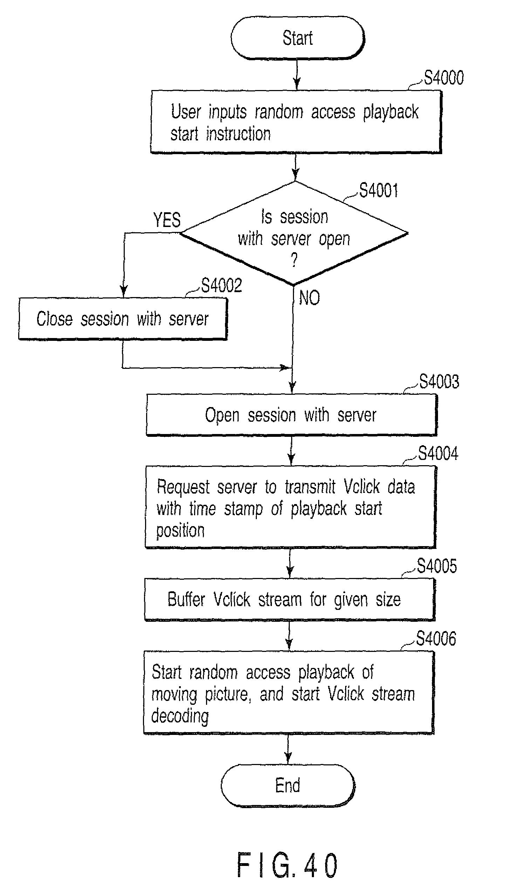

FIG. 40 is a flowchart showing the process procedures after the user issues a random access playback start instruction until playback starts. In step S4000, the user inputs a random access playback start instruction. As the input methods, a method of making the user select from a list of accessible positions such as chapters and the like, a method of making the user designate one point from a slide bar corresponding to the time stamps of a moving picture, a method of directly inputting the time stamp of a moving picture, and the like are available. The input time stamp is received by the interface handler 207, which issues a moving picture playback preparation command to the moving picture playback controller 205. If playback of the moving picture has already started, the controller 205 issues a playback stop instruction of the moving picture whose playback is in progress, and then outputs the moving picture playback preparation command. It is checked as branch process step S4001 if a session with the server 201 has already been opened. If the session has already been opened (e.g., playback of the moving image is in progress), a session close process is executed in step S4002. If the session has not been opened yet, the flow advances to step S4003 without executing the process in step S4002. In step S4003, a process for opening the session between the server (201) and client (200) is executed. This process is the same as that in step S3702 in FIG. 37.

in step S4004, a process for requesting the server (201) to transmit Vclick data by designating the time stamp of the playback start position is executed while the session between the server 201 and client 200 is open. This process is implemented by sending an instruction from the interface handler 207 to the network manager 208, and then sending a request from the network manager 208 to the server (201). In case of RTP, the network manager 208 sends an RTSP PLAY method to the server to issue a Vclick data transmission request. At this time, the manager 208 also sends the time stamp that specifies the playback start position to the server (201) by a method using, e.g., a Range description. The server 201 specifies an object meta data stream to be transmitted with reference to information received from the client (200) so far and the Vclick Info VCI in the server 201. Furthermore, the server 201 specifies a transmission start position in the Vclick stream VCS using time stamp information of the playback start position included in the Vclick data transmission request and the Vclick access table VCA stored in the server 201. The server 201 then packetizes the Vclick stream VCS and sends packets to the client 200 by RTP.

On the other hand, in case of HTTP, the network manager 208 transmits an HTTP GET method to issue a Vclick data transmission request. This request includes time stamp information of the playback start position of the moving picture. The server 201 specifies a Vclick stream VCS to be transmitted with reference to the Vclick information file VCI, and also specifies the transmission start position in the Vclick stream VCS using the Vclick access table VCA in the server 201 by the same method as in RTP. The server 201 then sends the Vclick stream VCS to the client by HTTP.

In step S4005, a process for buffering the Vclick stream VCS sent from the server (201) on the buffer 209 is executed. This process is done to prevent the buffer 209 from being emptied when Vclick stream transmission from the server (201) is too late during playback of the Vclick stream VCS. If the meta data manager 210 notifies the interface handler that the buffer 209 has stored the sufficient Vclick stream VCS (12 kbytes described in an initialization document in, e.g., FIG. 87), the flow advances to step S4006. In step S4006, the interface handler 207 issues a moving picture playback start command to the controller 205 and also issues a command to the meta data manager 210 to start output of the Vclick stream VCS to the meta data decoder 217.

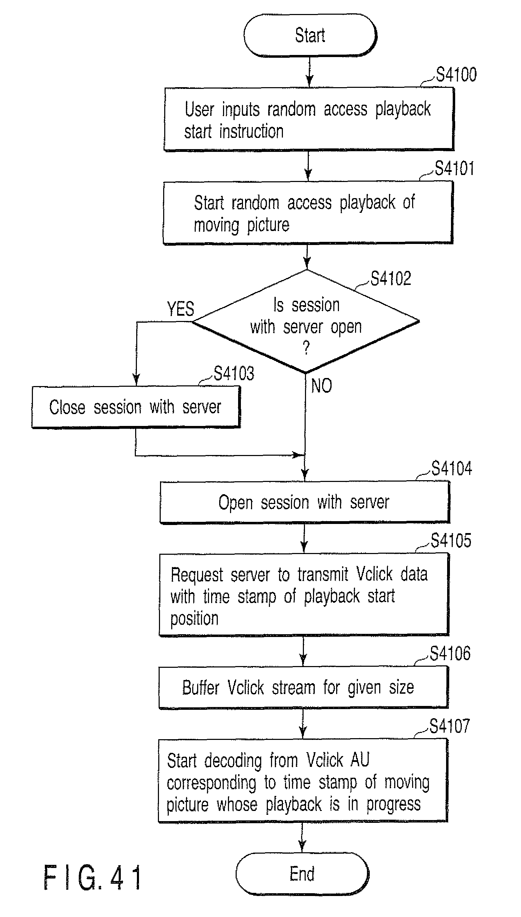

FIG. 41 is a flowchart showing the procedures of the random access playback start process different from those in FIG. 40. In the processes described in the flowchart of FIG. 40, the process for buffering the Vclick stream VCS for a given size in step S4005 often takes time depending on the network status, and the processing performance of the server/client (201/200). More specifically, a long time is often required after the user issues a playback instruction until playback starts actually in step S4006 (such long processing time often provokes user's irritation).

By contrast, in the process procedures shown in FIG. 41, if the user issues a playback start instruction in step S4100, playback of a moving picture immediately starts in step S4101. That is, upon reception of the playback start instruction from the user, the interface handler 207 immediately issues a random access playback start command to the controller 205. In this way, the user need not wait after he or she issues a playback instruction until he or she can view a moving picture. Process steps S4102 to S4106 are the same as those in steps S4001 to S4005 in FIG. 40.

In step S4107, a process for decoding the Vclick stream VCS in synchronism with the moving picture whose playback is in progress is executed. More specifically, upon reception of a message indicating that a given size of the Vclick stream VCS is stored in the buffer 209 from the meta data manager 210, the interface handler 207 outputs, to the meta data manager 210, an output start command of the Vclick stream VCS to the meta data decoder 217. The meta data manager 210 receives the time stamp of the moving picture whose playback is in progress from the interface handler 207, specifies a Vclick_AU corresponding to this time stamp from data stored in the buffer 209, and outputs it to the meta data decoder 217.

In the process procedures shown in FIG. 41, the user never waits after he or she issues a playback instruction until he or she can view a moving picture. However, since the Vclick stream VCS is not decoded immediately after the beginning of playback, no display associated with objects can be made, or no action is taken if the user clicks an object.

The aforementioned problem is solved after decoding of the Vclick stream VCS starts since the beginning of moving picture playback. If a period until decoding of VCS starts after the beginning of playback is shortened inasmuch as the user does not get irritated, the above problem can be solved in practice. Hence, the client 200 and server 201 may be always-on connected via a high-speed line, and the processes in steps S4102 to S4104 may be executed as background processes in advance when a DVD disc that uses Vclick is loaded into the disc device 230 (or after a title to be played back is selected from the loaded disc). In this case, if a user instruction is input in step S4100, DVD playback in step S4101 immediately starts. At the same time, the processes in steps S4102 to S4104 are skipped, and downloading of the Vclick stream VCS onto the buffer via the high-speed line immediately starts (step S4106). If the downloaded size has reached a predetermined size (e. g., 12 kbytes), decoding of the Vclick stream VCS (the first Vclick_AU in that stream) starts (step S4107). Since the processes during playback of the moving picture and moving picture playback stop process are the same as those in the normal DVD playback process, a description thereof will be omitted.

(Playback Procedure (Local))

The procedures of a playback process when a Vclick stream VCS is present on the moving picture data recording medium 231 will be described below.

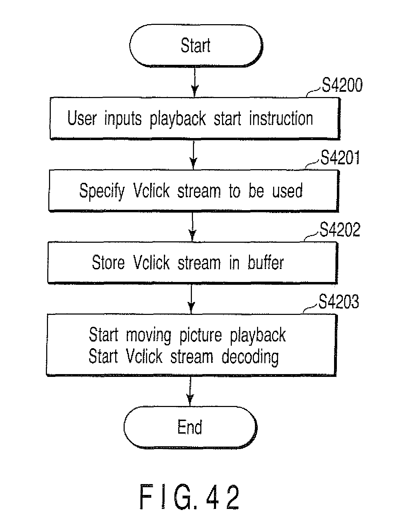

FIG. 42 is a flowchart showing the playback start process procedures after the user inputs a playback start instruction until playback starts. In step S4200, the user inputs a playback start instruction. This input is received by the interface handler 207, which outputs a moving picture playback preparation command to the moving picture playback controller 205. In step S4201, a process for specifying a Vclick stream VCS to be used is executed. In this process, the interface handler refers to the Vclick information file VCI on the moving picture data recording medium 231 and specifies a Vclick stream VCS corresponding to the moving picture to be played back designated by the user.

In step S4202, a process for storing the Vclick stream VCS on the buffer is executed. To implement this process, the interface handler 207 issues, to the meta data manager 210, a command for assuring a buffer. The buffer size to be assured is determined as a size large enough to store the specified Vclick stream VCS. Normally, a buffer initialization document that describes this size is recorded on the moving picture data recording medium 231. If no buffer initialization document is recorded, a predetermined size is applied. Upon completion of assuring of the buffer, the interface handler 207 issues, to the controller 205, a command for reading out the specified Vclick stream VCS and storing it in the buffer.

After the Vclick stream VCS is stored in the buffer 209, a playback start process is executed in step S4203. In this process, the interface handler 207 issues a moving picture playback command to the moving picture playback controller 205, and simultaneously issues, to the meta data manager 210, an output start command of the Vclick stream VCS to the meta data decoder 217.

During playback of the moving picture, Vclick_AUs read out from the moving picture data recording medium 231 are stored in the buffer 209. The stored Vclick stream VCS is sent to the meta data decoder 217 at an appropriate timing. That is, the meta data manager 210 refers to the time stamp of the moving picture whose playback is in progress, which is sent from the interface handler 207 to specify a Vclick_AU corresponding to that time stamp from data stored in the buffer 209, and sends the specified Vclick_AU to the meta data decoder 217. The meta data decoder 217 decodes the received data. Note that the decoder 217 may skip decoding of data for a camera angle different from that currently selected by the client. When it is known that the Vclick_AU corresponding to the time stamp of the moving picture whose playback is in progress has already been loaded to the meta data decoder 217, the transmission process of the Vclick stream VCS to the meta data decoder 217 may be skipped.

The time stamp of the moving picture whose playback is in progress is sequentially sent from the interface handler to the meta data decoder 217. The meta data decoder 217 decodes the Vclick_AU in synchronism with this time stamp, and sends required data to the AV renderer 218. For example, when attribute information described in the AU of the object meta data instructs to display an object region, the meta data decoder generates a mask image, contour, and the like of the object region, and sends them to the AV renderer 218 in synchronism with the time stamp of the moving picture whose playback is in progress. The meta data decoder 217 compares the time stamp of the moving picture whose playback is in progress with the lifetime of the Vclick_AU to determine old Vclick_AU which is not required and to delete that data.

If the user inputs a playback stop instruction during playback of the moving picture, the interface handler 207 outputs a moving picture playback stop command and a read stop command of the Vclick stream VCS to the controller 205. With these commands, the moving picture playback process ends.

(Random Access Procedure (Local))

The random access playback procedures when a Vclick stream VCS is present on the moving picture data recording medium 231 will be described below.

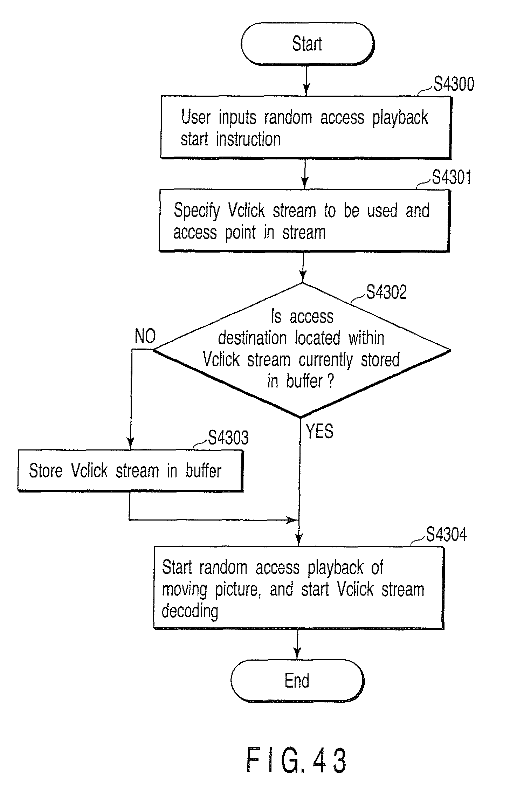

FIG. 43 is a flowchart showing the process procedures after the user issues a random access playback start instruction until playback starts. In step S4300, the user inputs a random access playback start instruction. As the input methods, a method of making the user select from a list of accessible positions such as chapters and the like, a method of making the user designate one point from a slide bar corresponding to the time stamps of a moving picture, a method of directly inputting the time stamp of a moving picture, and the like are available. The input time stamp is received by the interface handler 207, which issues a moving picture random access playback preparation command to the moving picture playback controller 205.

In step S4301, a process for specifying a Vclick stream VCS to be used is executed. In this process, the interface handler refers to the Vclick information file VCI on the moving picture data recording medium 231 and specifies a Vclick stream VCS corresponding to the moving picture to be played back designated by the user. Furthermore, the interface handler refers to the Vclick access table VCA on the moving picture data recording medium 231 or that loaded on a memory (the buffer 209 or another work memory area), and specifies an access point in the Vclick stream VCS corresponding to the random access destination of the moving picture.

Step S4302 is a branch process that checks if the specified Vclick stream VCS is currently loaded onto the buffer 209. If the specified Vclick stream is not loaded onto the buffer, the flow advances to step S4304 after a process in step S4303. If the specified Vclick stream is currently loaded onto the buffer, the flow advances to step S4304 while skipping the process in step S4303. In step S4304, random access playback of the moving picture and decoding of the Vclick stream VCS start. In this process, the interface handler 207 issues a moving picture random access playback command to the moving picture playback controller 205, and simultaneously outputs, to the meta data manager 210, a command to start output of the Vclick stream VCS to the meta data decoder 217. After that, the decoding process of the Vclick stream VCS is executed in synchronism with playback of the moving picture. Since the processes during playback of the moving picture and moving picture playback stop process are the same as those in the normal playback process, a description thereof will be omitted.

(Procedure from Clicking Until Related Information Display)

The operation of the client executed when the user has clicked a position within an object region using a pointing device such as a mouse or the like will be described below. When the user has clicked a given position, the clicked coordinate position on the moving picture is input to the interface handler 207. The interface handler 207 sends the time stamp and coordinate position of the moving picture upon clicking to the meta data decoder 217. The meta data decoder 217 executes a process for specifying an object designated by the user on the basis of the time stamp and coordinate position. Since the meta data decoder 217 decodes a Vclick stream VCS in synchronism with playback of the moving picture, and has already generated the region of the object at the time stamp upon clicking, it can easily implement this process. When a plurality of object regions are present at the clicked coordinate position, the frontmost object is specified with reference to layer information included in a Vclick_AU.

After the object designated by the user is specified, the meta data decoder 217 sends an action description (a script that designates an action) described in the object attribute information 403 to the script interpreter 212. Upon reception of the action description, the script interpreter 212 interprets the action contents and executes an action. For example, the script interpreter displays a designated HTML file or begins to play back a designated moving picture. These HTML file and moving picture data may be recorded on the client 200, may be sent from the server 201 via the network, or may be present on another server on the network.

(Detailed Data Structure)

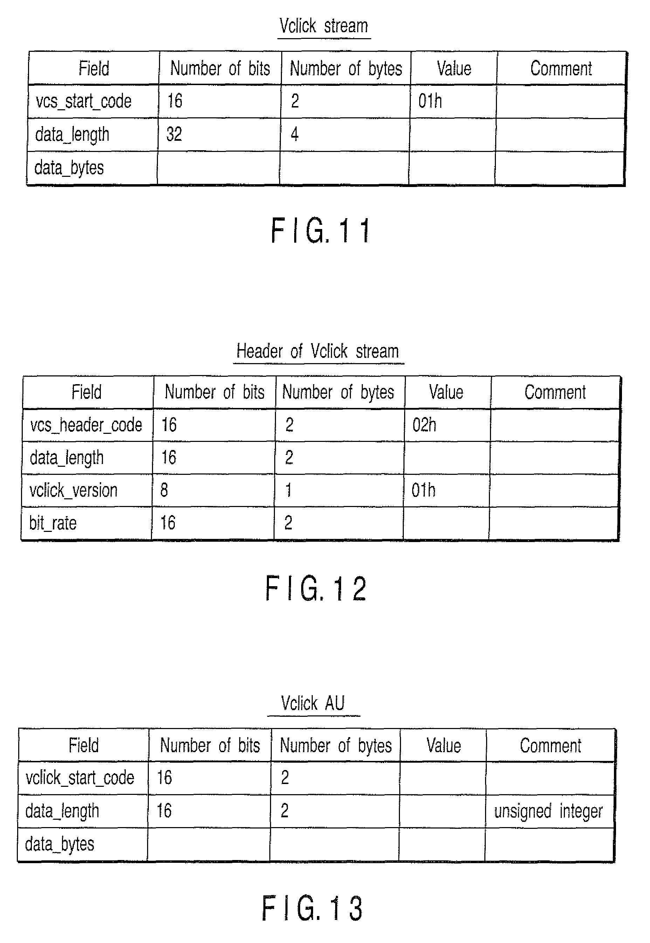

Configuration examples of practical data structures will be explained below. FIG. 11 shows an example of the data structure of the Vclick stream VCS (506 in FIG. 5). The meanings of data elements are:

vcs_start_code indicates the start of a Vclick stream VCS;
data_length designates the data length of a field after data_length in this Vclick stream VCS using bytes as a unit; and
data_bytes corresponds to a data field of a Vclick_AU. This field includes the header 507 of the Vclick stream 506 at the head position, and one or a plurality of Vclick_AUs (FIG. 4, 77, or 78) or NULL_AUs (FIG. 48) follow.

FIG. 12 shows an example of the data structure of the Vclick stream (the header 507 of the stream 506 in the example of FIG. 5). The meanings of data elements are:

vcs_header_code indicates the start of the header (507) of the Vclick stream VCS (506);
data_length designates the data length of a field after data_length in the header of the Vclick stream VCS using bytes as a unit;
vclick_version designates the version of the format. This value assumes 01h in this specification; and
bit_rate designates a maximum bit rate of this Vclick stream VCS.

FIG. 13 shows an example of the data structure of the Vclick_AU (the rectangles 500 to 505 in the example of FIG. 5). The meanings of data elements are:

vclick_start_code indicates the start of each Vclick_AU;
data_length designates the data length of a field after data_length in this Vclick_AU using bytes as a unit; and
data_bytes corresponds a data field of the Vclick_AU. This field includes the header 401, time stamp 402, object attribute information 403, and object region information 400.

FIG. 14 shows an example of the data structure of the header 401 (FIG. 4, 77, or 78) of the Vclick_AU. The meanings of data elements are:

vclick_header_code indicates the start of the header of each Vclick_AU;
data_length designates the data length of a field after data_length in the header of this Vclick_AU using bytes as a unit;
filtering_id is an ID used to identify the Vclick_AU. This data is used to determine the Vclick_AU to be decoded on the basis of the attributes of the client and this ID;
object_id is an identification number of an object described in Vclick data. When the same object_id value is used in two Vclick_AUs, they are data for a semantically identical object;
object_subid represents semantic continuity of objects. When two Vclick_AUs include the same object_id and object_subid values, they mean continuous objects;
continue_flag is a flag. If this flag is "1", an object region described in this Vclick_AU is continuous to that described in the next Vclick_AU having the same object_id. Otherwise, this flag is "0"; and
layer represents a layer value of an object. As the layer value is larger, this means that an object is located on the front side on the screen. As described above, since "the Vclick_AU to be decoded" can be determined based on filtering_id, "the Vclick stream VCS including the Vclick_AU to be decoded" can also be identified based on filtering_id. That is, "stream selection of moving picture meta data" can be made using filtering_id.

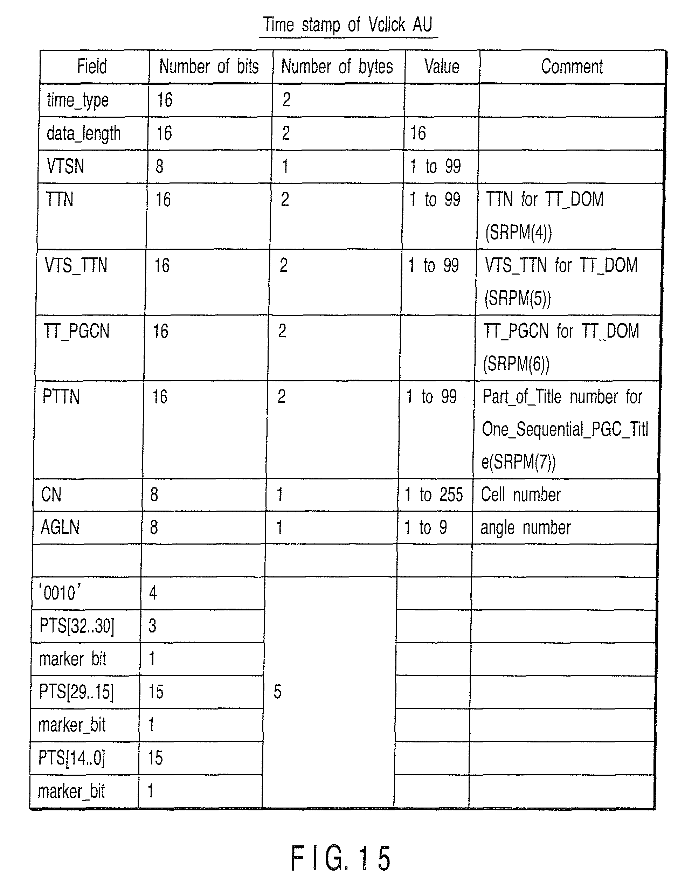

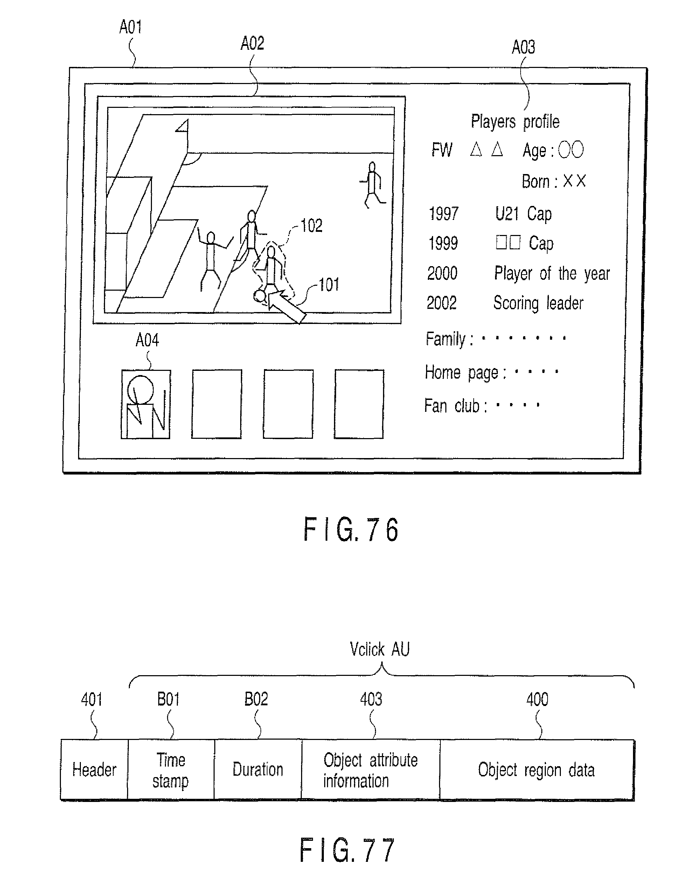

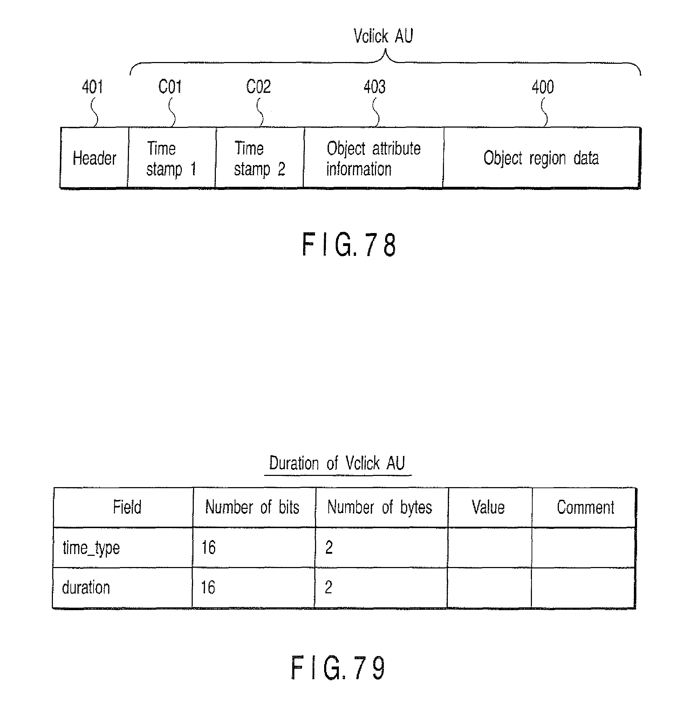

FIG. 15 shows an example of the data structure of the time stamp (402 in FIG. 4, B01 in FIG. 77, or C01/C02 in FIG. 78) of the Vclick_AU. This example assumes a case wherein a DVD is used as the moving picture data recording medium 231. Using the following time stamp, an arbitrary time of a moving picture on the DVD can be designated, and synchronization between the moving picture and Vclick data can be attained. The meanings of data elements are:

time_type indicates the start of a DVD time stamp;
data_length designates the data length of a field after data_length in this time stamp using bytes as a unit;
VTSN indicates a VTS (video title set) number of DVD-Video;
TTN indicates a title number in the title domain of DVD-Video. This number corresponds to a value stored in the system parameter SPRM(4) of a DVD player;
VTS_TTN indicates a VTS title number in the title domain of DVD-Video. This number corresponds to a value stored in the system parameter SPRM(5) of the DVD player;
TT_PGCN indicates a title PGC (program chain) number in the title domain of DVD-Video. This number corresponds to a value stored in the system parameter SPRM(6) of the DVD player;
PTTN indicates a part-of-title (Part_of_Title) number of DVD-Video. This number corresponds to a value stored in the system parameter SPRM(7) of the DVD player;
CN indicates a cell number of DVD-Video;
AGLN indicates an angle number of DVD-Video;

and

PTS[s .. e] indicates data of s-th to e-th bits of the display time stamp of DVD-Video.

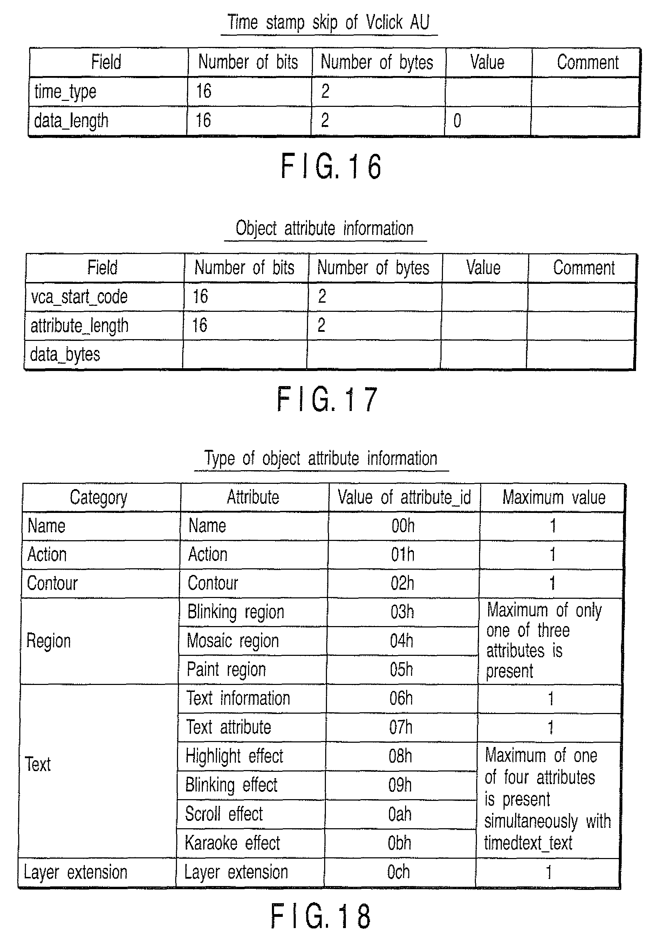

FIG. 16 shows an example of the data structure of time stamp skip of the Vclick_AU. When the time stamp skip is described in the Vclick_AU in place of a time stamp, this means that the time stamp of this Vclick_AU is the same as that of the immediately preceding Vclick_AU. The meanings of data elements are:

time_type indicates the start of the time stamp skip; and
data length designates the data length of a field after data_length of this time stamp skip using bytes as a unit. However, this value always assumes "0" since the time stamp skip includes only time_type and data_length.

FIG. 17 shows an example of the data structure of the object attribute information 403 (FIG. 4, 77, or 78) of the Vclick_AU. The meanings of data elements are:

vca_start_code indicates the start of the object attribute information of each Vclick_AU;
data_length designates the data length of a field after data_length in this object attribute information using bytes as a unit; and
data_bytes corresponds to a data field of the object attribute information. This field describes one or a plurality of attributes.

Details of attribute information described in the object attribute information 403 will be described below. FIG. 18 shows a list of the types of attributes that can be described in the object attribute information 403. A column "maximum value" describes an example of the maximum number of data that can be described in one object meta data AU for each attribute.

attribute_ id is an ID included in each attribute data, and is data used to identify the type of attribute. A name attribute is information used to specify the object name. An action attribute describes an action to be taken upon clicking an object region in a moving picture. A contour attribute indicates a display method of an object contour. A blinking region attribute specifies a blinking color upon blinking an object region. A mosaic region attribute describes a mosaic conversion method upon applying mosaic conversion to an object region, and displaying the converted region. A paint region attribute specifies a color upon painting and displaying an object region.

Attributes which belong to a text category define attributes associated with characters to be displayed when characters are to be displayed on a moving picture. Text information describes text to be displayed. A text attribute specifies attributes such as a color, font, and the like of text to be displayed. A highlight effect attribute specifies a highlight display method of characters upon highlighting partial or whole text. A blinking effect attribute specifies a blinking display method of characters upon blinking partial or whole text. A scroll effect attribute describes a scroll direction and speed upon scrolling text to be displayed. A karaoke effect attribute specifies the change timing and position of characters upon changing a text color sequentially.

Finally, a layer extension attribute is used to define the change timing and value of a change in layer value when the layer value of an object changes in the Vclick_AU. The data structures of the aforementioned attributes will be individually explained below.

FIG. 19 shows an example of the data structure of the name attribute of an object. The meanings of data elements are:

attribute_id designates a type of attribute data. The name attribute has attribute_id = 00h;
data length indicates the data length after data_length of the name attribute data using bytes as a unit;
language specifies a language used to describe the following elements (name and annotation). A language is designated using ISO-639 "code for the representation of names of languages";
name_length designates the data length of a name element using bytes as a unit;
name is a character string, which represents the name of an object described in this Vclick_AU;
annotation_length represents the data length of an annotation element using bytes as a unit; and
annotation is a character string, which represents an annotation associated with an object described in this Vclick_AU.

FIG. 20 shows an example of the data structure of the action attribute of an object. The meanings of data elements are:

attribute_id designates a type of attribute data. The action attribute has attribute_id = 01h;
data_length indicates the data length of a field after data_length of the action attribute data using bytes as a unit;
script_language specifies a type of script language described in a script element;
script_length represents the data length of the script element using bytes as a unit; and
script is a character string which describes an action to be executed using the script language designated by script_language when the user designates an object described in this Vclick_AU.

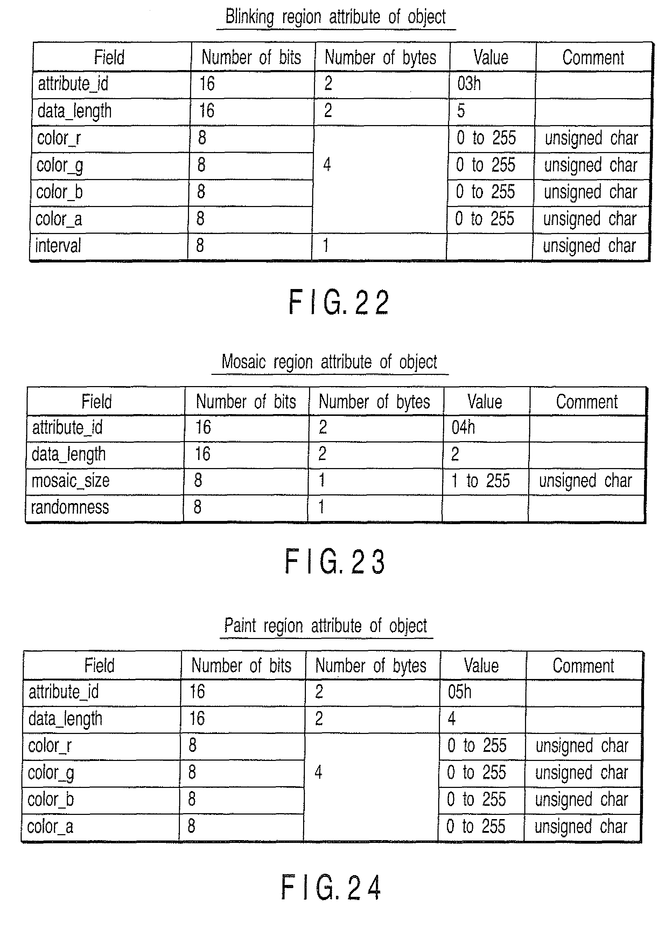

FIG. 21 shows an example of the data structure of the contour attribute of an object. The meanings of data elements are:

attribute_id designates a type of attribute data. The contour attribute has attribute_id = 02h;
data_length indicates the data length of a field after data_length of the contour attribute data;
color_r, color_g, color_b, and color_a designate a display color of the contour of an object described in this object meta data AU;
color_r, color_g, and color_b respectively designate red, green, and blue values in RGB expression of the color. color_a indicates transparency;
line_type designates the type of contour (solid line, broken line, or the like) of an object described in this Vclick_AU; and
thickness designates the thickness of the contour of an object described in this Vclick_AU using points as a unit.

FIG. 22 shows an example of the data structure of the blinking region attribute of an object. The meanings of data elements are:

attribute_id designates a type of attribute data. The blinking region attribute data has attribute_id = 03h;
data_length indicates the data length of a field after data_length of the blinking region attribute data using bytes as a unit;
color_r, color_g, color_b, and color_a designate a display color of a region of an object described in this Vclick_AU. color_r, color_g, and color_b respectively designate red, green, and blue values in RGB expression of the color. color_a indicates transparency. Blinking of an object region is realized by alternately displaying the color designated in the paint region attribute and that designated in this attribute; and
interval designates the blinking time interval.

FIG. 23 shows an example of the data structure of the mosaic region attribute of an object. The meanings of data elements are:

attribute_id designates a type of attribute data. The mosaic region attribute data has attribute_id = 04h;
data_length indicates the data length of a field after data_length of the mosaic region attribute data using bytes as a unit;
mosaic size designates the size of a mosaic block using pixels as a unit; and
randomness represents a degree of randomness upon replacing mosaic-converted block positions.

FIG. 24 shows an example of the data structure of the paint region attribute of an object. The meanings of data elements are:

attribute_id designates a type of attribute data. The paint region attribute data has attribute_id = 05h;
data_length indicates the data length of a field after data_length of the paint region attribute data using bytes as a unit; and
color_r, color_g, color_b, and color_a designate a display color of a region of an object described in this Vclick-AU. color_r, color_g, and color_b respectively designate red, green, and blue values in RGB expression of the color. color_a indicates transparency.

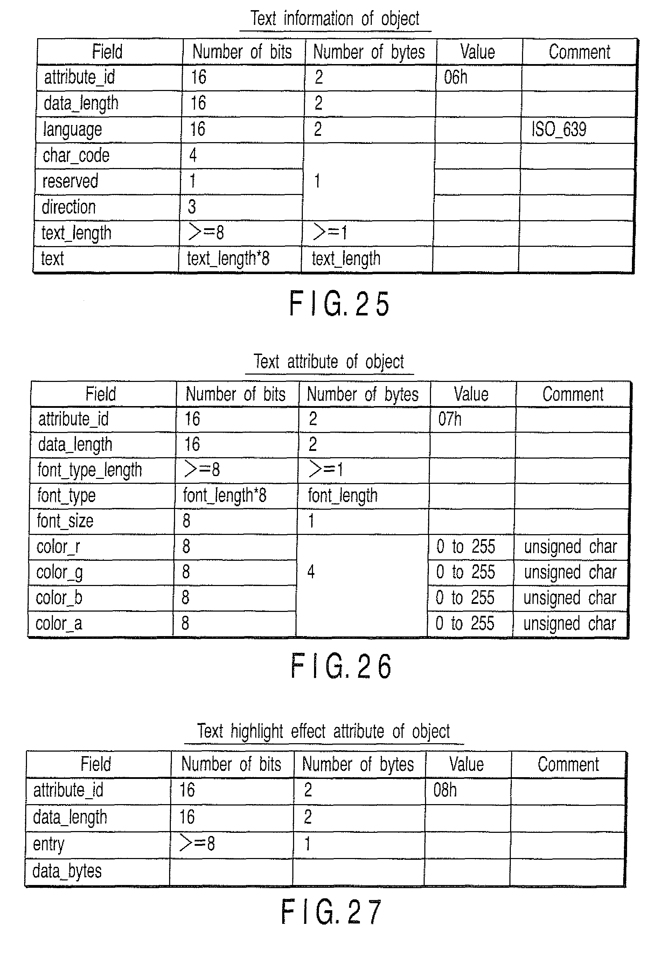

FIG. 25 shows an example of the data structure of the text information of an object. The meanings of data elements are:

attribute_id designates a type of attribute data. The text information of an object has attribute_id = 06h;
data_length indicates the data length of a field after data_length of the text information of an object using bytes as a unit;
language indicates a language of described text. A method of designating a language can use ISO-639 "code for the representation of names of languages";
char_code specifies a code type of text. For example, UTF-8, UTF-16, ASCII, Shift JIS, and the like are used to designate the code type;
direction specifies a left, right, up, or down direction as a direction upon arranging characters. For example, in case of English or French, characters are normally arranged in the left direction. On the other hand, in case of Arabic, characters are arranged in the right direction. In case of Japanese, characters are arranged in either the left or down direction. However, an arrangement direction other than that determined for each language may be designated. Also, an oblique direction may be designated;
text_length designates the length of timed text using bytes as a unit; and
text is a character string, which is text described using the character code designated by char_code.

FIG. 26 shows an example of the data structure of the text attribute of an object. The meanings of data elements are:

attribute_id designates a type of attribute data. The text attribute of an object has attribute_id = 07h;
data_length indicates the data length of a field after data_length of the text attribute of an object using bytes as a unit;
font_length designates the description length of font using bytes as a unit;
font is a character string, which designates font used upon displaying text; and
color_r, color_g, color_b, and color_a designate a display color of text. A color is designated by RGB.

color_r, color_g, and color_b respectively designate red, green, and blue values. color_a indicates transparency.

FIG. 27 shows an example of the data structure of the text highlight effect attribute of an object. The meanings of data elements are:

attribute_id designates a type of attribute data. The text highlight effect attribute data of an object has attribute_id = 08h;
data_length indicates the data length of a field after data_length of the text highlight effect attribute data of an object using bytes as a unit;
entry indicates the number of "highlight_effect_ entry"s in this text highlight effect attribute data; and
data_bytes includes "highlight_effect_entry"s as many as entry.

The specification of highlight_effect_entry is as follows.

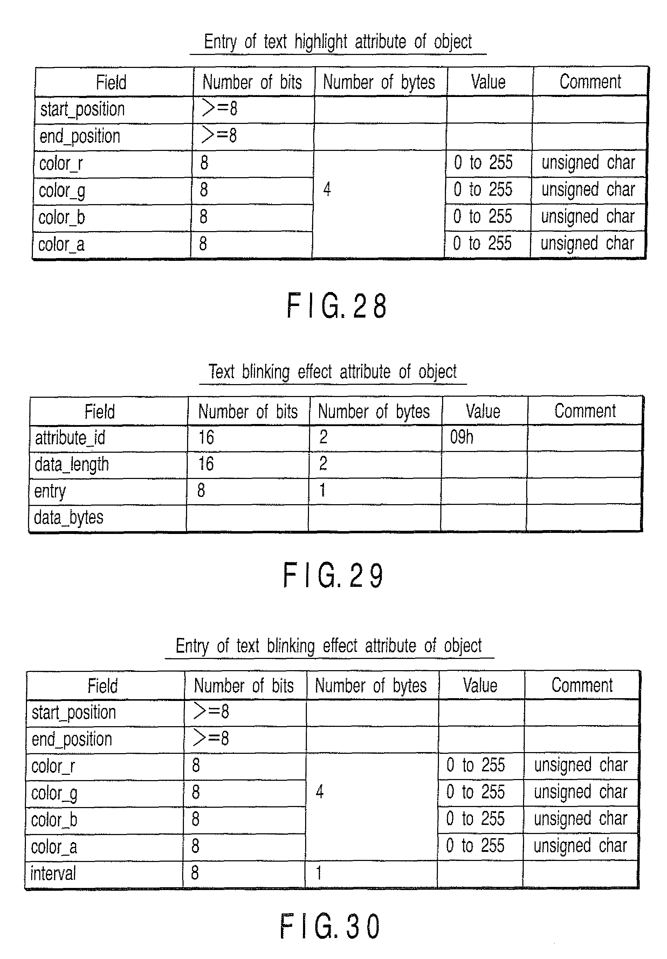

FIG. 28 shows an example of the data structure of an entry of the text highlight effect attribute of an object. The meanings of data elements are:

start_position designates the start position of a character to be highlighted using the number of characters from the head to that character;
end_position designates the end position of a character to be highlighted using the number of characters from the head to that character; and
color_r, color_g, color_b, and color_a designate a display color of the highlighted characters. A color is expressed by RGB. color_r, color_g, and color_b respectively designate red, green, and blue values. color_a indicates transparency.

FIG. 29 shows an example of the data structure of the text blinking effect attribute of an object. The meanings of data elements are:

attrlbute_id designates a type of attribute data. The text blinking effect attribute data of an object has attribute_id = 09h;
data_length indicates the data length of a field after data_length of the text blinking effect attribute data using bytes as a unit;
entry indicates the number of "blink_effect_ entry"s in this text blinking effect attribute data; and
data_bytes includes "blink_effect_entry"s as many as entry.

The specification of blink_effect_entry is as follows.

FIG. 30 shows an example of the data structure of an entry of the text blinking effect attribute of an object. The meanings of data elements are:

start_position designates the start position of a character to be blinked using the number of characters from the head to that character;
end_position designates the end position of a character to be blinked using the number of characters from the head to that character;
color_r, color_g, color_b, and color_a designate a display color of the blinking characters. A color is expressed by RGB. color_r, color_g, and color_b respectively designate red, green, and blue values. color_a indicates transparency. Note that characters are blinked by alternately displaying the color designated by this entry and the color designated by the text attribute; and
interval designates the blinking time interval.

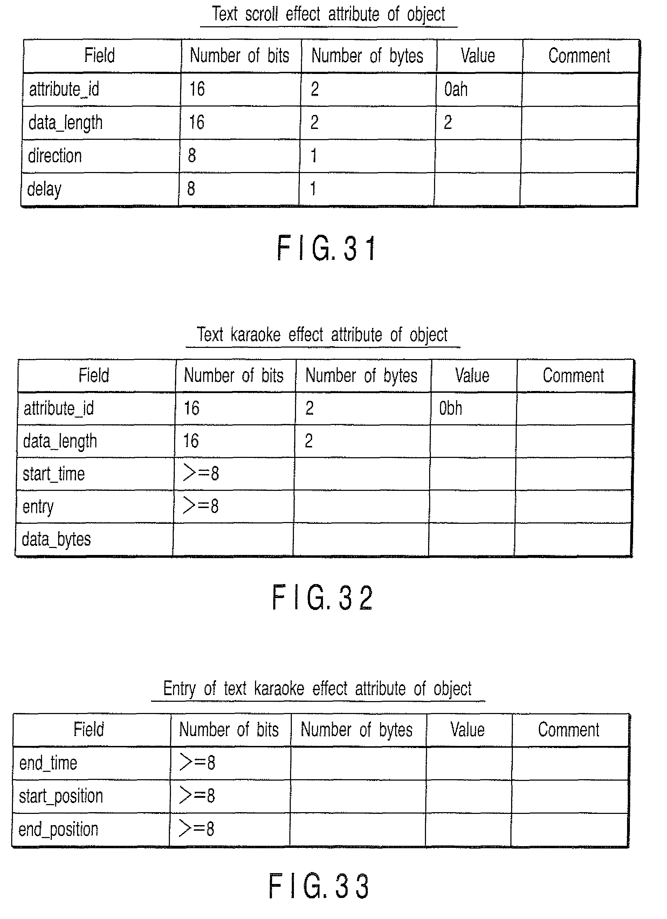

FIG. 31 shows an example of the data structure of an entry of the text scroll effect attribute of an object. The meanings of data elements are:

attribute_id designates a type of attribute data. The text scroll effect attribute data of an object has attribute_id = 0ah;
data_length indicates the data length of a field after data_length of the text scroll effect attribute data using bytes as a unit;
direction designates a direction to scroll characters. For example, 0 indicates a direction from right to left, 1 indicates a direction from left to right, 2 indicates a direction from up to down, and 3 indicates a direction from down to up; and
delay designates a scroll speed by a time difference from when the first character to be displayed appears until the last character appears.

FIG. 32 shows an example of the data structure of an entry of the text karaoke effect attribute of an object. The meanings of data elements are:

attribute_id designates a type of attribute data. The text karaoke effect attribute data of an object has attribute_id = 0bh;
data_length indicates the data length of a field after data_length of the text karaoke effect attribute data using bytes as a unit;
start_time designates a change start time of a text color of a character string designated by first karaoke_effect_entry included in data_bytes of this attribute data;
entry indicates the number of "karaoke_effect_ entry"s in this text karaoke effect attribute data; and
data_bytes includes "karaoke_effect_entry"s as many as entry.

The specification of karaoke_effect_entry is as follows.

FIG. 33 shows an example of the data structure of an entry of the text karaoke effect attribute of an object. The meanings of data elements are:

end_time indicates a change end time of the text color of a character string designated by this entry. If another entry follows this entry, end_time also indicates a change start time of the text color of a character string designated by the next entry;
start_position designates the start position of a first character whose text color is to be changed using the number of characters from the head to that character; and
end_position designates the end position of a last character whose text color is to be changed using the number of characters from the head to that character.

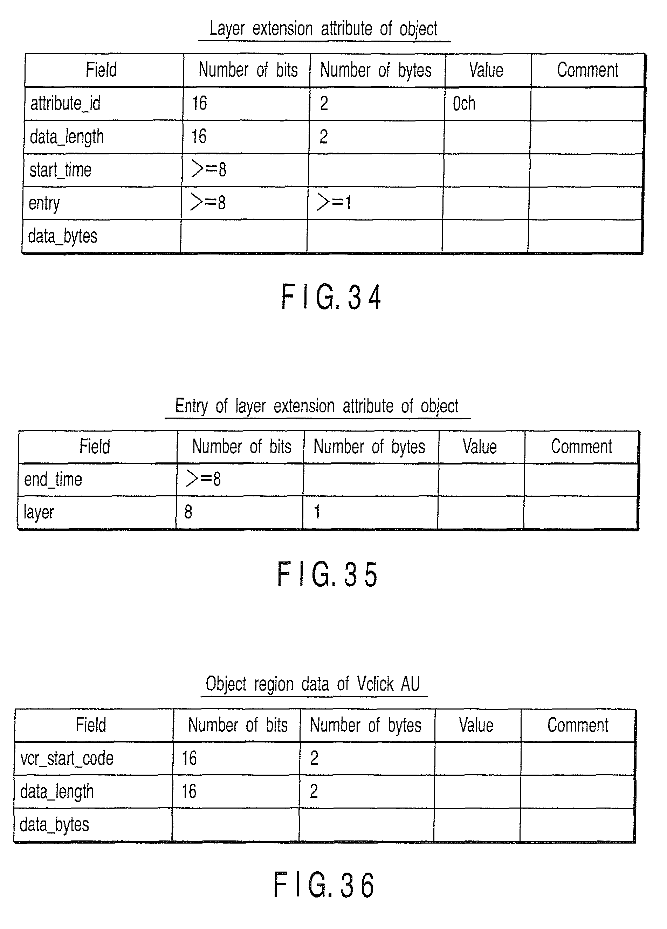

FIG. 34 shows an example of the data structure of the layer extension attribute of an object. The meanings of data elements are:

attribute_id designates a type of attribute data. The layer extension attribute data of an object has attribute id = 0ch;
data_length indicates the data length of a field after data_length of the layer extension attribute data using bytes as a unit;
start_time designates a start time at which the layer value designated by the first layer_extension_entry included in data_bytes of this attribute data is enabled;
entry designates the number of "layer_ extension_ entry"s included in this layer extension attribute data; and
data_bytes includes "layer_extension_entry"s as many as entry.

The specification of layer_extension_entry will be described below.
FIG. 35 shows an example of the data structure of an entry of the layer extension attribute of an object. The meanings of data elements are:

end_time designates a time at which the layer value designated by this layer_extension_entry is disabled. If another entry follows this entry, end_time also indicates a start time at which the layer value designated by the next entry is enabled; and
layer designates the layer value of an object.

FIG. 36 shows an example of the data structure of the object region data 400 of the object meta data AU. The meanings of data elements are:

vcr_start_code means the start of object region data;
data_length designates the data length of a field after data_length of the object region data using bytes as a unit; and

data_bytes is a data field that describes an object region. The object region can be described using, e.g., the binary format of MPEG-7 SpatioTemporal-Locator.

(Application Image)

FIG. 76 shows a display example, on a screen, of an application (moving picture hypermedia), which is different from FIGS. 1A and 1B, and is implemented using object meta data of the present invention and a moving picture together. In FIGS. 1A and 1B, a window (FIG. 1A) for displaying a moving picture and that (FIG. 1B) for displaying associated information are independent from each other. However, in FIG. 76, one window A01 displays a moving picture A02 and associated information A03. As associated information, not only text but a still picture A04 and a moving picture different from A02 can be displayed.

(Lifetime Designation Method of Vclick_AU using Duration Data)

FIG. 77 shows an example of the data structure of Vclick_AU, which is different from FIG. 4. The difference from FIG. 4 is that data used to specify the lifetime of a Vclick_AU is a combination of a time stamp B01 and endurance or duration B02 in place of the time stamp alone. The time stamp B01 is the start time of the lifetime of the Vclick_AU, and the duration B02 is a duration from the start time to the end time of the lifetime of the Vclick_AU. A detailed example of the duration is shown in, e.g., FIG. 79. Note that time_type is an ID used to specify that data shown in FIG. 79 means a duration, and duration is a duration. duration indicates a duration using a predetermined unit (e.g., 1 msec, 0.1 sec, or the like).
An advantage offered when the duration is also described as data used to specify the Vclick_AU lies in that the duration of the Vclick_AU can be detected by checking only Vclick_AU to be processed. When valid Vclick_AUs with a given time stamp are to be found, it is checked without checking other Vclick_AU data if the Vclick_AU of interest is to be found. However, the data size increases by the duration B02 compared to FIG. 4.
FIG. 78 shows an example of the data structure of Vclick_AU, which is different from FIG. 77. In this example, as data for specifying the lifetime of a Vclick_AU, a time stamp C01 that specifies the start time of the lifetime of the Vclick_AU and a time stamp C02 that specifies the end time are used. The advantage offered upon using this data structure is substantially the same as that upon using the data structure of FIG. 77.
FIG. 80 is a view for explaining description example 8 of Vclick information according to the embodiment of the present invention. In this example, one Vclick stream VCS #1 (Vclick1.vck) recorded on the disc is appended to one PGC (PGC#8). In this example, "start" and "end" attributes are described in the <object> tag. Note that the "start" attribute expresses the relative value of the display start time of the Vclick stream VCS at the precision of the 'HH:MM:SS:FF' format (hours : minutes : seconds : frames). Also, the "end" attribute expresses the relative value of the display end time of the Vclick stream VCS at the precision of the 'HH:MM:SS: FF' format (hours : minutes : seconds : frames). The "start" and "end" attributes express the relative times from the start position of the PGC when the Vclick stream VCS is appended to the PGC as in this example. If the Vclick stream VCS is appended to the title domain ("<vts_tt>"), the "start" and "end" attributes express the relative times from the start position of the title domain.

FIG. 81 is a view for explaining description example 9 of Vclick information according to the embodiment of the present invention. In this example, one Vclick stream VCS (Vclick2.vck) recorded on the disc is appended to one PGC (PSC#9). In this example, "start_ptm" and "end_ptm" attributes are described in the <object> tag. Note that the "start_ptm" attribute expresses the relative value of the display start time of an additional object at the precision of the PTM (Presentation time: a counter by means of 90-kHz clocks). Also, the "end_ptm" attribute expresses the relative value of the display end time of the additional object at the precision of the PTM (Presentation time: a counter by means of 90-kHz clocks). The "start_ptm" and "end_ptm" attributes express the relative times from the start position of the PGC when the additional object is appended to the PGC as in this example. If the additional object is appended to the title domain ("<vts_tt>"), the "start_ptm" and "end_ptm" attributes express the relative times from the start position of the title domain.

FIG. 82 is a flowchart for explaining the playback processing sequence according to another embodiment of the present invention. This flowchart exemplifies the procedures for changing a Vclick stream VCS to be played back in response to a user's input (remote controller operation or the like).

If the Vclick stream VCS is played back in synchronism with playback of the DVD-Video contents (a loop of NO in step S8201), the user makes some input (YES in step S8201). Note that the user's input includes a change in playback attribute such as switching of audio, switching of a caption, switching of an angle, and the like, or the start of special playback such as fast forward, fast reverse, skip, and the like.

If the user's input indicates a change in playback attribute (branch to the "change in playback attribute" side in step S8202), the playback apparatus (client 200 in FIG. 2) searches the Vclick stream VCS, which is being currently played back, for data (Vclick_AU) corresponding to the changed playback attribute information (e.g., an audio stream number, sub-picture stream number, or angle number) (step S8204). If the Vclick_AU corresponding to the changed playback attribute information can be retrieved from the Vclick stream VCS whose playback is in progress (YES in step S8205), the filter ID (filtering_id in FIG. 14) of the Vclick_AU to be played back is replaced by that of the retrieved Vclick_AU (step S8206). Then, a Vclick stream VCS including the Vclick_AU identified by the changed new filter ID is selected, and its playback starts.

If the Vclick_AU to be played back cannot be found in the Vclick stream VCS whose playback is in progress (NO in step S8205), a Vclick stream VCS including the corresponding Vclick_AU must be played back. In order to search for this Vclick stream VCS, the Vclick Info VCI file (VCKINDEX.IFO in FIG. 54) can be used (step S8207). This Vclick Info VCI file is mapped on a memory (the buffer 209 in FIG. 2 or a given area of a work memory (not shown)) of the playback apparatus in advance, and the location and file name information of the corresponding Vclick stream VCS can be acquired by giving the playback attribute information.

If the Vclick Info VCI file is not mapped on the memory (the buffer 209 or the like) of the playback apparatus, the Vclick Info VCI file is loaded from the predetermined location (in the VCD in FIG. 53) on the disc or the predetermined location on the external server (201), and is mapped on the memory (209 in FIG. 2) of the playback apparatus. When the Vclick Info VCI file is loaded from the predetermined location on the disc, playback of the DVD-Video contents which are currently played back is stopped, as needed, and the desired Vclick Info VCI file is loaded.

If no Vclick stream VCS corresponding to the changed playback state is present on the Vclick Info VCI file (NO in step S8208), playback of the Vclick stream VCS is stopped, and that of the DVD-Video contents is continued.

If the Vclick stream VCS corresponding to the changed playback state is found using the Vclick Info VCI file (YES in step S8208), and that Vclick stream VCS is located on the external server (201) (branch to the "server" side in step S8209), the Vclick stream VCS stored in the buffer 209 before the playback state has changed is erased (step S8220), and the new Vclick stream VCS on the external server (201) is loaded onto that buffer 209 (step S8221). After that, playback of the Vclick stream VCS starts ("start of playback of new Vclick stream"). At this time, since playback of the DVD-Video contents is continued, the Vclick stream VCS is played back in synchronism with the DVD-Video contents whose playback is now in progress with reference to the time information of that DVD-Video contents.

If the Vclick stream VCS corresponding to the changed playback state is found (YES in step S8208), and that Vclick stream VCS is located on the disc (branch to the "disc" side in step S8209), the Vclick stream VCS stored in the buffer 209 before the playback state has changed is erased (step S8210), and the new Vclick stream VCS on the disc is loaded onto that buffer 209 (step S8211). In this case, if the loading speed of the DVD drive is sufficiently high, the Vclick stream VCS can be loaded while continuing playback of the DVD-Video contents whose playback is now in progress. However, if the loading speed of the DVD drive is insufficient, playback of the DVD-Video contents is paused, and the Vclick stream VCS is loaded from the disc. After that, synchronous playback of the DVD-Video contents and Vclick stream VCS starts with reference to the time information of the DVD-Video contents whose playback is to start (step S8212 and "start of playback of new Vclick stream" after step S8212).

If the user input indicates the start of special playback (branch to the "special playback" side in step S8202), it is checked if a Vclick stream VCS as the jump destination of the special playback is the same as that which is currently decoded. If the Vclick stream VCS as the jump destination is the same as that which is currently decoded (YES in step S8203), the special playback is continued while holding the same Vclick stream VCS on the buffer 209. If the Vclick stream VCS as the jump destination is not the same as that which is currently decoded (NO in step S8203), the flow jumps to the process in step S8207.

For example, when the user inputs the above special playback request, the playback apparatus begins to synchronously play back the DVD-Video contents and Vclick stream VCS at the designated playback position when the next designated playback position (a position ahead of the current position in case of fast forward playback, a position behind the current position in case of fast reverse playback, the designated position in case of skip) is located in the Vclick stream VCS whose playback is now in progress.

If the designated playback position is not present in the Vclick stream VCS whose playback is now in progress, a Vclick stream VCS including the designated playback position must be played back. In order to search for this Vclick stream VCS, the Vclick Info VCI file is used (step S8207). This Vclick Info VCI file is mapped on a memory (buffer 209) of the playback apparatus in advance, and the location and file name information of the corresponding Vclick stream VCS can be acquired by giving the playback position information. If the Vclick Info VCI file is not mapped on the memory of the playback apparatus, it is loaded from the predetermined location on the disc or the predetermined location on the external server (201), and is mapped on the memory of the playback apparatus (steps S8210 and S8211 or steps S8220 and S8821). When the Vclick Info VCI file is loaded from the predetermined location on the disc, playback of the DVD-Video contents which are currently played back is stopped, as needed, and the desired Vclick Info VCI file is loaded.

More specifically, if the Vclick stream VCS corresponding to the designated playback position is found using the Vclick Info VCI file (YES in step S8208), and that Vclick stream VCS is located on the external server (201), the Vclick stream VCS stored in the buffer 209 before the special playback is erased (step S8220), and the new Vclick stream VCS on the external server (201) is loaded onto that buffer 209 (step S8221). After that, playback of the Vclick stream VCS starts. At this time, since playback of the DVD-Video contents is continued, the Vclick stream VCS is played back in synchronism with the DVD-Video contents whose playback is now in progress with reference to the time information of that DVD-Video contents.

On the other hand, if the changed Vclick stream VCS is located on the disc, the Vclick stream VCS stored in the buffer 209 before the special playback is erased (step S8210), and the new Vclick stream VCS on the disc is loaded onto that buffer 209 (step S8211). In this case, if the loading speed of the DVD drive is sufficiently high, the Vclick stream VCS can be loaded while continuing playback of the DVD-Video contents whose playback is now in progress. However, otherwise, playback of the DVD-Video contents is paused, and the Vclick stream VCS is loaded from the disc. After that, synchronous playback of the DVD-Video contents and Vclick stream VCS starts with reference to the time information of the DVD-Video contents whose playback is to start (after step S8212).

If no Vclick stream VCS corresponding to the designated playback position is present on the Vclick Info VCI file (NO in step S8208), playback of the Vclick stream VCS is stopped, and that of the DVD-Video contents is continued.

FIG. 83 is a view for explaining a method of forming a Vclick stream VCS (multi-stream) according to another embodiment of the present invention. This example is a modification of FIG. 5. More specifically, in the example of FIG. 5, Vclick_AUs of a plurality of angles are combined into one Vclick stream VCS. However, in FIG. 83, Vclick_AUs of a plurality of angles are stored in a plurality of corresponding Vclick streams VCS. That is, in the example of FIG. 83, a Vclick stream 836 includes Vclick_AUs 830 and 831 for Japanese angle 1, a Vclick stream 837 includes a Vclick_AU 832 for Japanese angle 2, and a Vclick stream 838 includes Vclick_AUs 833 and 834 for English angle 1.

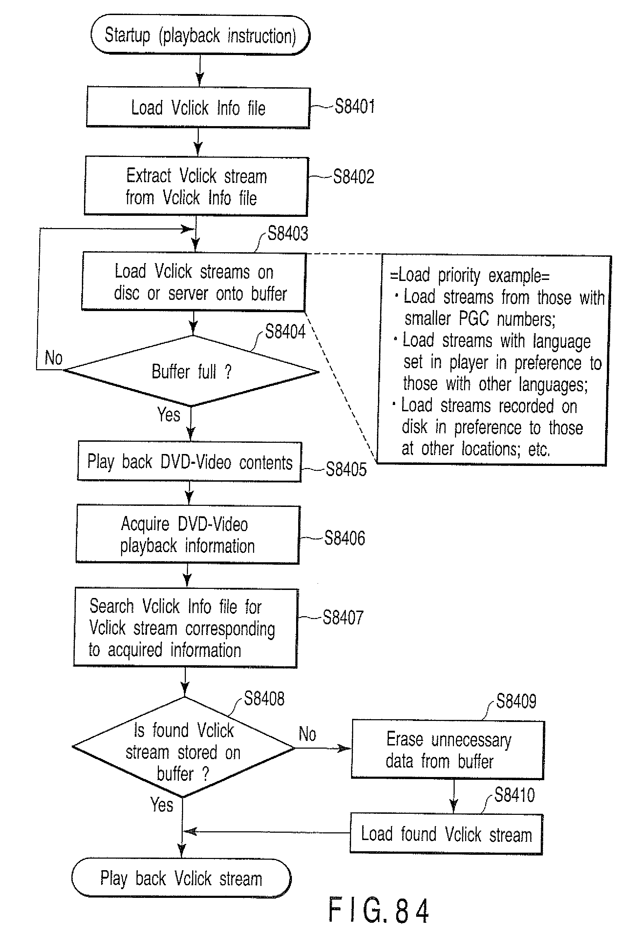

FIG. 84 is a flowchart for explaining the startup process sequence according to another embodiment of the present invention. This process sequence corresponds a case wherein there are a plurality of Vclick streams, as shown in FIG. 83.

The Vclick Info VCI file (VCKINDEX.IFO in FIG. 54) is loaded from the enhanced DVD-Video disc (FIG. 53) or external server 201 (FIG. 2) (step S8401), and is stored in the memory (work memory or buffer 209) of the playback apparatus (client 200 in FIG. 2). From this Vclick Info VCI file, the information of the location, file name, and the like of a Vclick stream VCS can be acquired (see comments of the Vclick Info file in the description of FIG. 54). Based on the acquired information, required Vclick streams VCS (three streams 836 to 838 in the example of FIG. 83) are extracted (step S8402). Data of the extracted Vclick streams VCS are stored in the buffer 209 (step S8403).

Upon buffer storage, some methods of determining the order of buffering of a plurality of streams (836 to 838 in FIG. 83) (methods of setting priority of loading onto the buffer) are available. In the first example of that method, streams are loaded in turn from those with smaller PGC numbers of the video contents corresponding to respective streams. For example, when Vclick stream #1 is appended to PGC#1, Vclick stream #2 is appended to PGC#2, and streams to be loaded are Vclick streams #1 and #2, Vclick stream #1 is loaded first onto the buffer 209, and Vclick stream #2 is then loaded onto the buffer 209.

In the second example, the priority of loading is determined in accordance with a language pre-set in a player (the client 200). For example, assume that Japanese is set in the player as the first language (or default language), and English is set as the second language. In this case, when an English attribute (e.g., English is designated by "language" in FIG. 25) is assigned to Vclick stream #1, and a Japanese attribute (e.g., Japanese is designated by "language" in FIG. 25) is assigned to Vclick stream #2, Vclick stream #2 is loaded first onto the buffer 209, and Vclick stream #1 is then loaded onto the buffer 209.

In the third example, streams to be loaded, which are recorded on the disk, are given priority over those recorded on the external server. For example, when Vclick stream #2 is recorded on the external server, and Vclick streams #1 and #3 are recorded on the disk, Vclick streams #1 and #3 are loaded onto the buffer 209 in the order of their numbers, and Vclick stream #2 is then loaded onto the buffer 209 upon loading Vclick streams #1 to #3.

After the Vclick stream is stored up to a size assigned to the buffer 209 (for example, 2 Mbytes in the example of FIG. 87 to be described later) (YES in step S8404), playback of the DVD-Video contents starts (step S8405). Alternatively, if the size of Vclick stream stored in the buffer 209 has reached a predetermined playback size (for example, 12 kbytes in the example of FIG. 87 to be described later), playback of the DVD-Video contents may start (step S8405).

After playback of the DVD-Video contents has started, its playback information (title, PGC number, audio stream number, sub-picture stream number, angle number, aspect ratio information, playback time information, and the like) is acquired (step S8406), and a corresponding Vclick stream is retrieved from the Vclick Info file on the basis of at least some pieces (e.g., PGC number) of acquired information (step S8407). For example, if the playback information acquired in step S8406 is PGC#1 in FIG. 66, Vclick streams #1 to #3 are retrieved in step S8407. If data of the Vclick streams #1 to #3 are currently stored in the buffer 209 (YES in step S8408), playback of the Vclick streams #1 to #3 immediately starts in synchronism with the current DVD playback (step S8405).

If data of the Vclick streams #1 to #3 are not currently stored in the buffer 209 (NO in step S8408), data of the retrieved Vclick streams #1 to #3 are loaded onto the buffer 209 (step S8410) by deleting unnecessary data from the buffer 209 (step S8409), or by overwriting the buffer area of unnecessary data. If the data size to be loaded onto the buffer 209 has reached a minimum playback size (e.g., 12 kbytes), playback of the buffered Vclick streams starts in synchronism with the current DVD playback (step S8405).

Upon loading onto the buffer 209 in steps S8403 and S8410, a "NULL_AU" field shown in FIGS. 48 and 49 is not transferred (whether or not an AU is "NULL_AU" can be identified by a flag (not shown) in the "Vclick AU Header" in FIG. 48).

The method of eliminating unwanted data transfer from the buffer 209 to the media decoder 216 and the overhead on the process of the media decoder 216, which is produced accordingly, by arranging the "NULL_AU" on the Vclick stream VCS, has been described. However, when an AU on the Vclick stream VCS is accessed using the Vclick access table VCA, unwanted overhead on the process can be avoided using "Null Pointer" on the Vclick access table VCA in place of the "NULL_AU" on the Vclick stream VCS. This method will be described below.

FIG. 47 shows an example of a Vclick stream VCS associated with the description (of FIGS. 48 and 49) of the "NULL AU". In the Vclick stream VCS shown in FIG. 47, access units AU are arranged in the order of #1, #2, and #3. A Vclick access table VCA corresponding to this Vclick stream VCS has a configuration, as shown in, e.g., FIG. 6. In FIG. 6, offset#3 indicates, e. g., the head position of AU#1, and offset#4 indicates the head position of AU#3. When the configuration in FIG. 6 is expanded to use the aforementioned "Null Pointer", the configuration shown in FIG. 85 is obtained.

FIG. 85 is a view for explaining an example of the configuration of the Vclick access table VCA according to another embodiment of the present invention. In the example of FIG. 85, a case wherein when a time stamp 850 is time*, a corresponding access point 851 is "NULL" is added unlike in FIG. 6. That is, FIG. 85 exemplifies the Vclick access point table VCA when the Null Pointer (one of file pointers fp) indicating "NULL" is used.

"NULL" in the access point 851 in FIG. 85 is a flag which means that "the active time of an AU in the Vclick stream VCS of interest has no intersection (or no relation) to a time range equal to or larger than time* and less than time#4". Assume that the moving image clock T supplied from the interface handler 207 to the meta data manager 210 in FIG. 2 satisfies:

$$\text{time*} <= T < \text{time\#4}$$

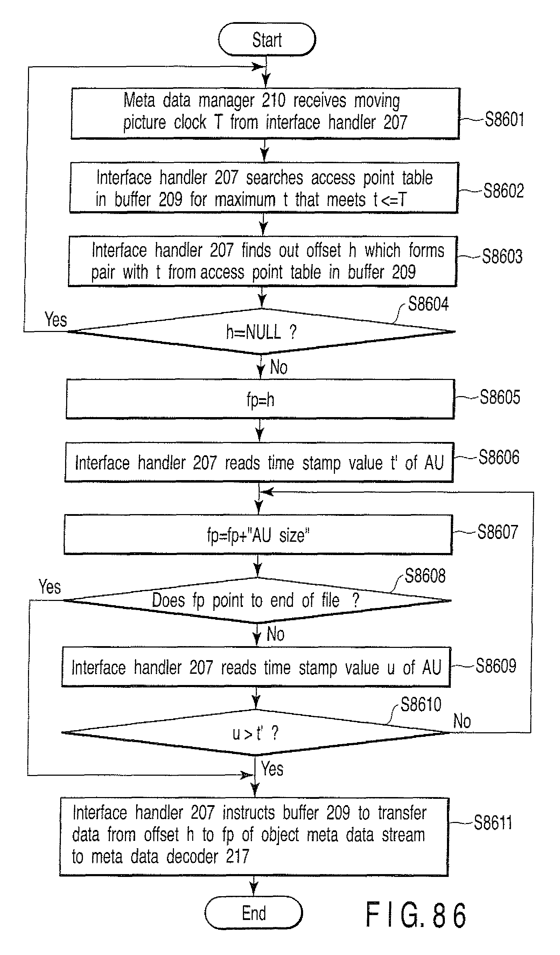

At this time, the meta data manager 210 searches the Vclick access table VCA in FIG. 85 for the "NULL" flag. When the "NULL" flag is obtained, the meta data manager 210 ends its operation or starts the next operation without loading any Vclick stream VCS. An example of the operation of the meta data manager 210 in this case is shown in the flowchart of FIG. 86.

FIG. 86 is a flowchart for explaining an example of the processing sequence of the meta data manager according to another embodiment of the present invention. More specifically, upon reception of the moving image clock T from the interface handler 207 (step S8601), the meta data manager 210 searches for an access point table in the buffer 209 for maximum t that meets t <= T (step S8602), and finds out an offset value h that forms a pair with t (step S8603). If the found h is "NULL" (if t obtained in step S8602 corresponds to "time*" in the example of FIGS. 47, 49, and 85) (YES in step S8604), the flow returns to step S8601 to repeat the processes in step S8601 to S8604.

If the found h is not "NULL" (if t obtained in step S8602 corresponds to "time#4" in the example of FIGS. 47, 49, and 85) (NO in step S8604), the value of a file pointer fp is set to be h (step S8605). The interface handler 207 reads a time stamp value t' (in the example of FIG. 85, "time#4" of the time stamp 850 corresponding to "offset#4" of the access point 851) of an access unit AU corresponding to this h (step S8606).

Next, the file pointer fp is changed to a value as the sum of the current fp and the current AU size (step S8607). It is then checked if the changed fp points to the end of the Vclick Info file. If fp does not point to the end of the file (NO in step S8608), the interface handler 207 reads a time stamp value u of the current AU (step S8609). If the read time stamp value u is not larger than the time stamp value t' (NO in step S8610), the flow returns to step S8607 to repeat the processes in steps S8607 to S8610. If u > t' (YES in step S8610) or if fp points to the end of the file (YES in step S8608), the interface handler 207 issues a command to the buffer 209 to "transfer data from the offset h to the file pointer fp of the object meta data stream (the Vclick stream VCS including the current AU) to the meta decoder 217" (step S8611). In this manner, the operation example (FIG. 86) of the meta data manager 210 "when the Null pointer indicating "NULL" is used" ends.

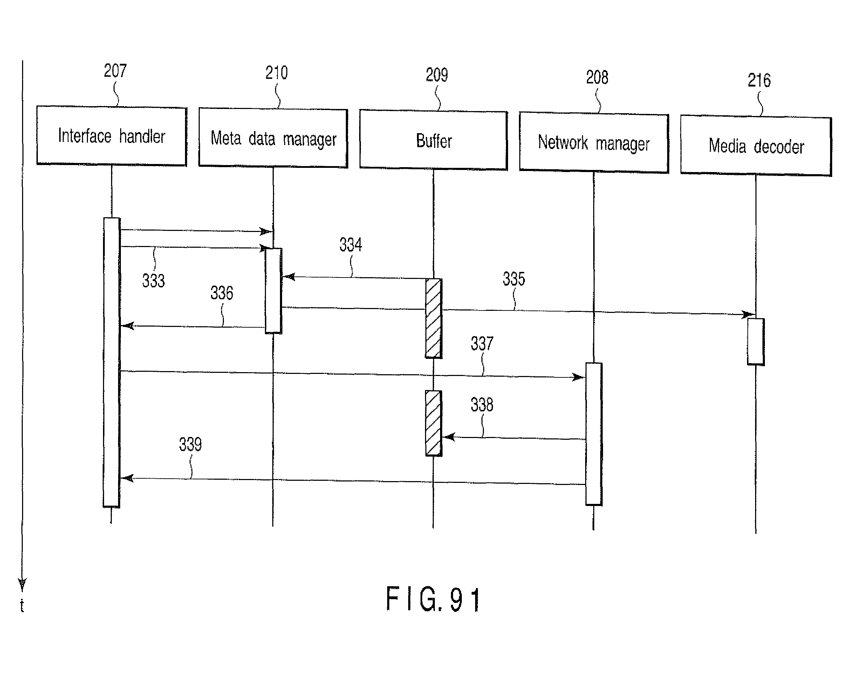

FIG. 87 is a view for explaining a buffer assign model (an example of an initialization document) according to still another embodiment of the present invention. A model for assigning a buffer for Vclick data VCD will be explained below in practice. In FIG. 87, reference numeral 322 denotes a ring buffer which corresponds to the buffer 209 in FIG. 2 (or FIG. 91, 98, 104, or 106 to be described later), and to which a specific size is assigned by an initialization document 320. Alternatively, this ring buffer 322 may be a buffering area locally assured on a work memory (not shown).

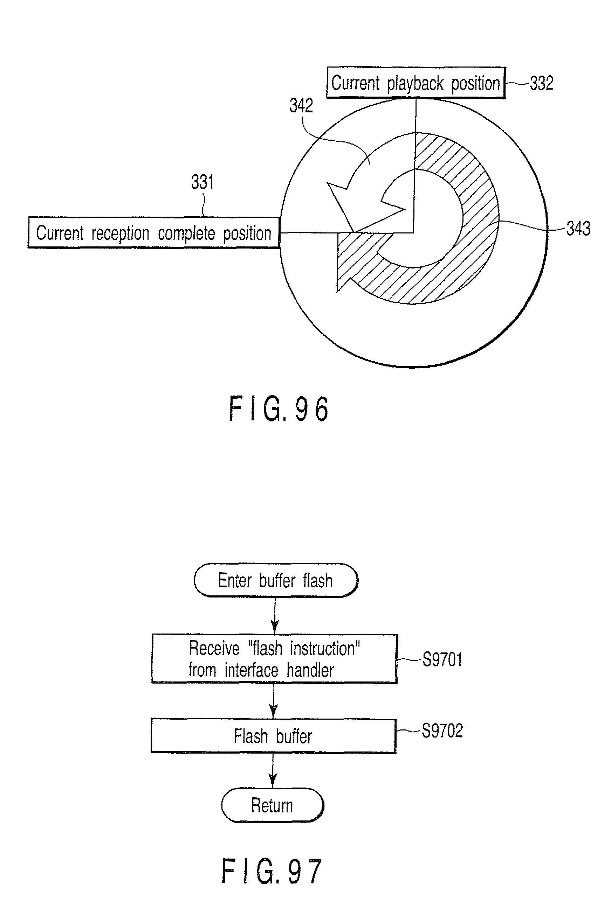

In order to define the buffer size of the ring buffer 322 (209 in FIG. 2), the initialization document 320 such as a Loading Information file or the like, which is described in XML, is used. Assignment of the buffer 322 (corresponding to 209 in FIG. 2) in the XML document is defined by setting "Assign" in the value of a name attribute in a memory tag, and the size to be assigned is defined by the value of a size attribute in the memory tag (this definition description method is 321 in the example of FIG. 87). Every time this initialization document 320 is loaded, the buffer 322 is assigned. At this time, a playback start timing determination definition 323 that sets the storage timing of contents for a designated size in the buffer 322 as the playback start timing, and from that timing playback is started may be added. This playback start timing determination definition is defined by setting "Playback" in the name attribute in the memory tag, and the assign size of the buffer 322 is defined by the value of the size attribute. Immediately after buffer assign, or immediately before start of use, the buffer 322 is flashed (initialized) at least once (this buffer flash will be explained later with reference to FIG. 97).

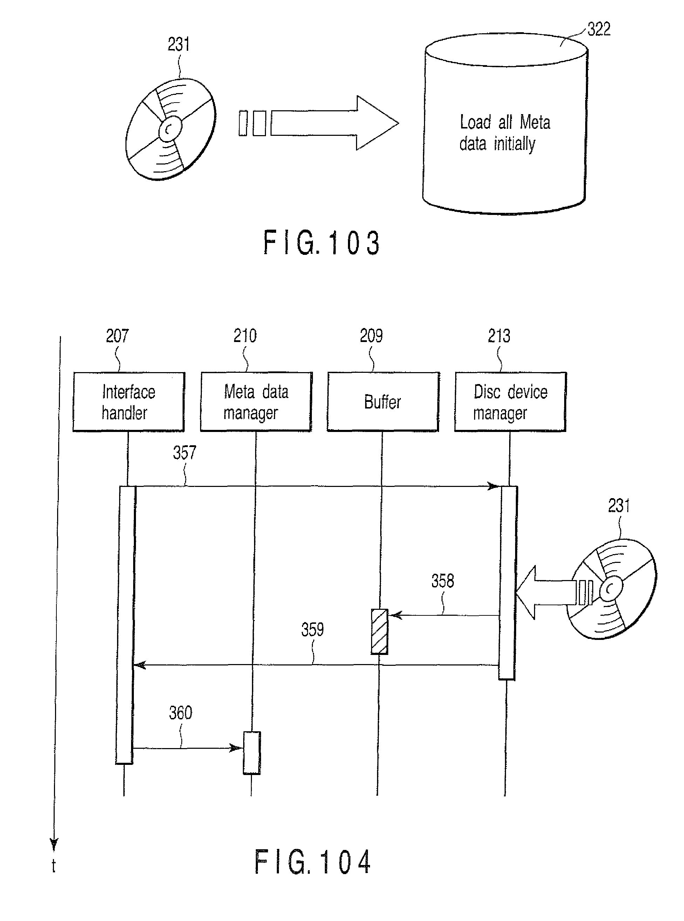

The initialization document 320 can be stored in Vclick data VCD (more specifically, in the Vclick Info VCI in, e.g., FIG. 53; in VCKINDEX.IFO file in FIG. 54) in the enhanced DVD-Video disc (the disc in FIG. 53 or 231 in FIGS. 103 to 106). Alternatively, the initialization document 320 may be stored in Vclick data to be downloaded stored on the server. When both the initialization documents on the disc and server are available, the initialization document on the server is always referred to. Alternatively, the initialization document to be referred to may be determined by version management.

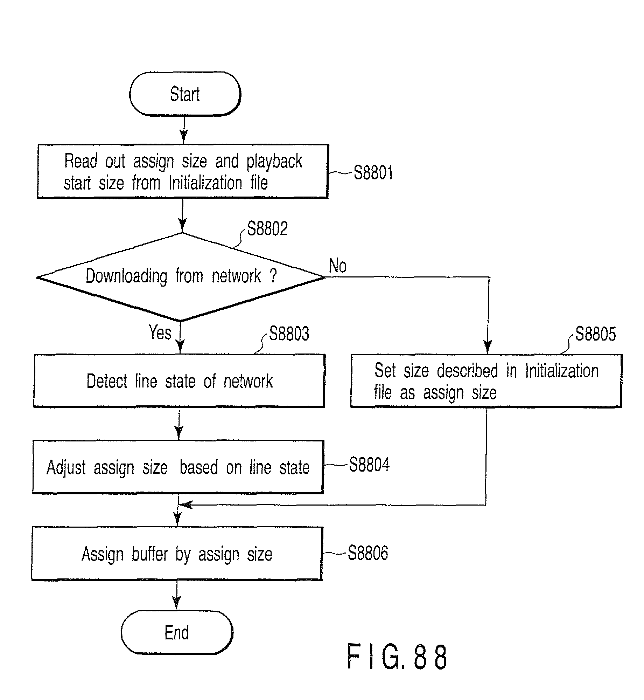

FIG. 88 is a flowchart for explaining the processing sequence upon buffer assign according to still another embodiment of the present invention. When a Vclick stream VCS is to be downloaded via network connection, a sufficient downloading speed cannot often be assured depending on the line state. In this case, since a wasteful buffer area can be used by another engine, the following processes can be done upon buffer assign.

&lt;1&gt; The assign size 321 and playback start size 323 are read out from the initialization document 320 in FIG. 87 (step S8801).

&lt;2&gt; It is checked if a stream is to be downloaded from the network (step S8802).

&lt;3&gt; If a stream is to be downloaded from the network (YES in step S8802), the current line state of the network is detected (step S8803).

&lt;4&gt; The buffer assign size is adjusted depending on the detected line state (step S8804). For example, the Internet line is busy and not easy to be connected depending on the use time band. At this time, all the contents of the buffer may be read out before the contents of the buffer are updated by those which are downloaded from the network. In this case, playback of the Vclick stream may be interrupted.

In such situation, some buffer sizes according to the line states may be determined on the basis of previous empirical data. For example, if the line is always connected, the buffer size is set to be 2 Mbytes; if the line is not easy to be connected, it is set to be 8 Mbytes; and in the intermediate state, it is set to be 4 Mbytes. When 8 Mbytes are assigned to the buffer size, if the line is connected, Vclick data are fully stored in the buffer using 8 Mbytes. As a result, since the size of Vclick data to be buffered is large after the line is disconnected once until the line is connected again, playback of the Vclick stream can be prevented from being interrupted.

<5> If a stream is not to be downloaded (NO in step S8802), the assign size described in the initialization document 320 is used as the assign size (step S8805) upon assigning the buffer 322.

<6> The buffer 322 is assigned by the assign size (step S8806).

As described above, the process for checking if the assign size described in the initialization document 320 is used or the assign size is adjusted depending on the line state can be executed. When the assign size has been adjusted in accordance with on the line state (change the size of 321 in FIG. 87), if the contents are "designated with the playback start timing" (if the size designation 323 is included in FIG. 87), the storage contents size are also changed to satisfy at least "changed assign size" ≥ "storage contents size at the playback start timing".

In this way, the "changed assign size" need not be increased in consideration of "storage contents size at the playback start timing" (e.g., when the buffer assign size is changed from 4 Mbytes to 2 Mbytes in accordance with the line state, if 3 Mbytes are designated as the playback start size at that time, the actual buffer assign size is set to be 3 Mbytes or more by increasing 1 Mbyte). That is, in this case, the playback start size 323 in FIG. 87 is changed to 2 Mbytes or less. In this way, a wasteful buffer area (for 1 Mbyte in the above example) can be used by another engine.

Also, only the assign size at the playback start timing can be similarly adjusted depending on the network state. More specifically, the description of the playback start size (playback start timing determination definition) 323 in FIG. 87 is changed to meet "current assign size" ≥ "storage contents size at the playback start timing" (the designated size is set to be smaller than the current size designation 323). In this case, the load time of Vclick data until playback start can be shortened.

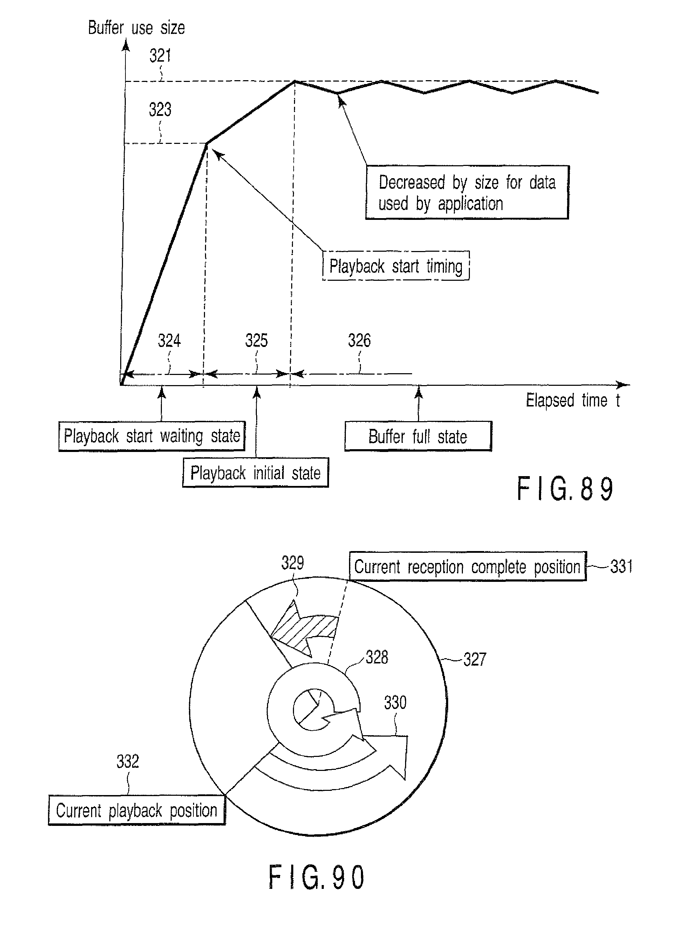

FIG. 89 is a graph for explaining a use example of a buffer according to still another embodiment of the present invention. FIG. 89 exemplifies a change in use size of the buffer 322 (209 in FIG. 2, 91, or the like) (in this case, processes from buffer creation until write start of actual data are omitted).

Immediately after data write onto the buffer 322 (or 209) starts, playback does not start until data is stored in the buffer 322 by a size (323) described in the playback start timing determination definition 323 in the initialization document 320 shown in FIG. 87 (or a size defined by a player) (a playback start waiting state 324 in FIG. 89). This playback start timing can be defined by either the time after the server-client connection is established (the time after downloading) or the storage size of the contents on the buffer 322 (or 209).

When the time after the server-client connection is established is used, that time is determined based on the download speed and the size of the buffer 322 (or 209). This time allows to download contents (Vclick data) up to a size that does not interrupt playback even when re-connection is required due to an error such as line disconnection or the like, and when the contents stored in the buffer 322 are used and downloading starts by establishing re-connection. This time is defined and determined by the player side. In this case, since the player side defines the time, an optimal time to each throughput according to an environment can be defined.

When the time is determined based on the contents storage size in the buffer 322 (or 209), the contents storage size can be defined as follows. That is, the aforementioned time is defined by the storage size that stores contents as large as playback is not interrupted in the buffer 322 until the contents stored in the buffer 322 are used and downloading starts by establishing re-connection, even when re-connection is required due to an error such as line disconnection or the like.

When the standard (Enhanced DVD standard or EDVD standard) applied to this embodiment specifies a lowest throughput (e.g., 128 kbps), "defining the contents as large as playback is not interrupted by the storage size of the buffer 322" can be accomplished in the contents playback start timing in addition to the definition on the apparatus (player) side.

After that, "data write" and "read for playing back data" are parallelly executed (a playback initial state 325 in FIG. 89). When the download speed to the buffer is sufficiently faster than the playback use size from the buffer, the buffer 322 gradually increases the use size (see the upward-sloping curve in the state 325 in FIG. 89). However, the buffer 322 does not become full of data yet. After the data size in the buffer 322 increases up to the assign size 321 in the initialization document 320 (a buffer full state 326 in FIG. 89), the use size of the buffer 322 repeats decreasing by the data size used by the application and increasing due to data read along with an elapse of time. Hence, small increasing and decreasing are repeated, as indicated by the solid curve in the buffer full state 326 in FIG. 89.

FIG. 90 and FIGS. 92 to 96 are views for explaining a use example of the ring buffer according to still another embodiment of the present invention. In this case, since the buffer 322 (209 in FIGS. 2, 91, and the like) are used by a predetermined size, it is used as a ring buffer. The use method will be explained below.

In FIG. 90, the buffer 322 is considered as a continuous one, and is indicated by a circle 327 in FIG. 90. The circle is used counterclockwise (328) to record newly received data. A received Vclick stream VCS is recorded (329) counterclockwise from a current reception complete position 331, and a Vclick stream VCS is output (330) counterclockwise from a current playback position 332 every time it is required.

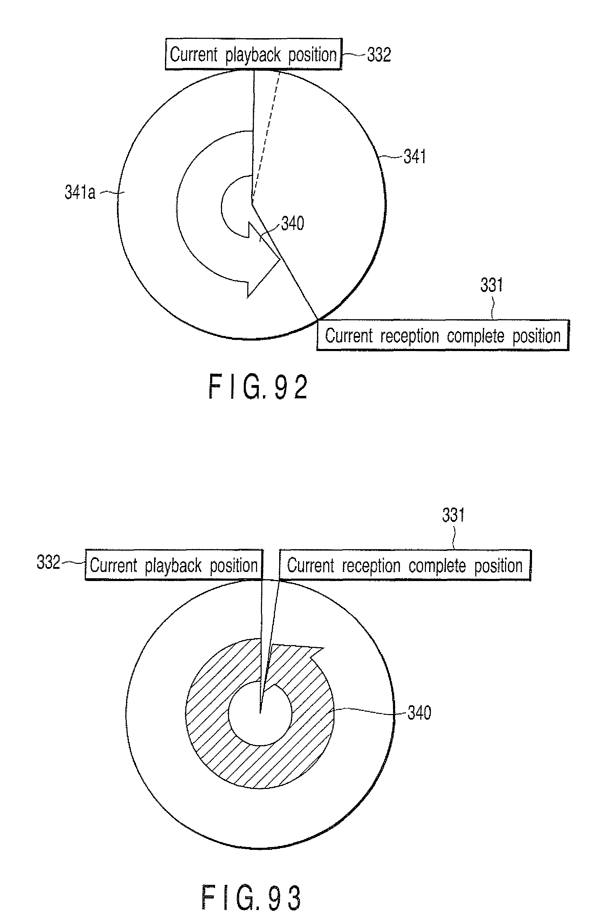

In such use method, in, e.g., the playback start waiting state 324 and playback initial state 325 in FIG. 89, an area 341a from the left side of the current playback position 332 to the current reception complete position 331 is written with data, and an area 341 from the right side of the current reception complete position 331 to the current playback position 332 is not written with data, as shown in FIG. 92. After an elapse of a given time period, write to the buffer 322 (209) catches up with read by playback, and the buffer becomes the buffer full state (326 in FIG. 89). Then, a shown in FIG. 93, the current playback position 331 gets close to the current reception complete position 332. After that, since "write" is made by a size used by "read by playback", the use size of the buffer 322 repeats small seesaw movements.

The aforementioned ring buffer 322 is applied to the buffer 209 in FIG. 2 as follows. That is, time stamps of access units AU included in a Vclick stream VCS are arranged in ascending order. The interface handler 207 in FIG. 2 sends a given moving picture clock value T to the meta data manager 210. The meta data manager 210 retrieves an access unit AU including the received clock value T from the buffer 209 (322 in FIG. 87). After the AU of interest is retrieved, this AU is transferred from the buffer 209 to the media decoder 217. Upon this transfer, an area occupied by (old) AUs loaded onto the buffer 29 before the AU of interest is loaded is released from the buffer 209. The released buffer area corresponds to the area 341 in FIG. 92. The meta data manager 210 instructs the buffer 209 to read a Vclick stream VCS from the network 221 by the total byte size of the released area. Alternatively, the meta data manager 210 instructs the network manager 208 via the interface handler 207 to read a Vclick stream VCS from the network 221 by the total byte size of the released area.

FIG. 91 is a chart for explaining the algorithm of "read by playback" and "write" according to still another embodiment of the present invention. The interface handler 207 sends a given moving picture clock value 333 to the meta data manager 210. The meta data manager 210 retrieves an AU including the received clock value 333. At this time, if AUs are redundantly designated based on the moving picture clock value from the interface handler 207, the meta data manager 210 may handle them (more specifically, it uses information of one of the redundant AUs). The meta data manager 210 reads out AU data 334 of interest from the buffer 209 (322 in FIG. 87), and outputs that data 335 to the media decoder 216. The meta data manager 210 notifies the interface handler 207 of a total output byte size 336. The interface handler 207 then requests the network manager 208 to load data for a byte size 337 equal to the total output byte size 336. Then, the network manager 208 downloads a Vclick stream VCS from the server 201 by the designated byte size, and writes it in the buffer 209 (322) (338). The network manager 208 notifies the interface handler 207 of a written byte size 339. The aforementioned operations are repeated when required. This is a basic model.

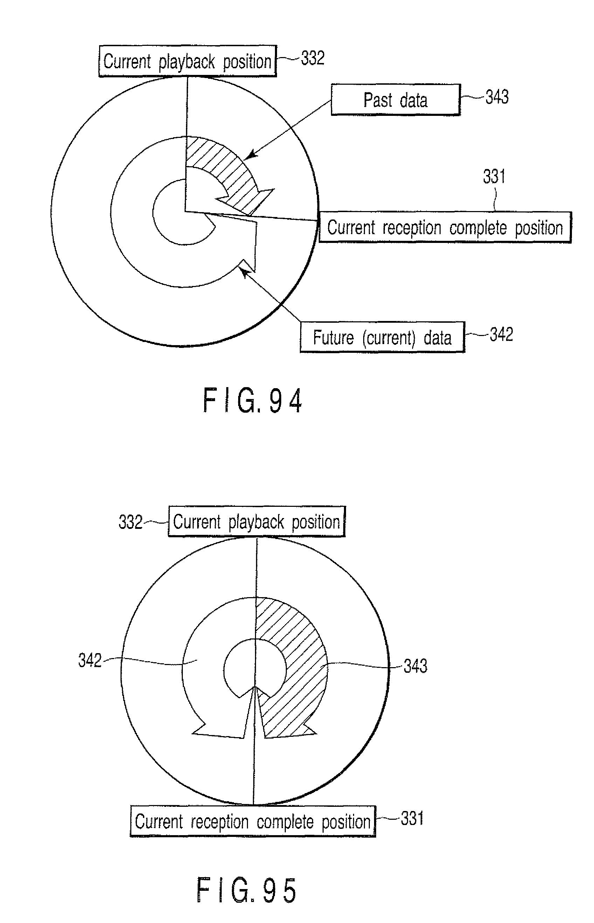

A special buffer model will be explained below with reference to FIGS. 94 to 96. In this model, a gap is formed between the "current reception complete position 331" and "current playback position 332" to "hold past data before the current playback position" on purpose. In this way, the availability or response to the user operation upon special playback is improved. Assume that there are Vclick_AUs at 0.5-ms intervals for two hours. At this time, when two target objects are always displayed on the screen, the size of the Vclick stream VCS is about 7 Mbytes. Also, if the assign size of the buffer 322 (209 in FIGS. 2, 91, and the like) is 2 Mbytes, a 25% buffer area is used as past data 343 on purpose in case of FIG. 94. Under the aforementioned condition, a Vclick stream VCS for about 8.5 minutes is stocked on the buffer in calculation. If fast reverse playback is made, since past data is held on the buffer, playback of Vclick data which is to be played back simultaneously with fast reverse playback of a moving picture can be prevented from being interrupted, and the availability or response to the user operation can be improved.

If the same condition as in the above example is used, FIG. 95 uses a 50% buffer area as the past data 343 on purpose. Under the aforementioned condition, a Vclick stream VCS for about 17 minutes is stocked on the buffer in calculation. If fast reverse playback is made, since past data with a larger size is held on the buffer, playback of Vclick data which is to be played back simultaneously with fast reverse playback of a moving picture can be prevented from being interrupted for a long period of time, and the availability or response to the user operation can be improved.

In the example of FIG. 96, a 75% buffer area is used as the past data 343 on purpose. Under the aforementioned condition, a Vclick stream VCS for about 25.5 minutes is stocked on the buffer in calculation. If fast reverse playback is made, since past data with a still larger size is held on the buffer, playback of Vclick data which is to be played back simultaneously with fast reverse playback of a moving picture can be prevented from being interrupted for a longer period of time, and the availability or response to the user operation can be improved.

FIG. 97 is a flowchart for explaining the processing sequence (buffer flash model) upon buffer flash (initialization) according to still another embodiment of the present invention. More specifically, upon reception of a flash instruction from the interface handler 207 (step S9701), the buffer 209 is flashed (erased) (step S9702). This buffer flash process can be done at the following timings:

(a) at the timing of buffer generation based on the initialization document;
(b) at the timing of a jump operation of a video picture whose playback is in progress to the future or past (if no video data is stored on the buffer);
(c) at the timing of line disconnection (intentional line disconnection such as a change in stream acquisition destination, or the like) ... clear the buffer after connection is closed.

In other words, when a data access other than that to the buffer (209 in FIG. 2; 322 in FIG. 87) occurs, this buffer is cleared or flashed (step S9702).

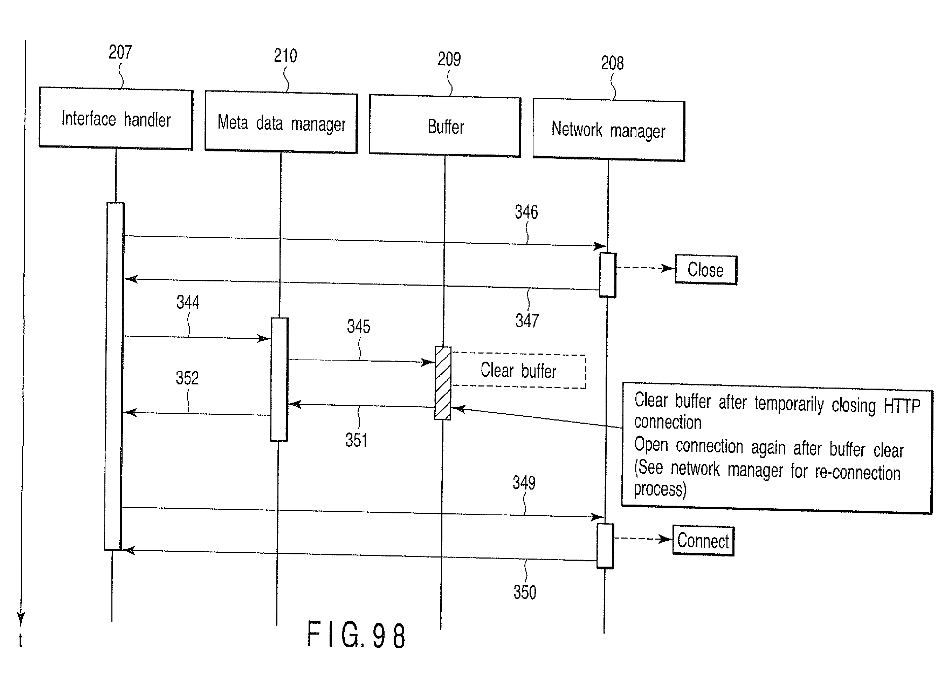

FIG. 98 is a chart for explaining the "sequence upon buffer clear" according to still another embodiment of the present invention. In this example, the interface handler 207 notifies the buffer flash timing, and the buffer 209 is flashed every time the interface handler 207 notifies the meta data manager 210 of that timing.

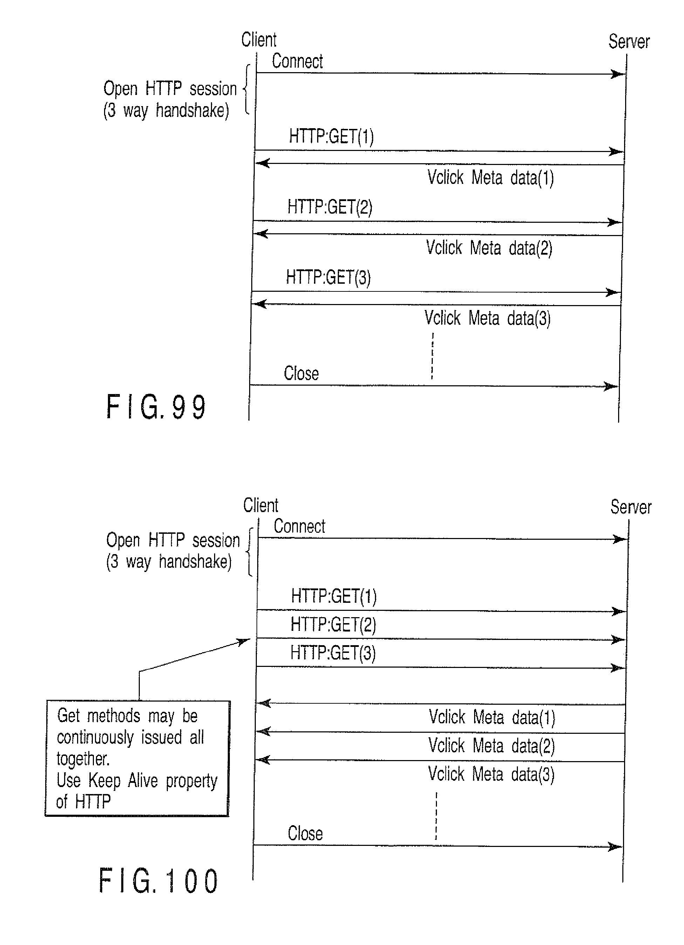

FIG. 99 is a chart for explaining "special playback by continuously issuing Get commands" (a model that requires Vclick data every generation of an event) according to still another embodiment of the present invention. FIG. 99 shows a model when the line is temporarily disconnected, and a Vclick stream VCS is downloaded again. The interface handler 207 issues a line disconnection instruction 346 (FIG. 98) to the network manager 208. After completion of the line disconnection process, the network manager 208 transmits a line disconnection completion message 347 (FIG. 98) to the interface handler 207. After that, the interface handler 207 issues a clear instruction 344 (FIG. 98) of the buffer 209 to the meta data manager 210. The meta data manager 210 transmits a clear completion message 352 (FIG. 98) to the interface handler 207 after completion of buffer clear. After that, if line re-connection is required, the interface handler 207 transmits a line connection message 348 (FIG. 98) to the network manager 208, and receives a line connection completion message 350 (FIG. 98) after completion of connection. Next, required processes are executed.

The HTTP protocol has the property that data are sent in the order of issuance of HTTP:GET methods, and the data output timings are not re-ordered based on the method issuance timings if the connection is kept (an explanation of Keep alive). This property is called the Keep Alive property. Using this Keep Alive property, it becomes possible to execute the following operations. That is, according to the Keep Alive property, information is neither interrupted nor re-ordered unless the buffer is flashed. If an HTTP:GET method is issued every time an event occurs, Vclick streams VCS are downloaded in turn (FIG. 99).

FIG. 100 is a chart for explaining "special playback by continuously issuing Get commands" (a model having a predetermined order of occurrence of events) according to still another embodiment of the present invention. If the order of occurrence of events is known in advance, HTTP:GET methods may be issued all together. Using this Keep Alive property, Vclick streams VCS can be downloaded in an arbitrary order to allow shuffle playback or random playback.

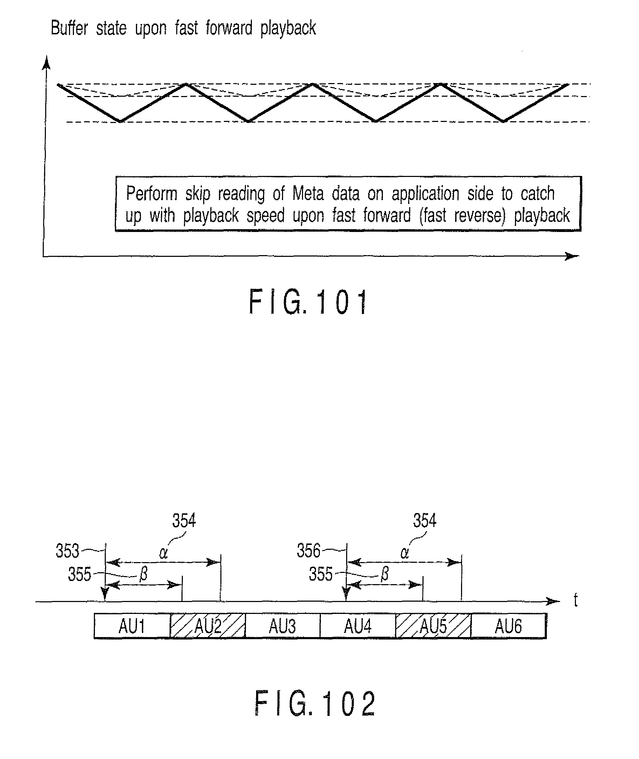

FIG. 101 is a graph for explaining a "buffer state upon fast forward playback" according to still another embodiment of the present invention. Upon fast forward (FF) or fast reverse (FR) playback, since the playback pace of DVD contents becomes faster, the read pace of meta data from the buffer 209, which is synchronized with the DVD contents, also becomes faster. Hence, meta data buffered on the buffer 209 is consumed faster. If replenishment of meta data to the buffer 209 cannot catch up with such fast consumption, the buffer 209 is temporarily emptied in some cases. As a result, a wait time is produced until minimum required meta data (e.g., data with the size described in 323 in FIG. 87) is buffered on the buffer 209 again. Hence, supply of meta data from the buffer 209 cannot catch up with the fast DVD playback speed, and a playback synchronization relationship between them can no longer be established.

This problem can be solved by programming an application (control firmware) to make skip reading of meta data (Vclick data) in buffering upon fast forward or fast reverse playback. For example, the data size upon buffering data for 10 sec at 0.1-sec intervals is equal to that upon buffering data for 100 sec at 1-sec intervals. In this case, even when meta data is read out from the buffer 209 in synchronism with 10x-speed FF/FR playback, the data consumption rate of the buffer 209 is apparently equal to that upon 1x-speed normal playback without skip reading in terms of playback time base. In this manner, the aforementioned problem can be solved if it is devised to make buffering of meta data to the buffer 209 catch up with the fast DVD playback speed.

In FIG. 101, the solid triangular curve exemplifies a data consumption state on the buffer 209 when no skip reading is made (or skip reading intervals are insufficient). In this case, since meta data in the buffer 209 is consumed in a short period of time in synchronism with fast DVD playback, the meta data size buffered on the buffer 209 increases and decreases abruptly. On the other hand, the broken triangular curve in FIG. 101 exemplifies a data consumption state of the buffer 209 when appropriate skip reading is done and buffering catches up with the playback speed without problems in fact.

FIG. 102 is a view for explaining a "method of handling access units upon fast forward or fast reverse playback (fast forward/fast reverse model)" according to still another embodiment of the present invention. Upon fast forward playback, the meta data manager 210 decimates AUs to be transferred from the buffer 209 to the media decoder 216. The interface handler 207 sends moving picture clocks (T) 353 and 356 to the meta data manager 210. The meta data manager 210 calculates times obtained by adding the received clocks T to appropriate times $\alpha$ 354 and $\beta$ 355 (for $\alpha > \beta$), and issues an instruction to transfer AUs (AU2 and AU5 in FIG. 102) with time stamps included within the range from the time T + $\beta$ to the time T + $\alpha$ to the media decoder 216. At the same time, the meta data manager 210 issues an instruction to load data for the output size from the network. The values of $\alpha$ and $\beta$ can be determined depending on the fast forward speed. In this manner, required AUs upon fast forward playback can be transferred in accordance with the speed, and Vclick data can be played back in fast forward playback. FIG. 101 shows an example of a change in use size of the buffer 209 in this case.

FIG. 103 is a view for explaining a "model when a Vclick stream is stored on a moving picture data recording medium" (when seamless playback is guaranteed) according to still another embodiment of the present invention. FIG. 104 is a chart for explaining the processing of the model in FIG. 103.

Assume that Vclick streams VCS are stored on the moving picture data recording medium 231. Since seamless playback is required, seek to the moving picture data recording medium 231 must be prevented from being generated. For this purpose, the meta data manager 210 must load all Vclick streams VCS before moving picture playback in accordance with an instruction from the interface handler 207 (FIG. 103). In this case, processing is executed, as shown in FIG. 104.

More specifically, the interface handler 207 instructs the disc device manager 213 to acquire Vclick streams VCS (357). The disc device manager 213 acquires Vclick streams VCS for the designated byte size from the moving picture data recording medium 231 and records them on the buffer 209 (358). After the streams are recorded on the buffer 209, the disc device manager 213 transmits a Vclick stream acquisition completion response 359 to the interface handler 207. The interface handler 207 notifies the meta data manager 210 of a Vclick stream acquisition completion response 360. The interface handler 207 plays back a moving picture after transmission of the Vclick stream acquisition completion response 360.

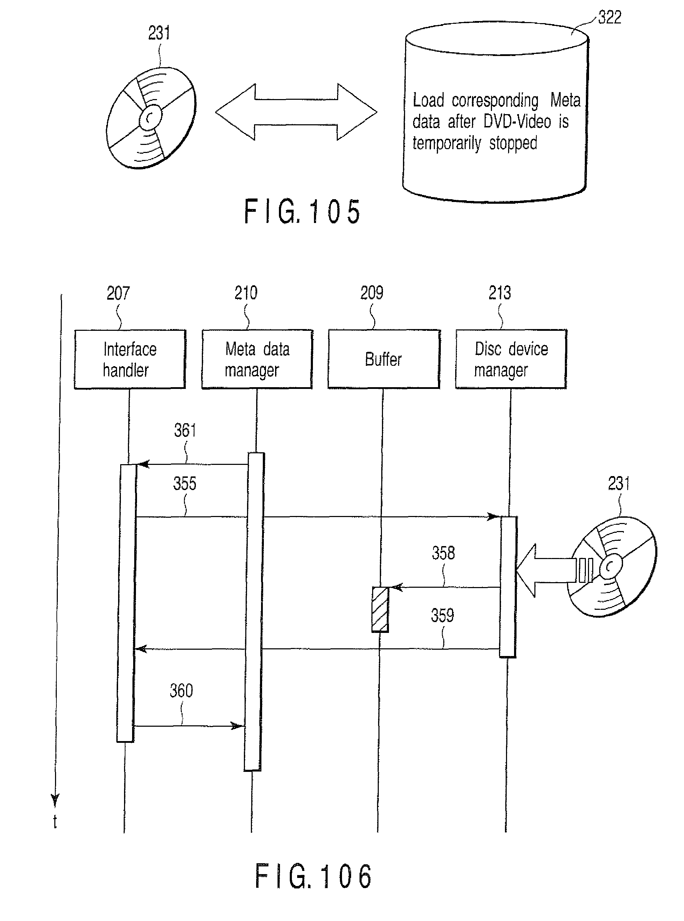

FIG. 105 is a view for explaining a "model when a Vclick stream is stored on a moving picture data recording medium" (when seamless playback is not guaranteed) according to still another embodiment of the present invention. FIG. 106 is a chart for explaining the processing of the model in FIG. 105.

Contrary to the case of FIGS. 103 and 104, when seek is to be generated, playback of a moving picture must be temporarily stopped (FIG. 105). In general, the meta data manager 210 monitors the buffer 209, and issues a "Vclick stream acquisition request 361" to the interface handler 207 when Vclick streams VCS on the buffer 209 become an empty state. The interface handler 207 performs load preparation (e.g., it stops playback of the moving picture), and repeats the same sequence as in FIG. 104 anew (FIG. 106). In this way, seamless playback can be guaranteed without generating any seek when Vclick data are stored in the buffer 209. When seamless playback need not be guaranteed, an arbitrary location can be accessed by executing the sequence from the loading process independently of the presence/absence of data on the buffer 209.

In the aforementioned embodiment, the use method of the buffer 209 can be optimized by the initialization document 320 in FIG. 87. The buffering process time is shortened not by the player-dependent method but by the contents-dependent method, and meta data can be played back with a smaller buffer size.

Furthermore, when the user makes special playback such as fast forward, fast reverse, jump playback, shuffle playback, random playback, and the like, meta data for, e.g., a total of 34 minutes can be freely assigned to the buffer by adopting the buffer models shown in FIGS. 94 to 96, and seamless playback of Vclick data together with a moving picture can be guaranteed.

Note that the present invention is not limited to the aforementioned embodiments intact, and various modifications of constituent elements may be made without departing from the scope of the invention when it is practiced. For example, the present invention can be applied not only to widespread DVD-ROM video, but also to DVD-VR (video recorder) whose demand is increasing rapidly in recent years and which allows recording/playback. Furthermore, the present invention can be applied to a playback or recording/playback system of next-generation HD-DVD, which will be prevalent soon.

The buffer 209 shown in FIG. 2 is not limited to the ring buffer that has been explained using FIG. 87 and subsequent figures. For example, a normal memory area can be partially used as the buffer 209, or a first-in, first-out type serial buffer can be used as the buffer 209.

**Claims**

1. An information recording medium (231) for use in playback information recorded thereon, the information **characterized by** comprising:

   a stream (VCS) which includes meta data of a moving picture capable of being played back upon playback of a video content, and which is formed of access units as data units capable of being processed independently; and
   a table (VCA) which includes playback time information (600 or 850) indicating a playback time of meta data, and which includes access position information (601 or 851) indicating an access position of meta data.

2. The medium according to claim 1, **characterized in that** the access position information (601 or 851) includes an offset value that allows an access to a head of the access unit.

3. The medium according to claim 1, **characterized in that** the table (VCA) adopts the same format as a time stamp of one of the access unit and the moving picture.

4. The medium according to claim 1, **characterized in that** a plurality of pieces of playback time information of the meta data are present, and the plurality of pieces of playback time information are arranged at equal intervals.

5. The medium according to claim 1, **characterized in that** a plurality of pieces of playback time information of the meta data are present, and the plurality of pieces of playback time information are arranged in ascending order of time.

6. The medium according to claim 1, **characterized in that** the access unit includes a null access unit that does not display the meta data, and the table (VCA) includes information indicating the presence of the null access unit.

7. An information playback method, **characterized by** comprising:

reading out information from a recording medium storing a stream (VCS) which includes meta data of a moving picture capable of being played back upon playback of a video content, and which is formed of access units as data units capable of being processed independently, and storing a table (VCA) which includes playback time information (600 or 850) indicating a playback time of meta data, and which includes access position information (601 or 851) indicating an access position of meta data; and playing back the video content, and playing back the meta data on the basis of the playback time information (600 or 850) and the access position information (601 or 851) included in the table (VCA).

8. The method according to claim 7, **characterized in that** the access position information (601 or 851) includes an offset value that allows an access to a head of the access unit.

9. The method according to claim 7, **characterized in that** the table (VCA) adopts the same format as a time stamp of one of the access unit and the moving picture.

10. The method according to claim 7, **characterized in that** a plurality of pieces of playback time information of the meta data are present, and the plurality of pieces of playback time information are arranged at equal intervals.

11. The method according to claim 7, **characterized in that** a plurality of pieces of playback time information of the meta data are present, and the plurality of pieces of playback time information are arranged in ascending order of time.

12. The method according to claim 7, **characterized in that** the access unit includes a null access unit that does not display the meta data, and the table (VCA) includes information indicating the presence of the null access unit.

13. An information recording method, **characterized by** comprising:

recording on a first area of an information recording medium (231), a stream (VCS) which includes meta data of a moving picture capable of being played back upon playback of a video content, and which is formed of access units as data units capable of being processed independently; and
recording on a second area of the information recording medium (231), a table (VCA) which includes playback time information (600 or 850) indicating a playback time of meta data, and which includes access position information (601 or 851) indicating an access position of meta data.

14. The method according to claim 13, **characterized in that** the access position information (601 or 851) includes an offset value that allows an access to a head of the access unit.

15. The method according to claim 13, **characterized in that** the table (VCA) adopts the same format as a time stamp of one of the access unit and the moving picture.

16. The method according to claim 13, **characterized in that** a plurality of pieces of playback time information of the meta data are present, and the plurality of pieces of playback time information are arranged at equal intervals.

17. The method according to claim 13, **characterized in that** a plurality of pieces of playback time information of the meta data are present, and the plurality of pieces of playback time information are arranged in ascending order of time.

**18.** The method according to claim 13, **characterized in that** the access unit includes a null access unit that does not display the meta data, and the table (VCA) includes information indicating the presence of the null access unit.

FIG.1A

FIG.1B

FIG. 2

FIG. 3

FIG. 4

FIG.5

| Time stamp | Access point |
|------------|--------------|
| time#1 | offset#1 |
| time#2 | offset#2 |
| time#3 | offset#3 |
| time#4 | offset#4 |
| ⋮ | ⋮ |
| time#n | offset#n |

FIG.6

700

Vclick stream

701    702                              702        703

| Packet header | Vclick AU | Vclick AU | Padding data |

Payload

Transmission packet

# F I G. 7

800

Vclick AU

801                          802

| Packet header | Vclick AU (Former half) |

Transmission packet 1

803                    804        805

| Packet header | Vclick AU (Latter half) | Padding data |

# F I G. 8

Transmission packet 2

Client                                                    Server

RTSP : DESCRIBE

OK,SDP  file

RTSP : SETUP

OK,ID

RTSP : PLAY

OK

RTP : content

RTP : content

RTP : content

RTP : content

RTSP : TEARDOWN

OK

# F I G. 9

Client                                                    Server

Open TCP session
(3 way handshake)

HTTP : GET

Vclick  stream

Close(FIN)

(FIN ACK)

Close TCP session

(FIN)

(FIN ACK)

# F I G. 10

Vclick stream

| Field | Number of bits | Number of bytes | Value | Comment |
|---|---|---|---|---|
| vcs_start_code | 16 | 2 | 01h | |
| data_length | 32 | 4 | | |
| data_bytes | | | | |

# F I G. 1 1

Header of Vclick stream

| Field | Number of bits | Number of bytes | Value | Comment |
|---|---|---|---|---|
| vcs_header_code | 16 | 2 | 02h | |
| data_length | 16 | 2 | | |
| vclick_version | 8 | 1 | 01h | |
| bit_rate | 16 | 2 | | |

# F I G. 1 2

Vclick AU

| Field | Number of bits | Number of bytes | Value | Comment |
|---|---|---|---|---|
| vclick_start_code | 16 | 2 | | |
| data_length | 16 | 2 | | unsigned integer |
| data_bytes | | | | |

# F I G. 1 3

Header of Vclick AU

| Field | Number of bits | Number of bytes | Value | Comment |
|---|---|---|---|---|
| vau_header_vode | 16 | 2 | | |
| data_length | 16 | 2 | | |
| filtering_id | 12 | 2 | | |
| reserved | 4 | | 000000h to ffffffh | |
| object_id | 16 | 2 | 0000h to ffffh | |
| object_subid | 16 | 2 | 0000h to ffffh | |
| contine_flag | 1 | 1 | 0 or 1 | |
| reserved | 7 | | | |
| layer | 8 | 1 | 0 to 255 | |

# FIG. 14

Time stamp of Vclick AU

| Field | Number of bits | Number of bytes | Value | Comment |
|---|---|---|---|---|
| time_type | 16 | 2 | | |
| data_length | 16 | 2 | 16 | |
| VTSN | 8 | 1 | 1 to 99 | |
| TTN | 16 | 2 | 1 to 99 | TTN for TT_DOM (SRPM(4)) |
| VTS_TTN | 16 | 2 | 1 to 99 | VTS_TTN for TT_DOM (SRPM(5)) |
| TT_PGCN | 16 | 2 | | TT_PGCN for TT_DOM (SRPM(6)) |
| PTTN | 16 | 2 | 1 to 99 | Part_of_Title number for One_Sequential_PGC_Titl e(SRPM(7)) |
| CN | 8 | 1 | 1 to 255 | Cell number |
| AGLN | 8 | 1 | 1 to 9 | angle number |
| | | | | |
| '0010' | 4 | | | |
| PTS[32..30] | 3 | | | |
| marker bit | 1 | | | |
| PTS[29..15] | 15 | 5 | | |
| marker_bit | 1 | | | |
| PTS[14..0] | 15 | | | |
| marker_bit | 1 | | | |

# F I G. 15

Time stamp skip of Vclick AU

| Field | Number of bits | Number of bytes | Value | Comment |
|---|---|---|---|---|
| time_type | 16 | 2 | | |
| data_length | 16 | 2 | 0 | |

## FIG. 16

Object attribute information

| Field | Number of bits | Number of bytes | Value | Comment |
|---|---|---|---|---|
| vca_start_code | 16 | 2 | | |
| attribute_length | 16 | 2 | | |
| data_bytes | | | | |

## FIG. 17

Type of object attribute information

| Category | Attribute | Value of attribute_id | Maximum value |
|---|---|---|---|
| Name | Name | 00h | 1 |
| Action | Action | 01h | 1 |
| Contour | Contour | 02h | 1 |
| Region | Blinking region | 03h | Maximum of only one of three attributes is present |
| | Mosaic region | 04h | |
| | Paint region | 05h | |
| Text | Text information | 06h | 1 |
| | Text attribute | 07h | 1 |
| | Highlight effect | 08h | Maximum of one of four attributes is present simultaneously with timedtext_text |
| | Blinking effect | 09h | |
| | Scroll effect | 0ah | |
| | Karaoke effect | 0bh | |
| Layer extension | Layer extension | 0ch | 1 |

## FIG. 18

Name attribute of object

| Field | Number of bits | Number of bytes | Value | Comment |
|---|---|---|---|---|
| attribute_id | 16 | 2 | 00h | |
| data_length | 16 | 2 | | |
| language | 16 | 2 | | ISO-639 |
| name_length | >=8 | >=1 | | |
| name | name_length*8 | name_length | | |
| annotation_length | >=8 | >=1 | | |
| annotation | annotation_length*8 | annotation_length | | |

# FIG.19

Action attribute of object

| Field | Number of bits | Number of bytes | Value | Comment |
|---|---|---|---|---|
| attribute_id | 16 | 2 | 01h | |
| data_length | 16 | 2 | | |
| script_language | 8 | 1 | | |
| script_length | >=8 | >=1 | | |
| script | script_length*8 | script_length | | |

# FIG.20

Contour attribute of object

| Field | Number of bits | Number of bytes | Value | Comment |
|---|---|---|---|---|
| attribute_id | 16 | 2 | 02h | |
| data_length | 16 | 2 | 5 | |
| color_r | 8 | | 0 to 255 | unsigned char |
| color_g | 8 | 4 | 0 to 255 | unsigned char |
| color_b | 8 | | 0 to 255 | unsigned char |
| color_a | 8 | | 0 to 255 | unsigned char |
| line_type | 8 | 1 | 0 to 255 | |
| thickness | 8 | 1 | 0 to 255 | unsigned char |

# FIG.21

Blinking region attribute of object

| Field | Number of bits | Number of bytes | Value | Comment |
|---|---|---|---|---|
| attribute_id | 16 | 2 | 03h | |
| data_length | 16 | 2 | 5 | |
| color_r | 8 | | 0 to 255 | unsigned char |
| color_g | 8 | 4 | 0 to 255 | unsigned char |
| color_b | 8 | | 0 to 255 | unsigned char |
| color_a | 8 | | 0 to 255 | unsigned char |
| interval | 8 | 1 | | unsigned char |

# F I G. 2 2

Mosaic region attribute of object

| Field | Number of bits | Number of bytes | Value | Comment |
|---|---|---|---|---|
| attribute_id | 16 | 2 | 04h | |
| data_length | 16 | 2 | 2 | |
| mosaic_size | 8 | 1 | 1 to 255 | unsigned char |
| randomness | 8 | 1 | | |

# F I G. 2 3

Paint region attribute of object

| Field | Number of bits | Number of bytes | Value | Comment |
|---|---|---|---|---|
| attribute_id | 16 | 2 | 05h | |
| data_length | 16 | 2 | 4 | |
| color_r | 8 | | 0 to 255 | unsigned char |
| color_g | 8 | 4 | 0 to 255 | unsigned char |
| color_b | 8 | | 0 to 255 | unsigned char |
| color_a | 8 | | 0 to 255 | unsigned char |

# F I G. 2 4

Text information of object

| Field | Number of bits | Number of bytes | Value | Comment |
|---|---|---|---|---|
| attribute_id | 16 | 2 | 06h | |
| data_length | 16 | 2 | | |
| language | 16 | 2 | | ISO_639 |
| char_code | 4 | | | |
| reserved | 1 | 1 | | |
| direction | 3 | | | |
| text_length | >=8 | >=1 | | |
| text | text_length*8 | text_length | | |

# FIG.25

Text attribute of object

| Field | Number of bits | Number of bytes | Value | Comment |
|---|---|---|---|---|
| attribute_id | 16 | 2 | 07h | |
| data_length | 16 | 2 | | |
| font_type_length | >=8 | >=1 | | |
| font_type | font_length*8 | font_length | | |
| font_size | 8 | 1 | | |
| color_r | 8 | | 0 to 255 | unsigned char |
| color_g | 8 | 4 | 0 to 255 | unsigned char |
| color_b | 8 | | 0 to 255 | unsigned char |
| color_a | 8 | | 0 to 255 | unsigned char |

# FIG.26

Text highlight effect attribute of object

| Field | Number of bits | Number of bytes | Value | Comment |
|---|---|---|---|---|
| attribute_id | 16 | 2 | 08h | |
| data_length | 16 | 2 | | |
| entry | >=8 | 1 | | |
| data_bytes | | | | |

# FIG.27

Entry of text highlight attribute of object

| Field | Number of bits | Number of bytes | Value | Comment |
|---|---|---|---|---|
| start_position | >=8 | | | |
| end_position | >=8 | | | |
| color_r | 8 | | 0 to 255 | unsigned char |
| color_g | 8 | 4 | 0 to 255 | unsigned char |
| color_b | 8 | | 0 to 255 | unsigned char |
| color_a | 8 | | 0 to 255 | unsigned char |

# FIG. 28

Text blinking effect attribute of object

| Field | Number of bits | Number of bytes | Value | Comment |
|---|---|---|---|---|
| attribute_id | 16 | 2 | 09h | |
| data_length | 16 | 2 | | |
| entry | 8 | 1 | | |
| data_bytes | | | | |

# FIG. 29

Entry of text blinking effect attribute of object

| Field | Number of bits | Number of bytes | Value | Comment |
|---|---|---|---|---|
| start_position | >=8 | | | |
| end_position | >=8 | | | |
| color_r | 8 | | 0 to 255 | unsigned char |
| color_g | 8 | 4 | 0 to 255 | unsigned char |
| color_b | 8 | | 0 to 255 | unsigned char |
| color_a | 8 | | 0 to 255 | unsigned char |
| interval | 8 | 1 | | |

# FIG. 30

Text scroll effect attribute of object

| Field | Number of bits | Number of bytes | Value | Comment |
|---|---|---|---|---|
| attribute_id | 16 | 2 | 0ah | |
| data_length | 16 | 2 | 2 | |
| direction | 8 | 1 | | |
| delay | 8 | 1 | | |

# FIG. 31

Text karaoke effect attribute of object

| Field | Number of bits | Number of bytes | Value | Comment |
|---|---|---|---|---|
| attribute_id | 16 | 2 | 0bh | |
| data_length | 16 | 2 | | |
| start_time | >=8 | | | |
| entry | >=8 | | | |
| data_bytes | | | | |

# FIG. 32

Entry of text karaoke effect attribute of object

| Field | Number of bits | Number of bytes | Value | Comment |
|---|---|---|---|---|
| end_time | >=8 | | | |
| start_position | >=8 | | | |
| end_position | >=8 | | | |

# FIG. 33

Layer extension attribute of object

| Field | Number of bits | Number of bytes | Value | Comment |
|---|---|---|---|---|
| attribute_id | 16 | 2 | 0ch | |
| data_length | 16 | 2 | | |
| start_time | >=8 | | | |
| entry | >=8 | >=1 | | |
| data_bytes | | | | |

# FIG. 34

Entry of layer extension attribute of object

| Field | Number of bits | Number of bytes | Value | Comment |
|---|---|---|---|---|
| end_time | >=8 | | | |
| layer | 8 | 1 | | |

# FIG. 35

Object region data of Vclick AU

| Field | Number of bits | Number of bytes | Value | Comment |
|---|---|---|---|---|
| vcr_start_code | 16 | 2 | | |
| data_length | 16 | 2 | | |
| data_bytes | | | | |

# FIG. 36

Start

S3700
User inputs playback start instruction

S3701
Is session
with server open
?

NO → S3702
Open session with server

YES

S3703
Request server to transmit Vclick data

S3704
Buffer Vclick stream for given size

S3705
Start moving picture playback
Start Vclick stream decoding

End

F I G. 3 7

Start

S3800

User inputs playback start instruction

S3801

Start moving picture playback

S3802

Is session
with server open
?

NO

S3803

Open session with server

YES

S3804

Request server to transmit Vclick data

S3805

Buffer Vclick stream

S3806

Start decoding from Vclick AU
corresponding to time stamp of moving
picture whose playback is in progress

End

FIG.38

```
                      ┌──────────────┐
                      │    Start     │
                      └──────┬───────┘
                             │        ╭─S3900
              ┌──────────────▼──────────────┐
              │ User inputs playback stop instruction │
              └──────────────┬──────────────┘
                             │        ╭─S3901
              ┌──────────────▼──────────────┐
              │   Stop moving picture playback   │
              │   Stop Vclick stream decoding    │
              └──────────────┬──────────────┘
                             │        ╭─S3902
              ┌──────────────▼──────────────┐
              │    Close session with server     │
              └──────────────┬──────────────┘
                             │
                      ┌──────▼───────┐
                      │     End      │
                      └──────────────┘
```

# FIG. 39

Start

S4000
User inputs random access playback start instruction

S4001
Is session with server open ?

YES

NO

S4002
Close session with server

S4003
Open session with server

S4004
Request server to transmit Vclick data with time stamp of playback start position

S4005
Buffer Vclick stream for given size

S4006
Start random access playback of moving picture, and start Vclick stream decoding

End

FIG. 40

Start

S4100

User inputs random access playback
start instruction

S4101

Start random access playback of
moving picture

S4102

Is session
with server open
?

YES

NO

S4103

Close session with server

S4104

Open session with server

S4105

Request server to transmit Vclick data
with time stamp of playback start
position

S4106

Buffer Vclick stream for given size

S4107

Start decoding from Vclick AU
corresponding to time stamp of moving
picture whose playback is in progress

End

FIG. 41

Start

S4200

User inputs playback start instruction

S4201

Specify Vclick stream to be used

S4202

Store Vclick stream in buffer

S4203

Start moving picture playback
Start Vclick stream decoding

End

FIG. 42

Start

S4300

User inputs random access playback
start instruction

S4301

Specify Vclick stream to be used and
access point in stream

S4302

Is access
destination located within
Vclick stream currently stored
in buffer ?

NO

YES

S4303

Store Vclick stream in buffer

S4304

Start random access playback of
moving picture, and start Vclick stream
decoding

End

F I G. 4 3

Start

↓ S4401

Meta data manager 210 receives moving picture clock T and filtering IDx from interface handler 207

↓ S4402

Meta data manager 210 finds all AUs whose lifetimes include T from object meta data stream in buffer 209

↓ S4403

Meta data manager 210 checks headers of found AUs to find all AUs whose filtering IDs are equal to x

↓ S4404

Meta data manager 210 instructs buffer 209 to output found AUs to media decoder 216

↓ S4405

Buffer 209 outputs AUs designated by meta data manager 210 to media decoder 216

↓

End

# FIG. 44

Start

Meta data manager 210 receives moving picture clock T from interface handler 207 ——S4501

Meta data manager 210 searches access point table in buffer 209 for maximum t' which satisfies t' $\leq$ T ——S4502

Meta data manager 210 substitutes, in variable h, offset value paired with t' in access point table in buffer 209 ——S4503

Set AU at position of offset value h in object meta data stream as x ——S4504

Store time stamp value of x in variable t ——S4505

②

Set AU next to x in object meta data stream as new x ——S4506

Store offset value of x in variable h' ——S4507

Substitute time stamp value of x in variable u ——S4508

S4509
u > T ? —— NO → ①

YES

Meta data manager 210 instructs buffer 209 to output data from offsets h to h' of object meta data stream ——S4510

Buffer 209 outputs corresponding data to media decoder 216 ——S4511

F I G. 4 5

End

①

S4601

NO ← u > t ?

YES

S4602

t = u

S4603

h = h'

S4604

Is AU
next to x present
? → YES → ②

NO

S4605

Meta data manager 210 instructs
buffer 209 to output data from offset
h to end of object meta data stream

S4606

Buffer 209 outputs corresponding data
to media decoder 216

End

F I G. 4 6

FIG. 47

FIG. 48

FIG. 49

```
                    ┌──────────────┐
                    │    Start     │
                    └──────┬───────┘
                           │                    S5001
              ┌────────────▼─────────────────┐
              │ Meta data manager 210 receives│
              │ moving picture clock T from interface│
              │ handler 207                   │
              └────────────┬─────────────────┘
                           │                    S5002
              ┌────────────▼─────────────────┐
              │ Meta data manager 210 searches│
              │ access point table in buffer 209 for│
              │ maximum t' which satisfies t' <= T│
              └────────────┬─────────────────┘
                           │                    S5003
              ┌────────────▼─────────────────┐
              │ Meta data manager 210 substitutes, in│
              │ variable h, offset value paired with t'│
              │ in access point table in buffer 209│
              └────────────┬─────────────────┘
                           │                    S5004
              ┌────────────▼─────────────────┐
              │ Set AU at position of offset value h in│
              │ object meta data stream as x  │
              └────────────┬─────────────────┘
                           │                    S5005
              ┌────────────▼─────────────────┐
              │ Store time stamp value of x in│
              │ variable t                    │
              └────────────┬─────────────────┘
```

Set AU at position of offset value h in object meta data stream as x

Store time stamp value of x in variable t

S5006

x = NULL AU ?

NO → ③

YES

② →

Set AU next to x in object meta data stream as new x — S5007

# FIG.50

(3)

Store offset value of x in variable h' — S5101

Substitute time stamp value of x in variable u — S5102

u > T ? — S5103

NO → (1)

YES

Meta data manager 210 instructs buffer 209 to output data from offsets h to h' of object meta data stream — S5104

Buffer 209 outputs corresponding data to media decoder 216 — S5105

End

# FIG. 51

(1)

u > t ? — S5201

NO

YES

t = u — S5202

h = h' — S5203

Is AU next to x present ? — S5204

YES → (2)

NO

Meta data manager 210 instructs buffer 209 to output data from offset h to end of object meta data stream — S5205

Buffer 209 outputs corresponding data to media decoder 216 — S5206

End

# FIG. 52

F I G. 5 3

FIG.54

Root

VIDEO_TS

(DVD video data)

DVD_ENAV

VCKINDEX.IFO (Information indicating relationship between Vclick data and DVD video) — Vclick info

VCKSTR01.IFO
⋮
VCKSTR99.IFO
} (Access table of Vclick stream) — Vclick access table

VCKSTR01.VCK
⋮
VCKSTR99.VCK
} (Vclick stream) — Vclick stream

VCKINDEX.BUF (Backup of above VCKINDEX.IFO file) — Vclick info backup

VCKSTR01.BUF
⋮
VCKSTR99.BUF
} (Backup of above VCKSTR01.IFO to VCKSTR99.IFO files) — Vclick access table backup

⬭ : Directory
▭ : File

(Vclick info configuration)

```xml
<?xml version="1.0" ?>
<!DOCTYPE vclickinfo PUBLIC "-//DVD/DTD DVD-VCK 1.0//EN" "dtd/dvd-vck-1-0-
    coutent.dtd" >
<vclickinfo>
<vmg>
  <vmgm num="1" >
   <pgc num="1" >
    <object data= "file://dvdrom:/dvd_enav/vclick1.vck"/>
    //Append Vclick stream #1 to PGC of VMG menu
    <object data= "file://dvdrom:/dvd_enav/vclick1.ifo"/>
    //Append access table of Vclick stream #1 to PGC of VMG menu
   </pgc>
  </vmgm>
  ...
  <vmgm num="n" >
   <object data= "http://www.vclick.com/dvd_enav/vclick2.vck"/>
    //Append Vclick stream #2 to VMG menu
   <object data= "http://www.vclick.com/dvd_enav/vclick2.ifo"/>
    //Append access table of Vclick stream #2 to VMG menu
  </vmgm>
</vmg>
```

FIG. 55

EP 1 592 021 A1

(Vclick info configuration)

```
<vts num="1">
  <vts_tt num="1">
    <pgc num="1">
      <object data="file://dvdrom:/dvd_enav/vclick3.vck" />
      //Append Vclick stream #3 to PGC of VTS title
      <object data="file://dvdrom:/dvd_enav/vclick3.ifo" />
      //Append access table of Vclick stream #3 to PGC of VTS title
    </pgc>
  </vts_tt>
  ...
```

FIG. 56

EP 1 592 021 A1

(Vclick info configuration)

```
<vts_tt num="n">
 <object data="file://dvdrom:/dvd_enav/vclick4.vck" />
 //Append Vclick stream #4 to VTS title
 <object data="file://dvdrom:/dvd_enav/vclick4.ifo" />
 //Append access table of Vclick stream #4 to VTS title
</vts_tt>
<vtsm num="1">
 <object data="file://dvdrom:/dvd_enav/vclick5.vck" />
 //Append Vclick stream #5 to VTS menu
 <object data="file://dvdrom:/dvd_enav/vclick5.ifo" />
 //Append access table of Vclick stream #5 to VTS menu
 <pgc num="1">
  <object data="file://dvdrom:/dvd_enav/vclick6.vck" />
  //Append Vclick stream #6 to PGC of VTS menu
  <object data="file://dvdrom:/dvd_enav/vclick6.ifo" />
  //Append access table of Vclick stream #6 to PGC of VTS menu
 </pgc>
<vtsm>
</vts>

...
</vclickinfo>
```

FIG.57

EP 1 592 021 A1

FIG. 58

(Vclick info description example 1)

```
<pgc num= "1">//Switch Vclick streams
  <object data= "file://dvdrom:/dvd_enav/vclick1.vck" priority= "1" />
  <object data= "file://dvdrom:/dvd_enav/vclick2.vck" priority= "2" />
  <object data= "http://www.vclick.com/vclick3.vck" priority= "3" />
</pgc>
```

# FIG. 5 9

(Vclick info description example 2)

```
<pgc num= "2">//Definition of Vclick stream for each audio stream
  <object data= "file://dvdrom:/dvd_enav/vclick1.vck" audio= "1" />
  <object data= "file://dvdrom:/dvd_enav/vclick2.vck" audio= "2" />
</pgc>
```

# FIG. 6 0

(Vclick info description example 3)

```
<pgc num= "3">//Definition of Vclick stream for each subpicture stream
  <object data= "file://dvdrom:/dvd_enav/vclick1.vck" subpic= "1" />
  <object data= "file://dvdrom:/dvd_enav/vclick2.vck" subpic= "2" />
  <object data= "file://dvdrom:/dvd_enav/vclick3.vck" subpic= "3" />
</pgc>
```

# FIG. 6 1

(Vclick info description example 4)

```
<pgc num= "4" >//Definition of Vclick stream for each angle
  <object data= "file://dvdrom:/dvd_enav/vclick1.vck" angle= "1" />
  <object data= "file://dvdrom:/dvd_enav/vclick2.vck" angle= "3" />
</pgc>
```

# FIG. 62

(Vclick info description example 5)

```
<pgc num= "5" >//Definition of Vclick stream for each display mode
  <object data= "file://dvdrom:/dvd_enav/vclick1.vck" aspect= "16:9"
    display= "wide" />
  <object data= "file://dvdrom:/dvd_enav/vclick2.vck" aspect= "4:3"
    display= "lb" />
  <object data= "file://dvdrom:/dvd_enav/vclick3.vck" aspect= "4:3"
    display= "ps" />
</pgc>
```

# FIG. 63

(Vclick info description example 6)

```
<pgc num= "6" >//Definition of Vclick stream for each display mode
  <object data= "file://dvdrom:/dvd_enav/vclick1.vck" aspect= "4:3"
    display= "normal" />
</pgc>
```

# FIG. 64

(Vclick info description example 7)

```
<pgc num= "7" >//Definition of Vclick stream based on audio/subpicture stream
and angle
  <object data= "file://dvdrom:/dvd_enav/vclick1.vck" audio= "1" subpic= "1" angle= "1" />
  <object data= "file://dvdrom:/dvd_enav/vclick2.vck" audio= "1" subpic= "2" angle= "1" />
  <object data= "file://dvdrom:/dvd_enav/vclick3.vck" angle= "2" />
  <object data= "file://dvdrom:/dvd_enav/vclick 4.vck" audio= "2" subpic= "2" />
</pgc>
```

# FIG. 6 5

EP 1 592 021 A1

| PGC#1 | Vclick#1 | Vclick#2 | Vclick#3 |
|-------|----------|----------|----------|

| PGC#2 | Audio#1 | Vclick#1 |
|-------|---------|----------|
|       | Audio#2 | Vclick#2 |

| PGC#3 | Subpicture #1 | Vclick#1 |
|-------|---------------|----------|
|       | Subpicture #2 | Vclick#2 |
|       | Subpicture #3 | Vclick#3 |

| PGC#4 | Angle#1 | Vclick#1 |
|-------|---------|----------|
|       | Angle#2 |          |
|       | Angle#3 | Vclick#2 |

| PGC#5 | 16:9/Wide | Vclick#1 |
|-------|-----------|----------|
|       | 4:3/PanScan | Vclick#2 |
|       | 4:3/LetterBox | Vclick#3 |

| PGC#5 | 4:3/Normal | Vclick#4 |
|-------|------------|----------|

| PGC#6 | Angle#1 | Audio#1 | Subpic#1 | Vclick#1 |
|-------|---------|---------|----------|----------|
|       |         |         | Subpic#2 | Vclick#2 |
|       |         | Audio#2 | Subpic#1 |          |
|       |         |         | Subpic#2 | Vclick#4 |
|       | Angle#2 | Audio#1 | Subpic#1 | Vclick#3 |
|       |         |         | Subpic#2 |          |
|       |         | Audio#2 | Subpic#1 |          |
|       |         |         | Subpic#2 | Vclick#4 |

# F I G. 6 6

78

English comment of Vclick object

Vclick object

English comment of Vclick object

Markup page

Mr.A

Mr.B

Vclick object

Welcome to Mr.B's Site!

Select object of Mr.B

DVD video contents

This is mine.

This is not yours.

DVD video contents

English audio provided by DVD video contents

F I G. 6 7

EP 1 592 021 A1

FIG.68

FIG.69

F I G. 7 0

Comment of Vclick object

Aさん

Bさん

Vclick object

Vclick object

Normal angle playback
of DVD video contents

FIG.71

Comment of Vclick object

Aさん

Bさん

Vclick object

Vclick object

Another angle playback
of DVD video contents

FIG.72

DVD video contents
(aspect ratio : 16 : 9, display mode : wide)

Comment of Vclick object

Aさん

Bさん

Vclick object

Vclick object

FIG. 73

DVD video contents
(aspect ratio:4 : 3, display mode : letter box)

Comment of Vclick object
(display position changed)

Aさん

Bさん

Vclick object

Vclick
object

FIG. 74

DVD video contents
(aspect ratio : 4 : 3, display mode : pan scan)

Comment of Vclick object
[display position changed, reduced
balloon size, and reduced font size]

Aさん

Bさん

Vclick object

Vclick object

FIG.75

A01

A02

A03

Players profile

FW △ △ Age : ○○

Born : X X

1997 U21 Cap

1999 □□ Cap

2000 Player of the year

2002 Scoring leader

Family : · · · · · · ·

Home page : · · · ·

Fan club : · · · ·

102

101

A04

F I G. 7 6

Vclick AU

401 B01 B02 403 400

| Header | Time stamp | Duration | Object attribute information | Object region data |
|---|---|---|---|---|

F I G. 7 7

Vclick AU

| 401 | C01 | C02 | 403 | 400 |
|---|---|---|---|---|
| Header | Time stamp 1 | Time stamp 2 | Object attribute information | Object region data |

FIG.78

Duration of Vclick AU

| Field | Number of bits | Number of bytes | Value | Comment |
|---|---|---|---|---|
| time_type | 16 | 2 | | |
| duration | 16 | 2 | | |

FIG.79

(Vclick info description example 8)

```
<pgc num= "8" >//Display of graphic object
  <object data= "file://dvdrom: / dvd_enav / vclick1.vck" start= "00:00:00:00"
    end="00:05:00:00;" / >
</ pgc>
```

# FIG. 80

(Vclick info description example 9)

```
<pgc num= "9" >//Display of graphic object (PTM description)
  <object data= "file://dvdrom: / dvd_enav / vclick1.vck" start_ptm="0"
    end_ptm="27000000"/>
</ pgc>
```

# FIG. 81

FIG. 82

Camera angle 1
(Japanese)

Time

Camera angle 2
(Japanese)

Time

Camera angle 1
(English)

830

831

832

836
Vclick stream for camera angle 1 (Japanese)

833

834

837
Vclick stream for camera angle 2 (Japanese)

838
Vclick stream for camera angle 1 (English)

FIG. 83

Startup (playback instruction)

↓

Load Vclick Info file — S8401

↓

Extract Vclick stream from Vclick Info file — S8402

↓

S8403
Load Vclick streams on disc or server onto buffer

=Load priority example=
· Load streams from those with smaller PGC numbers;
· Load streams with language set in player in preference to those with other languages;
· Load streams recorded on disk in preference to those at other locations; etc.

↓

S8404
Buffer full ?
No → (back to S8403)
Yes ↓

Play back DVD-Video contents — S8405

↓

Acquire DVD-Video playback information — S8406

↓

Search Vclick Info file for Vclick stream corresponding to acquired information — S8407

↓

S8408
Is found Vclick stream stored on buffer ?
No → Erase unnecessary data from buffer — S8409
↓ S8410
Load found Vclick stream
Yes ↓

Play back Vclick stream

FIG. 84

|     | 850 | 851 |
| --- | --- | --- |
|     | Time stamp | Access point |
|     | time#1 | offset#1 |
|     | time#2 | offset#2 |
|     | time#3 | offset#3 |
| ⇒ | time* | NULL |
|     | time#4 | offset#4 |
|     | ┊ | ┊ |
|     | time#n | offset#n |

FIG. 85

Start

Meta data manager 210 receives moving picture clock T from interface handler 207 — S8601

Interface handler 207 searches access point table in buffer 209 for maximum t that meets t <=T — S8602

Interface handler 207 finds out offset h which forms pair with t from access point table in buffer 209 — S8603

S8604
h=NULL ?
Yes
No

fp=h — S8605

Interface handler 207 reads time stamp value t' of AU — S8606

fp=fp+"AU size" — S8607

S8608
Does fp point to end of file ?
Yes
No

Interface handler 207 reads time stamp value u of AU — S8609

S8610
u > t' ?
No
Yes

Interface handler 207 instructs buffer 209 to transfer data from offset h to fp of object meta data stream to meta data decoder 217 — S8611

End

FIG. 86

320

Initialization document

```
(EX)

<?xml version="1.0" ?>

<!DOCTYPE manifest PUBLIC "-//DVD//DTD DVD-MLS 1.0//EN"

"dtd / dvdmls-1-0-content.dtd" >

<manifest >

    <!· description of the buffer structure ··>        321

    <memory name="Assign" size="2M" / >

    <memory name="Playback" size="12K"/>              323

</ manifest>
```

322

Assign corresponding buffer

F I G. 87

Start

Read out assign size and playback start size from Initialization file — S8801

S8802

Downloading from network ?

No

Yes S8803

Detect line state of network

Set size described in Initialization file as assign size — S8805

Adjust assign size based on line state — S8804

Assign buffer by assign size — S8806

End

F I G. 8 8

Buffer use size

321

323

Decreased by size for data
used by application

Playback start timing

324　325　326

Elapsed time t

Playback start waiting state

Buffer full state

Playback initial state

FIG. 89

329　Current reception complete position ──331

328　──327

330

332

Current playback position

FIG. 90

F I G. 9 1

Current playback position —332

341a —| 341

—340

331

Current reception complete position

FIG. 92

331

332— Current playback position | Current reception complete position

—340

FIG. 93

Current playback position —332

Past data —343

331

Current reception complete position

Future (current) data —342

F I G. 9 4

332— Current playback position

342— 343

Current reception complete position —331

F I G. 9 5

Current playback position —332

342

331

Current reception complete position

343

FIG.96

Enter buffer flash

Receive "flash instruction" from interface handler —S9701

Flash buffer —S9702

Return

FIG.97

FIG. 98



Client                                                                Server

Open HTTP session {
(3 way handshake)

Connect

HTTP:GET(1)

Vclick Meta data(1)

HTTP:GET(2)

Vclick Meta data(2)

HTTP:GET(3)

Vclick Meta data(3)

Close

# FIG. 99

Client                                                                Server

Open HTTP session {
(3 way handshake)

Connect

HTTP:GET(1)

HTTP:GET(2)

HTTP:GET(3)

Get methods may be
continuously issued all
together.
Use Keep Alive property
of HTTP

Vclick Meta data(1)

Vclick Meta data(2)

Vclick Meta data(3)

Close

# FIG. 100

Buffer state upon fast forward playback

Perform skip reading of Meta data on application side to catch up with playback speed upon fast forward (fast reverse) playback

F I G. 1 0 1

F I G. 1 0 2

231

322

Load all Meta data initially

# FIG.103

207

Interface handler

210

Meta data manager

209

Buffer

213

Disc device manager

357

231

358

359

360

t

# FIG.104

231

322

Load corresponding Meta data after DVD-Video is temporarily stopped

# FIG.105

207    210    209    213

| Interface handler | Meta data manager | Buffer | Disc device manager |

361

355

358

231

359

360

t

# FIG.106

**European Patent Office**

## EUROPEAN SEARCH REPORT

Application Number

EP 05 10 2816

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 2004/023479 A1 (LG ELECTRONICS INC) 18 March 2004 (2004-03-18) | 1,2,4-8, 10-14, 16-18 | G11B27/10 G11B27/30 H04N7/24 |
| A | * abstract; figures 13,14,23 * & EP 1 553 769 A (MATSUSHITA ELECTRIC INDUSTRIAL CO., LTD) 13 July 2005 (2005-07-13) * paragraphs [0053], [0056], [0091], [0092]; figures 13,14,23 * | 3,9,15 | |
| X | EP 1 408 505 A (DEUTSCHE THOMSON-BRANDT GMBH) 14 April 2004 (2004-04-14) | 1,7,13 | |
| A | * paragraph [0017]; figure 1 * | 2-6, 8-12, 14-18 | |
| X | JIM TAYLOR ED - TAYLOR J: "DVD Demystified" DVD DEMYSTIFIED, NEW YORK : MCGRAW-HILL, US, 2001, page 275,309, XP002340589 ISBN: 0-07-135026-8 | 1,7,13 | |
| A | * the whole document * | 2-6, 8-12, 14-18 | TECHNICAL FIELDS SEARCHED (Int.Cl.7) G11B H04N |
| X,P | BLU-RAY DISC FOUNDERS: "White paper Blu-Ray Disc Format : 2.B Audio Visual Application format specifications for BD-ROM" INTERNET DOCUMENT, August 2004 (2004-08), XP002315435 | 1,7,13 | |
| A | * pages 12-15,20 * | 2-6, 8-12, 14-18 | |
| | * pages 33,34 * | | |

-/--

The present search report has been drawn up for all claims

| Place of search | Date of completion of the search | Examiner |
|---|---|---|
| The Hague | 15 August 2005 | Maetz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 592 021 A1**

European Patent Office

**EUROPEAN SEARCH REPORT**

Application Number

EP 05 10 2816

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "Super Video CD"<br>November 1998 (1998-11), SVCD SYSTEM SPECIFICATION, PAGE(S) 1-86 , XP002260259<br>* pages 28,33 *<br>----- | 1-18 | |
| | | | **TECHNICAL FIELDS SEARCHED** (Int.Cl.7) |

The present search report has been drawn up for all claims

| Place of search | Date of completion of the search | Examiner |
|---|---|---|
| The Hague | 15 August 2005 | Maetz, A |

## ANNEX TO THE EUROPEAN SEARCH REPORT
## ON EUROPEAN PATENT APPLICATION NO.

EP 05 10 2816

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2005

| Patent document cited in search report | | Publication date | Patent family member(s) | | Publication date |
|---|---|---|---|---|---|
| WO 2004023479 | A1 | 18-03-2004 | AU | 2003260974 A1 | 29-03-2004 |
| | | | CA | 2462192 A1 | 18-03-2004 |
| | | | CN | 1578983 A | 09-02-2005 |
| | | | EP | 1547076 A1 | 29-06-2005 |
| | | | US | 2004109676 A1 | 10-06-2004 |
| EP 1553769 | A | 13-07-2005 | AU | 2003268656 A1 | 19-04-2004 |
| | | | EP | 1553769 A1 | 13-07-2005 |
| | | | WO | 2004030356 A1 | 08-04-2004 |
| EP 1408505 | A | 14-04-2004 | EP | 1408505 A1 | 14-04-2004 |
| | | | AU | 2003277919 A1 | 04-05-2004 |
| | | | WO | 2004034398 A1 | 22-04-2004 |
| | | | EP | 1550129 A1 | 06-07-2005 |

EPO FORM P0459

For more details about this annex : see Official Journal of the European Patent Office, No. 12/82